(19) **Europäisches Patentamt**
**European Patent Office**
**Office européen des brevets**

(11) **EP 2 782 953 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **12805606.6**

(22) Anmeldetag: **19.11.2012**

(51) Int Cl.:
*C08G 77/20* (2006.01)     *C08L 83/04* (2006.01)
*C09D 183/04* (2006.01)     *C09J 183/04* (2006.01)

(86) Internationale Anmeldenummer:
**PCT/EP2012/072975**

(87) Internationale Veröffentlichungsnummer:
**WO 2013/076036 (30.05.2013 Gazette 2013/22)**

(54) **ZUSAMMENSETZUNG OLEFINISCH FUNKTIONALISIERTER SILOXANOLIGOMERE BASIEREND AUF ALKOXYSILANEN**

COMPOSITION OF OLEFINICALLY FUNCTIONALSIED SILOXANE OLIGOMERS BASED ON ALKOXY SILANES

COMPOSITION D'OLIGOMÈRES SILOXANE À FONCTIONNALITÉ OLÉFINIQUE, À BASE D'ALCOXYSILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2011 DE 102011086862**

(43) Veröffentlichungstag der Anmeldung:
**01.10.2014 Patentblatt 2014/40**

(73) Patentinhaber: **Evonik Degussa GmbH
45128 Essen (DE)**

(72) Erfinder:
• **STANDKE, Burkhard
79540 Lörrach (DE)**
• **MIHAILESCU, Ioana-Elena
79618 Rheinfelden (Baden) (DE)**
• **MONKIEWICZ, Jaroslaw
79618 Rheinfelden (DE)**
• **ROTH, Sven
79739 Schwörstadt (DE)**
• **IOANNIDIS, Aristidis
76618 Rheinfelden (DE)**
• **WEISSENBACH, Kerstin
77723 Gengenbach (DE)**

(56) Entgegenhaltungen:
**EP-A1- 0 518 057     EP-A2- 1 205 481
EP-A2- 1 331 238**

EP 2 782 953 B1

**Beschreibung**

Die Erfindung betrifft eine Zusammensetzung enthaltend olefinisch funktionalisierte Siloxanoligomere, die aus olefinisch-funktionalisierten Alkoxysilanen und gegebenenfalls mit gesättigten Kohlenwasserstoffen-funktionalisierten Alkoxysilanen sowie gegebenenfalls einem Tetraalkoxysilan abgeleitet sind, höchstens einen olefinischen Rest am Silizium-Atom aufweisen sowie mit einen verminderten Gesamtchloridgehalt und einem Gewichtsmittel des Molekulargewichts (Mw) von größer 315 g/mol.

Es ist lange bekannt, Gemische kettenförmiger und cyclischer Siloxan-Oligomerer bei der Herstellung von Thermoplasten sowie Elastomeren einzusetzen. Zwischenzeitlich ist man jedoch zunehmend bestrebt möglichst VOC-arm zu arbeiten, beispielsweise bei der Vernetzung von Thermoplasten sowie Elastomeren, insbesondere bei der Kabelherstellung (VOC - "Volatile Organic Compounds" bzw. "flüchtige organische Verbindungen").

Es ist auch bekannt, Vinyltriethoxysilan, gegebenenfalls in Gemischen mit Alkyltriethoxysilanen und/oder Tetraethoxysilan, durch saure HCl katalysierte Hydrolyse und Kondensation in einem Alkohol in Gegenwart einer berechneten Menge Wasser umzusetzen. Anschließend wird der Alkohol abgetrennt.
Die eingesetzte Säure verbleibt im Produkt oder muss im Falle des Hydrogenchlorids (HCl) aufwendig nach der Umsetzung der organofunktionellen Alkoxysilane wieder aus den hergestellten Rohprodukten entfernt werden, um nicht zu einer Korrosion der metallischen Oberflächen der Verarbeitungsmaschinen beizutragen. Dies geschieht durch Destillation der Siloxanrohprodukte.

In der Anwendung, wie bspw. bei der Herstellung von gefüllten Kabelcompounds, kommen die Oligomere regelmäßig zusammen mit Polymeren und funktionellen Füllstoffen in Compoundiermaschinen zum Einsatz. Dies geschieht im Falle von diskontinuierlichen Verfahren in Innenmischern oder auf Misch-Walzen und im Falle von kontinuierlichen Compoundierprozessen in Doppelschneckenextrudern oder Co-Knetern. Die typischen Verabeitungstemperaturen liegen hierbei im Bereich von 130 - 270°C, d.h., dass an den Zugabestellen der Silanverbindung, je nach Verfahren ist das der Einlass der Compoundiermaschine oder die Polymerschmelze, verfahrensbedingt, Temperaturen oberhalb der Siedetemperatur der Monomere Silane und destillierbaren Oligomere herrschen. Die Erfahrung lehrt, dass neben dem unerwünschten Wirkstoffverlust zusätzlich verstärkt Ablagerungen von freien Silanverbindungen an den Gehäuseinnenwänden oder den Entgasungszonen auftreten. Diese basieren auf Abbauprodukte der verdampften Silane oder destillierbarer Oligomere. Es können kritische Situationen durch diese ggf. alkoholhaltigen Dämpfe entstehen, die bei der Rückwärtsentgasung in den Einzugsbereich gelangen können und mit heissen Oberflächen in Kontakt kommen können. Diese Herausforderung gilt auch in teilgefüllten Zonen der Compoundieraggregate oder deren Entgasungzonen. Insgesamt ist aus diesen Gründen ein möglichst hoher Flammpunkt der eingesetzten Verbindungen notwendig. Auch der freiwerdende Hydrolysealkohol, der im Falle von gefüllten Polymercompounds bei der Hydrolysereaktion der Estergruppen der Silizium-funktionellen Gruppe des Silans oder Silan-Oligomers im Compound entsteht, ist zu beachten. Insgesamt ist die Reduktion des VOC (volatile organic compounds) daher ein sehr wichtiges Kriterium bei dieser Technologie.
Wie schon erwähnt, liegen die üblichen Betriebstemperaturen beim Compoundierprozess meist über 101 °C, und häufig erfolgt beispielsweise eine Knetung bei 170 bis 180 °C. Daher besteht weiterhin ein Bedarf an VOC verminderten und korrosionsarmen Oligomeren, die möglichst keine sauren Verbindungen, wie Ameisensäure, HCl oder Cl-haltigen Verbindungen mehr enthalten. Selbst geringste Mengen dieser Verbindungen führen bei den genannten Prozesstemperaturen zur Korrosion und damit zu Verschleiß der Maschinenteile nach kurzen Standzeiten. So wird für nichtrostende Stähle, Nickel basierte Legierungen und Kupferbasis Legierungen angegeben, dass sie aufgrund der auftretenden Korrosion unbeständig gegenüber Ameisensäure oder HCl sind (siehe z.B. Handbuch der Metallbeläge, Fa. Witzemann, Stand Januar 2010, Kapitel 7.2 Korrosionsbeständigkeit, S. 200 - 238). ThyssenKrupp beschreibt in einer Broschüre (Chemische Beständigkeit der Nirosta®-Stähle, ThyssenKrupp Nirosta GmbH, Ausgabe 3, Stand 01/2008) verschiedene Korrosionstypen und nennt typische Auslöser für eine abtragende Flächenkorrosion in Form von Loch-, Spalt- oder Spannungsrisskorrosion, wie die Anwesenheit von Säuren und Chloridionen. Die korrodierende Wirkung von Säuren und Chloridionen steigt mit erhöhter Temperatur deutlich an. An unlegierten Stählen kann die Massenabtragung bei hoher Luftfeuchtigkeit (80 bis 100 % relative Luftfeuchtigkeit) in Gegenwart von Ameisensäure 10 g/m$^2$ und in Gegenwart von Chloriden bis zu 105 g/m$^2$ nach 14 Tagen betragen. Daher soll der Gehalt an Hydrolyse- und Kondensationskatalysatoren in den erfindungsgemäß hergestellten Oligomeren möglichst bis auf einen Gehalt im Gew.-ppm bis Gew.-ppt Bereich oder bis zur Nachweisgrenze vermindert werden.

Neben der Korrosion während der Verarbeitung, spielt aber das Vorhandensein von Chlorid/-ionen oder Säuren in der Endanwendung, z.B. in Kabelisolierungen, eine große Rolle. Neben der möglichen Korrosion am isolierten Stromleiter und der möglichen negativen Beeinflussung der elektrischen Eigenschaften der Kabelisolierung selbst, müssen im Falle von halogenfreien, flammgeschützten Compounds korrosive und halogenhaltige Verbrennungsgase zwingend vermieden werden. Dieser Anspruch gilt natürlich für alle in diesen Compounds eingesetzten Rohstoffe.

Durch die schon angesprochene Vermeidung bzw. Minimierung der Chlorid- und Säure-Anteile in den erfindungsgemäßen Siloxanoligomeren könnte diesen Herausforderungen vollständig begegnet werden.

Zudem finden Silansysteme zunehmendes Interesse, die immer weniger organische Lösungsmittel enthalten und deshalb umweltfreundlicher sind. Aus diesem Grund geht der Trend dahin, vorkondensierte VOC ärmere Silansysteme bereitzustellen, die dann allerdings stabilisiert werden müssen, weil sie noch den Katalysator enthalten oder aus denen der Katalysator aufwendig abgetrennt werden muss.

EP 0 518 057 B1 bzw. US 5,282,998 offenbaren ein Verfahren zur Herstellung von Gemischen kettenförmiger und cyclischer Siloxan-Oligomerer. Gemäß den Beispielen 1 und 6 werden die jeweiligen Produktgemische durch Hydrolyse und Kondensation von Vinyltrialkoxysilanen oder einem Gemisch von Vinyl- und Alkyltrialkoxysilanen hergestellt, wobei pro Mol Si des eingesetzten Silans 0,63 Mol Wasser für die Hydrolyse und Kondensation eingesetzt werden. Zudem kann der HCl Katalysator mittels der dort offenbarten Methode nicht vollständig abgetrennt werden und ein korrodierend wirkender Restgehalt von etwa 50 bis etwa 230 ppm HCl verbleibt selbst in Produkten, die gemäß dem offenbarten Verfahren destilliert werden. Ein Produkt gemäß EP 0 518 057 B1 wird bereits bei der Aufarbeitung in energieintensiver und aufwendiger Weise unter Vakuum reindestilliert. Anwendung finden besagte Oligomerengemische als Vernetzungsmittel für thermoplastische Polyolefine durch Pfropfpolymerisation und hydrolytische Auskondensation.

US 6,395,856 B1 offenbart eine Hydrosilylierung von organofuktionellen Silizium enthaltenden Oligomeren, wie die Hydrosilylierung von Vinylmethoxysiliconaten aus der Umsetzung von Vinyltrimethoxysilan in Gegenwart von Ameisensäure unter Schutzgas ohne Gegenwart eines Verdünnungsmittels.

CN 100343311 C beschreibt durch katalytische Hydrolyse und Kondensation von Vinyltrimethoxysilan gewonnene Silanoligomere. Die Verwendung von Metallsalzkatalysatoren, wie beispielsweise Kupferhydroxid, in Kombination mit Säuren ist zwingend. Die Abtrennung der Katalysatoren ist aufwändig und es ist damit zu rechnen, dass Katalysatorreste bzw. Neutralisationsprodukte im Produkt verbleiben und sich nachteilig in vielen Anwendungen auswirken. So wird hier die Abtrennung der Säure durch eine Neutralisation mittels Calciumcarbonat und Filtration des dabei entstanden Calciumsalzes offenbart.

Bei einigen Siloxanoligomeren im Stand der Technik sinkt der Flammpunkt innerhalb von wenigen Tagen im Verlauf einer Lagerung auf unter 50 °C, da möglicherweise zu hohe Konzentrationen an Resten der Katalysatoren in der Zusammensetzung verblieben sind. Anderer Zusammensetzungen aus dem Stand der Technik wiederum zeigen zu hohe Masseverluste von bis zu 25 Gew.-% um 150 °C und einen großen Masseverlust von circa 50 bis 90 Gew.-% um 200 °C.

Siloxane mit hohen Molekulargewichten im Bereich 10.000 g/mol werden in JP10-298289 A beschrieben, wobei diese durch Hydrolyse und Vorkondensation bzw. Kondensation eines Vinyl- oder Phenyl-funktionellen Alkoxysilans in Gegenwart eines Säurekatalysators hergestellt werden und der Katalysator anschließend mit Hilfe eines wasserfreien, anionischen Ionenaustauschers aus dem Produktgemisch entfernt wird. Derart hochmolekulares Material ist in den meisten Anwendungen aufgrund hoher Viskositäten und zu geringer Reaktivität nicht einsetzbar.

Organosiloxanoligomere mit einer Vielzahl an möglichen Funktionalitäten, einem mittleren Molekulargewicht im Bereich $M_n$ = 350 - 2500 g/mol und einer Polydispersität ($D = M_w / M_n$) von 1.0 - 1.3 werden in JP2004-099872 beschrieben. Die Herstellung erfolgt in Gegenwart eines basischen Katalysators aus einer sehr verdünnten wässrigen Lösung mit einer sehr geringen, wirtschaftlich nicht erstrebenswerten Raum-Zeit Ausbeute; so wurden aus 1 l Lösung 1 ml Produkt isoliert. Die Lehre der JP2004-099872A ließ sich nicht wie offenbart nacharbeiten. So konnte das Beispiel 1 mehrfach nicht wie angegeben nachgearbeitet werden.

Aufgabe der vorliegenden Erfindung war die Bereitstellung von kostengünstigeren und stabileren olefinisch funktionalisierten Siloxanoligomeren, die chlorarm, vorzugsweise chlorfrei sein sollen und zugleich eine ausreichende Reaktivität aufweisen sollen, um als Trocknungsmittel in Dichtmassen verwendet zu werden, gleichzeitig eine hohe Temperaturbeständigkeit aufweisen. Zudem sollten die Siloxanoligomere sehr hohe Flammpunkte aufweisen, auch bei hohen Temperaturen als VOC-arm gelten und ohne weitere Sicherheitsmaßnahmen in der Anwendungstechnik bei erhöhten Temperaturen verwendbar sein. Ferner soll ihre Viskosität weiterhin für die Anwendungen geeignet sein. Eine weitere Aufgabe bestand darin ein wirtschaftliches Verfahren zur Herstellung dieser olefinisch funktionalisierten Siloxanoligomere bereitzustellen, in dem die Siloxane mit weniger Energieaufwand hergestellt werden können und dabei das gewünschte Eigenschaftsprofil aufweisen. Ebenfalls Aufgabe der Erfindung war die Bereitstellung von chlorarmen und besonders kostengünstig herzustellenden Gemischen rein olefinischer Siloxanoligomere, mit den vorgenannten Eigenschaftsprofil, insbesondere basierend auf Alkenylalkoxysilane, bzw. von Gemischen olefinisch- und alkylfunktionalisierter Siloxanoligomere, insbesondere basierend auf Alkenyl-/Alkyl-Alkoxysilanen, sowie ein Verfahren zur Herstellung solcher Gemische. Auch sollen die Siloxanoligomere selbst bei hohen Temperaturen, wie bspw. in Extrudern, nur geringe Masseverluste zeigen. Vorzugsweise sollen auch die weitere Eigenschaften in der Anwendungstechnik im Vergleich zu bekannten Systemen beihalten oder verbessert werden. Eine weitere Aufgabe bestand darin über die erfindungsgemäßen Siloxanoligomere die Verarbeitbarkeit mit Thermoplasten oder Elastomeren zu verbessern als auch die Performance der damit hergestellten Thermoplaste oder Elastomere zu verbessern. Ein wesentlicher Punkt bei der Verarbeitbarkeit ist auch die schnelle Verteilbarkeit der Siloxanoligomere in den Thermoplasten in Kombination mit möglichst geringen Masseverlusten bei den gegebenen Temperaturen in Extruderanwendungen. Von Vorteil ist dabei, wenn der Restgehalt an saurem Katalysator, insbesondere der Chlorgehalt, bevorzugt der Gesamtchloridgehalt und/oder auch der Gehalt an hydrolysierbarem Chlorid weiter verfahrensgemäß deutlich gesenkt werden kann. Als weitere Aufgaben sollten die olefinischen Siloxanoligomere eine gute Lagerstabilität auch über längere Lagerzeiträume aufweisen, ein Anstieg des Flammpunktes sollte minimiert werden und vorzugsweise auch ein Anstieg der Viskosität beispielsweise durch Gelbildung oder Ausflockungen durch Nachkondensation des Gemischs über einen längeren Zeitraum vermieden werden. Weiter sollte der Gehalt an Monomere in den olefinisch-funktionalisierten Siloxanoligomeren gering sein bzw. vorzugsweise sollten keine Monomere mehr vorliegen, die zu unerwünschter Nachvernetzung führen können und zugleich sollte das Verfahren wirtschaftlicher sein als die bekannten. Ferner bestand die Aufgabe zugleich einen definierten Oligomerisierungsgrad für die Siloxane gekoppelt mit einer dynamischen Viskosität von $\leq 3.000$ mPa s, vorzugsweise kleiner gleich 1.000 mPa s, insbesondere kleiner gleich 100 mPa s und größer gleich 2 mPa s einzustellen, um eine gute Verarbeitbarkeit der Siloxane zu gewährleisten. Die in der vorliegenden Anmeldung im Rahmen der Erfindung genannten Werte zur dynamischen Viskosität gehen auf Messungen gemäß DIN 53015 zurück.

Gelöst werden die Aufgaben gemäß den unabhängigen Patentansprüchen, bevorzugte Ausführungsformen sind in den Unteransprüchen und in der Beschreibung detailliert dargelegt.

Überraschend wurde gefunden, dass olefinisch funktionalisierte Alkoxysilane und gegebenenfalls Alkylalkoxysilan in einfacher und wirtschaftlicher Weise durch Umsetzung mit einer definierten molaren Menge Wasser im Verhältnis von Wasser zu Alkoxygruppen der Alkoxysilane von 1 : 2 bis 1 : 6, insbesondere von 1 : 2,75 bis 1 : 5,0, in Gegenwart eines Lösemittels, vorzugsweise Alkohol, und eines sauren Katalysators, jedoch ohne Einsatz von Metallsalzkatalysatoren, zu den gewünschten chlorarmen Zusammensetzungen umgesetzt werden können, wobei der Hydrolysealkohol und das gegebenenfalls vorliegende Lösemittel im Wesentlichen abgetrennt werden, insbesondere wird das Lösemittel und/oder der Hydrolysealkohol destillativ abgetrennt. Erfindungsgemäß werden als Hydrolyse- und/oder Kondensationskatalysator unter Normalbedingungen gasförmige, saure Katalysatoren, insbesondere HCL, eingesetzt, die in wässriger oder alkoholischer Phase gelöst werden können. Somit erfolgt eine Umsetzung unter den Bedingungen der homogenen Katalyse. Ein überraschender Vorteil war, dass es durch das erfindungsgemäße Verfahren gelingt den gasförmigen Katalysator nahezu vollständig aus den Zusammensetzungen abzutrennen.

Überraschend war, dass sich auf diese Weise gut handhabbare Produkte mit einem Molekulargewicht ($M_w$) > 315 g/mol und < 10.000 g/mol, vorzugsweise 320 g/mol bis 9.000 g/mol, besonders vorzugsweise 330 g/mol bis 5.000 g/mol, ganz besonders vorzugsweise 340 g/mol bis 1.000 g/mol, insbesondere 350 bis 850 g/mol, bevorzugt 350 g/mol bis 800 g/mol - ferner seinen genannt 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700 sowie 750 g/mol -, mit guter Raum-Zeit-Ausbeute herstellen ließen. Bevorzugte Gewichtsmittel betragen größer gleich 350 bis 750 g/mol, vorzugsweise 350 g/mol bis 725 g/mol, besonders bevorzugt 410 bis 600 g/mol, ebenso bevorzugt 410 bis 590 g/mol oder auch 410 g/mol bis 570 g/mol.

Überraschend war weiterhin, dass die auf diese Weise erhaltenen Siloxanoligomere bereits als Sumpfprodukt einen sehr geringen Gesamtchloridgehalt zeigen. Die so erhaltenen Zusammensetzungen weisen erfindungsgemäß einen besonders niedrigen Chlorid- bzw. Gesamtchloridgehalt und das gewünschte Eigenschaftsprofil auf, da sie vorteilhaft über einen geringen Gehalt am M-Strukturen von unter 80 %, insbesondere unter 75 %, bevorzugt kleiner gleich 70 %, verfügen und ein gewisses Mindest-Gewichtsmittel des Molekulargewichtes (Mw) von größer 315 g/mol aufweisen. Überraschend war auch, dass die Viskosität trotz des Molekulargewichtes für die angestrebten Verwendungen geeignet ist. So sind die vorliegenden Siloxanoligomerzusammensetzungen auch vorteilhaft arm an VOC.

Die erfindungsgemäßen Zusammensetzungen und die nach dem erfindungsgemäßen Verfahren hergestellten Zusammensetzungen der Siloxanoligomere bedürfen anders als die bekannten Oligomere keiner weiteren Aufarbeitung, wie beispielsweise einer abschließenden Destillation der Zusammensetzungen der Siloxanoligomere. Die hergestellte Zusammensetzung, das Siloxanoligomer Sumpfprodukt, zeigt die gleiche oder eine bessere Performance als bekannte, jedoch mittels Destillation gereinigter Siloxanoligomere, die nach einem etwas anderen Verfahren erhalten werden. Daher braucht erfindungsgemäß das erhaltene Siloxanoligomer nicht mehr selbst destilliert zu werden, sondern kann rein als Sumpfprodukt erhalten und verwendet werden. Daher kann die Zusammensetzung auch mit größerer Ausbeute bei vermindertem Energiebedarf erhalten werden.

Gegenstand der Erfindung ist somit eine Zusammensetzung enthaltend olefinisch funktionalisierte Siloxanoligomere, die höchstens einen olefinischen Rest am Silizium-Atom aufweisen, und die olefinisch funktionalisierten Siloxanoligomere Si-O-vernetzte Strukturelemente aufweisen, die kettenförmige, cyclische, vernetzte und/oder gegebenenfalls raumvernetzte Strukturen bilden, wobei mindestens eine Struktur in idealisierter Form der allgemeinen Formel I entspricht,

$$(R^1O)[(R^1O)_{1-x}(R^2)_xSi(A)O]_a[Si(Y)_2O]_c[Si(B)(R^4)_y(OR^3)_{1-y}O]_bR^3 \qquad (I)$$

- wobei die Strukturelemente aus Alkoxysilanen abgeleitet sind und
- A in dem Strukturelement einem olefinischen Rest entspricht, der insbesondere ausgewählt ist aus einer linearen, verzweigten oder cyclischen Alkenyl- oder Cycloalkenyl-alkylen-funktionellen Gruppe mit jeweils 2 bis 16 C-Atomen und

- B in dem Strukturelement einem gesättigten Kohlenwasserstoff-Rest entspricht, der insbesondere ausgewählt ist aus einem linearen, verzweigten oder cyclischen Alkyl-Rest mit 1 bis 16 C-Atomen,
- Y entspricht $OR^3$ oder in vernetzten und optional raumvernetzten Strukturen unabhängig voneinander $OR^3$ oder $O_{1/2}$, vorzugsweise ist Y gleich $OR^3$,
- wobei $R^1$ unabhängig voneinander einem linearen, verzweigten und/oder cyclischen Alkyl-Rest mit 1 bis 4 C-Atomen, oder optional H entspricht,
- $R^3$ jeweils unabhängig voneinander einem linearen, verzweigten oder cyclischen Alkyl-Rest mit 1 bis 4 C-Atomen oder optional H entspricht, und $R^2$ jeweils unabhängig einem linearen, verzweigten oder cyclischen Alkyl-Rest mit 1 bis 15 C-Atomen entspricht, und $R^4$ jeweils unabhängig einem linearen, verzweigten oder cyclischen Alkyl-Rest mit 1 bis 15 C-Atomen entsprechen,
- a, b, c, x und y unabhängig ganzen Zahlen entsprechen, mit $1 \leq a$, $0 \leq b$, $0 \leq c$, x unabhängig voneinander 0 oder 1 ist, y unabhängig voneinander 0 oder 1 ist, und $(a+b+c) \geq 2$, besonders bevorzugt mit x gleich 0 bei $1 \leq a$ oder x gleich 0 bei $1 \leq a$ und y gleich 0 bei $1 \leq b$,
- wobei die Strukturelemente $[(R^1O)_{1-x}(R^2)_xSi(A)O]_a$, $[Si(B)(R^4)_y(OR^3)_{1-y}O]_b$ und/oder $[Si(Y)_2O]_c$ in der allgemeinen Formel I zusammen in Bezug auf alle Silizium-Atome der allgemeinen Formel I zu bzw. bei kleiner gleich 80 % bis größer gleich 30 %, insbesondere größer gleich 35 %, als M-Strukturen vorliegen,
- das Gewichtsmittel des Molekulargewichts (Mw) größer 315 g/mol ist und
- insbesondere der Gehalt an Rückstand bzw. Rückständen des bei der Herstellung eingesetzten Säurekatalysators, insbesondere Chlor bzw. Chlorid, vorzugsweise Gesamtchlorid, kleiner gleich 250 mg/kg beträgt, insbesondere kleiner gleich 150 mg/kg, bevorzugt kleiner gleich 100 mg/kg, besonders bevorzugt kleiner gleich 75 mg/kg, weiter bevorzugt kleiner gleich 50 mg/kg bis hin zur aktuellen analytischen Nachweisgrenze, ganz besonders vorzugsweise kleiner gleich 35 mg/kg, inbesondere in der Zusammensetzung, wie sie erfindungsgemäß und vorteilhaft als Sumpfprodukt gewonnen wird, bis vorzugsweis kleiner gleich 0,001 mg/kg.

Verfahrenstechnisch konnte ein sehr wirtschaftliches Verfahren entwickelt werden, dass quasi als Eintopfreaktion durchgeführt werden kann. Eine aufwendige Destillation des Sumpfproduktes kann unterbleiben. Damit konnte die Ausbeute der Produkte gegenüber den bekannten Verfahren deutlich gesteigert werden. Überraschend konnten verfahrensbedingt hochreine Zusammensetzungen mit sehr geringen Gehalten an Katalysatoren oder Katalysatorrückständen, Gesamtchlorid und geringen Anteilen an hochmolekularen Siloxanen erhalten werden.

Die definierte Einstellung der Molekuargewichtsverteilung der erfindungsgemäßen Zusammensetzung führt auch zu thermisch besonders stabilen Siloxanoligomeren, die in der späteren Anwendungstechnik in aufgeheizten Extrudern zu deutlich geringeren Masseverlusten, selbst bei hohen Temperaturen von 150 bis 200 °C führt. Dabei reichte es nicht einfach höhermolekulare Verbindunge herzustellen, denn oligomere Verbindungen mit zu hohen Molekülmassen führen zu einer Verknäulung der Oligomere und somit zu einer schlechten oder verzögrten Verteilbarkeit in anderen Produkten, wie beispielsweise den Polymermassen in Extrudern.

Auch Zusammensetzungen enthalten Siloxanoligomere ohne Q-Struktur sind erfindungsgemäß bevorzugt, da die Q-Strukturen deutlich die Viskosität erhöhen und damit das Anwendungsspektrum begrenzen. Daher ist c bevorzugt gleich 0.

Gemäß einer weiteren Alternative ist es bevorzugt, wenn die Zusammensetzung olefinisch funktionalisierte Siloxanoligomere enthält, deren Gewichtsmittel des Molekulargewichts (Mw) größer gleich 315 g/mol und deren Zahlenmittel des Molekulargewichts (Mn) größer gleich 300 g/mol sind, wobei die Polydispersität als Quotient aus Mw/Mn bei 1,05 bis 1,35 liegt, jeweils einschließlich der Grenzwerte, vorzugsweise bei 1,05 bis 1,25, bevorzugt von 1,05 bis 1,20, besonders bevorzugt von 1,05 bis 1,18 oder von 1,05 bis 1,17. Somit zeigen die erfindungsgemäßen Siloxanoligomere in den Zusammensetzungen eine enge Molmassenverteilung, so dass eine geringe Anzahl an Molmassenfraktionen erhalten werden bei einer gleichzeitig hohen Anzahl an Ketten pro Fraktion. Diese enge Molmassenverteilung in den Zusammensetzungen kann überraschend nach dem erfindungsgemäßen Verfahren durch die kontrollierten Verfahrensbedingungen bereits als Sumpfprodukt erhalten werden. Ein weiterer Vorteil der engen Molmassenverteilung zeigt sich in einem sehr homogenen thermisch Verhalten in einem engen Temperaturbereich.

Gegenstand der Erfindung sind bevorzugt Zusammensetzungen enthaltend olefinisch funktionalisierte Siloxanoligomere, wobei die olefinisch funktionalisierten Siloxanoligomere zu größer gleich 90 % (Flächen-%, GPC) in Bezug auf die Gesamtzusammensetzung mit einem Molekulargewicht von kleiner gleich 1000 g/mol in der Zusammensetzung vorliegen, insbesondere zu größer gleich 92 % (Flächen-%, GPC), bevorzugt zu größer gleich 93 %. Wobei vorzugsweise zugleich die Polydispersität (Mw/Mn) der Siloxanoligomere zwischen D= 1,05 bis 1,25 liegt.

Weiter ist es bevorzugt, wenn zugleich größer 80 % (Flächen-%, GPC), insbesondere größer 85 % der Gesamtzusammensetzung ein Molekulargewicht größer gleich 250 g/mol aufweisen, vorzugsweise weisen größer gleich 85%, insbesondere größer gleich 90 % ein Mw größer gleich 250 g/mol auf. Erfindungsgemäße Zusammensetzungen weisen daher vorteilhaft ein Mw von größer gleich 250 bis kleiner gleich 1000 g/mol für größer gleich 80 %, insbesondere größer gleich 85 % (Flächen-%, GPC), bevorzugt größer gleich 90 %, besonders bevorzugt größer gleich 92 %, 93 %, 94 %, 95 % der Siloxanoligomere in der Zusammensetzung auf, wobei die Schwankungsbreite plus/minus 5%, vorzugsweise plus/minus 2 %, bevorzugt kleiner gleich 1% betragen kann. Derartige Zusammensetzungen sind nach dem erfindungsgemäßen Verfahren erhältlich, insbesondere ohne den Fokus auf konkrete Chlorid- oder Gesamtchloridgehalte zu legen. Insbesondere liegen lineare und verzeigte Hexasiloxane, Cyclo-Heptasiloxane und höhermolekulare Siloxanoligomere nur bis zu 25 Flächen-% in der Zusammensetzung vor, insbesondere zwischen 0 bis 25 Flächen-%, bevorzugt zwischen 10 bis 25 Flächen-%, besonders bevorzugt zwischen 11 bis 20 Flächen-% vor.

Zusätzlich oder unabhängig liegen größer gleich 80 %, insbesondere größer gleich 85 % (Flächen-%) der Siloxanoligomere, insbesondere der Formel I, mit (a+b+c) $\geq$ 2 vor, vorzugsweise in Kombination mit 90 % in Bezug auf die Gesamtzusammensetzung von kleiner gleich 1000 g/mol.

Ebenfalls Gegenstand der Erfindung sind Zusammensetzungen enthaltend olefinisch funktionalisierte Siloxanoligomere, die zu größer gleich 45 % (Flächen-%, ermittel über eine GPC-Analyse) als Trisiloxan, Tetrasiloxan, Cyclo-Tetrasiloxan und/oder Cyclo-Pentasiloxan in der Zusammensetzung vorliegen, insbesondere zu größer gleich 47,5 %, wobei vorzugsweise die Polydispersität zwischen 1,05 und 1,25 liegt, bevorzugt zwischen 1,05 bis 1,20, besonders bevorzugt 1,05 bis 1,17 (einschließlich der Grenzwerte). Besonders bevorzugte Zusammensetzungen enthaltend olefinisch funktionalisierte Siloxanoligomere, die zu größer gleich 75 % (Flächen-%, ermittelt über GPC) als Disiloxan, Trisiloxan, Tetrasiloxan, Pentasiloxan, Cyclo-Trisiloxan, Cyclo-Tetrasiloxan, Cyclo-Pentasiloxan und/oder Cyclo-Hexasiloxan in der Zusammensetzung vorliegen, vorzugsweise liegen größer gleich 77,5 % (Flächen-%, GPC), besonders bevorzugt größer gleich 80 % der Oligomere mit diesen Strukturen vor, wobei insbesondere die Polydispersität zwischen 1,05 und 1,25 liegt,bevorzugt zwischen 1,05 bis 1,20, besonders bevorzugt 1,05 bis 1,17 (einschließlich der Grenzwerte). Generell gilt, dass die Bezeichnung Disiloxan, Trisiloxan, Tetrasiloxan, Pentasiloxan die jeweils linearen und/oder verzweigten Siloxane erfasst und Cyclo-Trisiloxan, Cyclo-Tetrasiloxan, Cyclo-Penta oder Cyclo-Heptasiloxan die cyclischen Siloxane erfasst.

Durch die nach dem erfindungsgemäßen Verfahren erzielten, höheren Molekulargewichte bei gleichzeitig geringer Molmassenverteilung und hoher Reinheit der Zusammensetzungen umfassend olefinisch funktionalisierte Oligomere können hohe Flammpunkt und zugleich gute Eigenschaften bei erhöhten Temperaturen eingestellt werden. So weisen die erfindungsgemäßen Zusammensetzungen jeweils unabhängig einen Flammpunkt bei einer Temperatur größer gleich 85 °C auf, insbesondere bei größer gleich 90 °C. Einen Masseverlust der Zusammensetzung von 50 Gew.-%, bestimmt mittels TGA, zeigen die erfindungsgemäßen Zusammensetzungen vorzugsweise erst bei einer Temperatur oberhalb von 210 °C, insbesondere wird ein 50%iger Massenverlust erst oberhalb 220 °C beobachtet (TGA, gemessen s. Ausführungsbeispiele), besonders bevorzugt tritt ein 50 %iger Masseverlust in einem sehr engen Temperaturbereich von circa 220 bis 250 °C ein, insbesondere auch für die verschieden substituierten Siloxanoligomere, wobei die Schwankungsbreite bei plus/minus 5 °C liegen kann (Aufheizrate 10 K/min, Platintiegel, Deckel mit Loch).

Entsprechend einer weiteren Ausführungsform der Erfindung liegt der Masseverlust der Zusammensetzung, bestimmt nach TGA (Platintiegel, Deckel mit Loch, 10 K/min) bei einer Temperatur bis einschließlich 140 °C unter 5 Gew.-%. Alternativ oder zusätzlich liegt der Masseverlust der Zusammensetzung bei einer Temperatur bis 220 °C unter 50 Gew.-%. Ferner zeigen die erfindungsgemäßen Zusammensetzungen bei 200 °C nur einen Massenverlust von kleiner 30 Gew.-%, wobei vorzugsweise der Flammpunkt oberhalb 90 °C liegt. Bei Temperaturen von 150 °C liegt der Masseverlust der erfindungsgemäßen Zusammensetzungen unter 10 Gew.-%, insbesondere unter 8 Gew.-%. Typischerweise liegen die Verarbeitungstemperaturen von Polymeren, denen die Siloxanoligomere zur Einstellung der Eigenschaften zugesetzt werden, bei Temperaturen zwischen 150 bis 200 °C. In diesem Bereich zeigen die erfindungsgemäßen Zusammensetzungen besonders geringe Masseverluste im Vergleich zu bekannten Siloxanoligomeren aus dem Stand der Technik. Besonders hervorzuheben ist der gleichzeitig hohe Flammpunkt der Zusammensetzung von größer 90 °C, vorzugsweise größer gleich 95 °C, weiter bevorzugt größer gleich 100 °C. Diese hohen Flammpunkte können aufgrund der hohen Reinheit der Sumpfprodukte auch über einen langen Lagerzeitraum gewährleistet werden, da nahezu keine Katalysatorreste in der Zusammensetzung verbleiben.

Zusätzlich bevorzugt sind Zusammensetzungen mit olefinisch funktionalisierten Siloxanoligomeren in denen das Gewichtsmittel des Molekulargewichts (Mw) größer gleich 420 g/mol und das Zahlenmittel des Molekulargewichts (Mn) größer gleich 400 g/mol sind, wobei die Polydispersität als Quotient aus Mw/Mn bei 1,05 bis 1,35 liegt, vorzugsweise von 1,05 bis 1,25, weiter bevorzugt von 1,05 bis 1,20, insbesondere von 1,05 bis 1,17. Ebenfalls bevorzugte Zusammensetzungen enthalten Siloxanoligomere deren Gewichtsmittel des Molekulargewichts (Mw) größer 420 g/mol und deren Zahlenmittel des Molekulargewichts (Mn) größer gleich 462 g/mol sind, wobei die Polydispersität (D) als Quotient aus Mw/Mn bei 1,10 bis 1,20 liegt, besonders bevorzugt bei 1,05 bis 1,18 oder vorzugsweise die vorgenannten Werte.

Gemäß einer weiteren bevorzugten Ausführungsform weisen die Siloxanoligomere in den Zusammensetzungen ein Gewichtsmittel des Molekulargewichts (Mw) größer gleich 450 g/mol bis 590 g/mol und ein Zahlenmittel des Molekulargewichts (Mn) größer gleich 410 g/mol bis 510 g/mol auf, wobei die Polydispersität (D) als Quotient aus Mw/Mn bei 1,05 bis 1,25 liegt, insbesondere 1,05 bis 1,22, bevorzugt 1,05 bis 1,20.

Gewichtsmittel des Molekulargewichts (Mw)

$$M_w = \frac{\sum n_i M_i^2}{\sum n_i M_i}$$

Und Zahlenmittel des Molekulargewichts (Mn)

$$M_n = \frac{\sum n_i M_i}{\sum n_i}$$

jeweils mit: $n_i$ = Stoffmenge [Masse] des i-mers, $M_i$ = Molmasse des i-mers. Details zur Definition für Gewichtsmittel und Zahlenmittel, die dem Fachmann an sich bekannt sind, kann der Leser aber auch u. a. dem Internet unter http://de.wikipedia.org/wiki/ Molmassenverteilung oder einem Standardwerk der Mathematik entnehmen.

Um ein definiertes Eigenschaftsprofil hinsichtlich einem geringen Massenverlust bei hohen Temperaturen, insbesondere zwischen 150 bis 200 °C oder auch zwischen 200 und 230 °C, sowie einer guten und schnellen Verteilbarkeit in Polymeren, Prepolymeren oder Mischungen dieser mit Monomeren zu gewährleisten, wie beispielsweise bei der Verwendung in Extrudern, ist es ganz wesentlich, dass die Zusammensetzungen olefinische Siloxanoligomere eine definierte Molmassenverteilung, vorzugsweise relativ engen Molmassenverteilungen, aufweisen. Ein zu hoher Gehalt an hochmolekularen Produkten wie lineare oder verzweigte Hexa- oder Heptasiloxan würde die Verteilbarkeit in den Polymeren behindern und auch die Vernetzungeigenschaften ungünstig beeinflussen. Andererseits ist auch ein zu hoher Anteil an Disiloxanen unerwünscht, da sie zu hohen Masseverlusten bei Temperaturen zwischen 150 bis 200 °C führen.

Besonders bevorzugt liegen größer gleich 70 % der Siloxanoligomere in der Zusammensetzung als Disiloxan, Cyclotrisiloxan, Trisiloxan, Cyclotetrasiloxan, Tetrasiloxan, Cyclopentasiloxan, Pentasiloxan und/oder als Cyclohexasiloxan vor, bevorzugt größer gleich 75 %, besonders bevorzugt größer gleich 80 %, weiter bevorzugt größer gleich 85 %. Somit weisen erfindungsgemäße Zusammensetzungen vorzugsweise olefinische Siloxanoligomere gemäß mit den folgenden Anteilen auf, die jeweils unabhängig eine Standardabweichung von plus/minus 3 % aufweisen können: bevorzugt ist jeweils unabhängig der Gehalt von monomeren Silanen kleiner 0,5 %, der Anteil an Disiloxanen und Cyclo-Tri-Siloxanen ist vorzugsweise kleiner gleich 30 %, bevorzugt kleiner 25 %, der Anteil von Trisiloxanen und Cyclo-Tetrasiloxanen größer gleich 20 %, vorzugsweise größer gleich 23 %, der Anteil von Tetrasiloxanen und Cyclo-Pentasiloxanen ist größer gleich 10 %, insbesondere größer gleich 14 %, der Anteil an Pentasiloxanen und Cyclo-Hexasiloxanen ist größer gleich 6 bis 40, % vorzugsweise 7 bis 30 %, wobei insbesondere der Anteil an lineare oder verzweigten Hexasiloxanen, Cycloheptasiloxanen und höhermolekularen Siloxanen kleiner gleich ≤ 30 % ist, insbesondere ≤ 25 %, vorzugsweise kleiner gleich 20 % (Flächen-%), jeweils in Bezug zur Gesamtzusammensetzung (mit 100 %). Dabei ist es zugleich besonders bevorzugt, wenn der Massenverlust gemäß TGA unter 50 Gew.-% bei Temperaturen bis zu 210 °C, vorzugsweise unter 220 °C liegt. Weiter ist es bevorzugt, wenn die Zusammensetzung zugleich einen Flammpunkt von größer gleich 90 °C aufweist. Die Anteile in % werden jeweils als Flächenprozent aus GPC-Analysen ermittelt.

Gegenstand der Erfindung ist ebenfalls eine Zusammensetzung enthaltend olefinisch funktionalisierte Siloxanoligomere, die höchstens einen olefinischen Rest am Silizium-Atom aufweisen, und die olefinisch funktionalisierten Siloxanoligomere Si-O-vernetzte Strukturelemente aufweisen, die kettenförmige, cyclische, vernetzte und/oder gegebenenfalls raumvernetzte Strukturen bilden, wobei mindestens eine Struktur in idealisierter Form der allgemeinen Formel I entspricht, wobei die Siloxanoligomere abgeleitete Strukturelemente aus mindestens einem der Alkoxysilane aufweisen,

(i) aus olefinisch-funktionalisierten Alkoxysilanen der allgemeinen Formel II,

$$A\text{-}Si(R^2)_x(OR^1)_{3-x} \qquad (II)$$

mit A einem olefinischen Rest, der insbesondere ausgewählt ist aus einer linearen, verzweigten oder cyclischen Alkenyl- oder Cycloalkenyl-alkylen-funktionellen Gruppe mit jeweils 2 bis 16 C-Atomen, mit $R^2$ jeweils unabhängig einem linearen, verzweigten oder cyclischen Alkyl-Rest mit 1 bis 15 C-Atomen und x gleich 0 oder 1, bevorzugt x gleich 0, und $R^1$ jeweils unabhängig eine Methyl-, Ethyl- oder Propyl-Gruppe ist, oder optional einer Mischung von Alkoxysilanen der Formel II, insbesondere ist x gleich 0, oder deren Umesterungsprodukte und optional

(ii) aus mit einem gesättigten Kohlenwasserstoff-Rest funktionalisierten Alkoxysilan der Formel III,

$$B\text{-}Si(R^4)_y(OR^3)_{3-y} \qquad\qquad (III)$$

mit B einem unsubstituierten Kohlenwasserstoff-Rest, der ausgewählt ist aus einem linearen, verzweigten oder cyclischen Alkyl-Rest mit 1 bis 16 C-Atomen, mit $R^3$ jeweils unabhängig eine Methyl-, Ethyl- oder Propyl-Gruppe ist $R^4$ jeweils unabhängig einem linearen, verzweigten oder cyclischen Alkyl-Rest mit 1 bis 15 C-Atomen und y gleich 0 oder 1 sind, wobei y bevorzugt gleich 0 ist, oder optional einer Mischung von Alkoxysilanen der Formel III oder deren Umesterungsprodukte, insbesondere ist y = 0, und optional

(iii) aus einem Tetraalkoxysilan der allgemeinen Formel IV gleich $Si(OR^3)_4$ mit $R^3$ jeweils unabhängig voneinander eine Methyl-, Ethyl- oder Propyl-Gruppe ist, oder deren Umesterungsprodukte,

und insbesondere der Gehalt an Rückstand bzw. Rückständen des bei der Herstellung eingesetzten Säurekatalysators, insbesondere Chlor bzw. Chlorid, vorzugsweise Gesamtchlorid, kleiner gleich 250 mg/kg beträgt, insbesondere kleiner gleich 150 mg/kg, bevorzugt kleiner gleich 100 mg/kg, besonders bevorzugt kleiner gleich 75 mg/kg, weiter bevorzugt kleiner gleich 50 mg/kg bis hin zur aktuellen analytischen Nachweisgrenze, ganz besonders vorzugsweise kleiner gleich 35 mg/kg in einer Zusammensetzung, wie sie erfindungsgemäß und vorteilhaft als Sumpfprodukt gewonnen wird, das Gewichtsmittel des Molekulargewichts (Mw) größer 315 g/mol ist, und wobei die durch zumindest teilweise Hydrolyse und Kondensation aus besagten Alkoxysilanen abgeleiteten Strukturelemente $[(R^1O)_{1-x}(R^2)_x Si(A)O]_a$, $[Si(B)(R^4)_y(OR^3)_{1-y}O]_b$ und/oder $[Si(Y)_2O]_c$ in den Siloxanoligomeren, insbesondere in der idealisierten allgemeinen Formel I zusammen in Bezug auf alle Silizium-Atome der allgemeinen Formel I, bei kleiner gleich 80 % bis größer gleich 30 %, insbesondere größer gleich 35 %, als M-Struktur vorliegen.

Alle Alkylreste, wie $R^1$, $R^2$, $R^3$, $R^4$, mit 1 bis 4 C-Atomen können jeweils unabhängig voneinander vorzugsweise Methyl, Ethyl, Propyl, n-Propyl, iso-Propyl, Butyl, n-Butyl, iso-Butyl, tert.-Butyl und/oder mit 5 C-Atomen 2-Methylbutyl sein. Dabei können die Alkyl-Reste $R^2$ und $R^4$ jeweils unabhängig ausgewählt sein aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, Cyclohexyl-, 2,2-Dimethylbutyl-, 2,3-Dimethylbutyl-, 2-Methylpentyl-, 3-Methylpentyl-, Octyl-, n-Octyl-, iso-Octyl-, Nonyl-, Decyl-, Undecyl-Dodecyl- , $C_{13}H_{27}$-, $C_{14}H_{29}$- und einer $C_{15}H_{31}$-Gruppe oder Cyclopentyl, Cyclohexyl sowie einer Alkyl-substituierte Cyclopentyl und Cyclohexyl Gruppe.

Umesterungsprodukte können Alkoxysilane mit verschiedenen Alkoxy-Guppen umfassen, wie bspw. mit Methoxy- und Ethoxy-Gruppen funktionalisierte Alkoxysilane der Formeln II, II, IV oder auch der Formel I. Die Siloxanoligomere als auch die Alkoxysilane der Formeln II, III und IV können als Umesterungsprodukte vorliegen. So können beispielsweise die Alkoxysilane der Formel II als Gemische von Methoxysilanen, Ethoxysilanen oder gemischt funktionalisierten Methoxyethoxysilanen vorliegen. Entsprechend können auch die Alkoxysilane der Formel III Gemische von Methoxysilanen, Ethoxysilanen oder gemischt funktionalisierten Methoxyethoxysilanen sein. Für die olefinisch funktionalisierten Siloxanoligomere, insbesondere der Formel I gilt entsprechendes, sie können als $R^1$ und $R^3$ Methyl- oder Ethyl-Gruppen sowie beide Gruppen aufweisen und als Methoxy- und Ethoxy-funktionalisierte Oligomere vorliegen.

Zusätzlich zu den vorgenannten Merkmalen ist der Gehalt an M-Strukturen der Siloxanoligomere in der erfindungsgemäßen Zusammensetzung deutlich vermindert gegenüber dem Stand der Technik, der einen sehr hohen Anteil an M- und D-Strukturen offenbart, wobei der ganz überwiegende Anteil im Siloxanoligomer als M-Struktur vorliegt.

Ferner ist zusätzlich zu den vorgenannten Merkmalen der Gehalt an monomeren Alkoxysilanen in der erfindungsgemäßen Zusammensetzung deutlich vermindert. Gegenstand der Erfindung ist daher auch eine Zusammensetzung umfassend olefinisch-funktionalisierte Siloxanoligomere, deren Gehalt an Silizium-Atomen monomerer Alkoxysilane kleiner gleich 2 % bis zur Nachweisgrenze bzw. 0,0 % in Bezug auf alle Silizium-Atome beträgt, bevorzugt kleiner 1 bis 0,0 %, weiter bevorzugt kleiner gleich 0,9 bis 0,0 %, noch bevorzugter kleiner gleich 0,8 bis 0,0 Gew.-%. Als monomere Alkoxysilane gelten die Alkoxysilane der Formeln II, III und/oder IV sowie deren monomere Hydrolyseprodukte. Der Gehalt in Prozent kann beispielsweise mittels $^{29}$Si-NMR-Spektroskopie ermittelt werden. Diese Monomeren führen zu einer Nachvernetzung in den Siloxanoligomeren und verschlechtern ihr Eigenschaftsprofil. Aufgrund internationaler Vorgaben, wie der OECD Definition von Polymeren, und weiterer Vorschriften besteht ein intensives Bedürfnis, bei der Herstellung von Polymeren möglichst frei von Monomeren zu produzieren.

Gemäß besonders bevorzugten Ausführungsformen entspricht der olefinische Rest A in Formeln I und/oder II einem nicht hydrolysierbaren olefinischen Rest, insbesondere einer linearen, verzweigten oder cyclischen Alkenyl- oder Cycloalkenyl-alkylen-funktionellen Gruppe mit jeweils 2 bis 16 C-Atomen, bevorzugt einer Vinyl-, Allyl-, Butenyl-, wie 3-Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, wie 3'-Cyclohexenyl-2-ethylen- und/oder Cyclohexadienyl-C1 bis C8-alkylen-, vorzugsweise Cyclohexadienyl-2-ethylen-Gruppe.

Ebenso bevorzugt kann der unsubstituierte Kohlenwasserstoff-Rest B unabhängig in Formeln I und/oder III einem linearen, verzweigten oder cyclischen Alkyl-Rest mit 1 bis 16 C-Atomen entsprechen, insbesondere einer Methyl-, Ethyl-, Propyl-,n-Propyl-, iso-Propyl-, Butyl-, n-Butyl-, i-Butyl-, Octyl-, n-Octyl, iso-Octyl- oder Hexadecyl-Gruppe. Ebenso bevorzugt kann der Rest B unabhängig ausgewählt sein aus tert-Butyl, Pentyl-, n-Pentyl-, iso-Pentyl-, neo-Pentyl-, Hexyl-, i-Hexyl-, neo-Hexyl-, Heptyl-, 2,2-Dimethylbutyl-, 2,3-Dimethylbutyl-, 2-Methylpentyl-, 3-Methylpentyl-, neo-Octyl-, Nonyl-, Decyl-, Undecyl-, Dodecyl-, 2-Methylheptyl-, 3-Methylheptyl-, 4-Methylheptyl-, 2,2-Dimethylhexyl-, 2,3-Dimethylhexyl-, 2,4-Dimethylhexyl-, 2,5-Dimethylhexyl-, 3,3-Dimethylhexyl-, 3,4-Dimethylhexyl-, 3-Ethylhexyl-, 2,2,3-Trimethylpentyl-, 2,2,4-Trimethylpentyl-, 2,3,3-Trimethylpentyl-, 2,3,4-Trimethylpentyl-, 3-Ethyl-2-methylpentyl-, 3-Ethyl-3-methylpentyl-, 2,2,3,3-Tetramethylbutyl-, $C_{13}H_{27}$-, $C_{14}H_{29}$- und einer $C_{15}H_{31}$-Gruppe. Gemäß einer Alternative kann der Alkyl-Rest verzweigt oder cyclisch mit 3 bis 16 C-Atomen sein oder linear mit 2 bis 7 C-Atomen.

Erfindungsgemäß liegen die Strukturelemente $[(R^1O)_{1-x}(R^2)_xSi(A)O]_a$, $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I zu kleiner gleich 8 % bis 0,0 % als T-Struktur vor, insbesondere zu kleiner gleich 7,8 % bis 1,00 % als T-Struktur, alternativ bevorzugt von 6,0 bis 2,0 %.

Ebenfalls weisen die olefinisch funktionalisierten Siloxanoligomere vorzugsweise ein Verhältnis an Silizium-Atomen zu A- und B-Resten auf, mit der Maßgabe, dass a größer gleich 1, b größer gleich 0 und c größer gleich 0 ist, und (a+b+c) größer gleich 2, von Si zu (A- + B-Resten) von 1 zu 1 bis etwa 1,22 zu 1 auf, vorzugsweise von 1 : 1 bis 1,15 :1 auf. Gemäß einer besonders bevorzugten Alternative ist c gleich 0 mit a eine ganze Zahl größer gleich 1 und gemäß einer weiteren bevorzugten Alternative ist c gleich 0 mit a größer gleich 1 und b größer gleich 1, jeweils unabhängig ganze Zahlen.

Ebenfalls Gegenstand der Erfindung sind Zusammensetzungen enthaltend olefinisch funktionalisierte Siloxanoligomere, die höchstens einen olefinischen Rest am Silizium-Atom aufweisen und in denen insbesondere jeweils unabhängig voneinander ausgewählt ist:

(i) das Strukturelement $[(R^1O)_{1-x}(R^2)_xSi(A)O]_a$ in der allgemeinen Formel I in Bezug auf alle Silizium-Atome der allgemeinen Formel I von 0,0 bis 8,0 als T-Struktur vorliegt, insbesondere von 0,0 bis 7,75 %, vorzugsweise von 1,0 bis 7,75 %, und/oder das Strukturelement $[Si(B)(R^4)_y(OR^3)_{1-y}O]_b$ in der allgemeinen Formel I in Bezug auf alle Silizium-Atome der allgemeinen Formel I von 0,0 bis 1,5 als T-Struktur vorliegt, vorzugsweise von 0,0 und 1,0 % und gegebenenfalls

(ii) das die Strukturelemente $[(R^1O)_{1-x}(R^2)_xSi(A)O]_a$ und $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I von kleiner gleich 75 bis 15% oder kleiner gleich 75 bis 40 % als D-Struktur vorliegen, insbesondere von 70 bis 42 %, bevorzugt von 65 bis 42 %, besonders bevorzugt von 65 bis 43 %, und gegebenenfalls

(iii) das Strukturelement $[(R^1O)_{1-x}(R^2)_xSi(A)O]_a$ in der allgemeinen Formel I in Bezug auf alle Silizium-Atome der allgemeinen Formel I von 25 bis 55 % als M-Struktur vorliegt, insbesondere von 25 bis 50 %, besonders bevorzugt von 29 bis 45 %, 35 bis 45 %, und gegebenenfalls

(iv) das Strukturelement $[Si(B)(R^4)_y(OR^3)_{1-y}O]_b$ in der allgemeinen Formel I in Bezug auf alle Silizium-Atome der allgemeinen Formel I zu kleiner gleich 40% als M-Struktur vorliegt, insbesondere zu keiner gleich 35 %, wie 30 bis 40 %, und/oder gegebenenfalls

(v) das Strukturelement $[Si(Y)_2O]_c$ in der allgemeinen Formel I größer gleich 20 % der der Strukturelemente $[Si(Y)_2O]_c$ in der allgemeinen Formel I als D-Struktur vorliegen, insbesondere zwischen 20 bis 40 %, und/oder gegebenenfalls

(vi) das Strukturelement $[Si(Y)_2O]_c$ in der allgemeinen Formel I von 0,0 bis 1 % als T-Struktur vorliegt. Gemäß einer besonders bevorzugten Alternative ist in Formel I c gleich 0.

Ebenfalls Gegenstand der Erfindung sind Zusammensetzungen enthaltend olefinisch funktionalisierte Siloxanoligomere, die höchstens einen olefinischen Rest am Silizium-Atom aufweisen und in denen jeweils unabhängig voneinander ausgewählt ist: (i) das Strukturelement $[(R^1O)_{1-x}(R^2)_xSi(A)O]_a$ in der allgemeinen Formel I in Bezug auf alle Silizium-Atome der allgemeinen Formel I von 0,0 bis 8,0 als T-Struktur vorliegt, insbesondere von 0,0 bis 7,75 %, vorzugsweise von 1,0 bis 7,75 %, und/oder das Strukturelement $[Si(B)(R^4)_y(OR^3)_{1-y}O]_b$ in der allgemeinen Formel I in Bezug auf alle Silizium-Atome der allgemeinen Formel I von 0,0 bis 1,5 als T-Struktur vorliegt, vorzugsweise von 0,0 und 1,0 % und (ii) die Strukturelemente $[(R^1O)_{1-x}(R^2)_xSi(A)O]_a$ und $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I von kleiner gleich 50 bis 15 % als D-Struktur vorliegen, insbesondere von 50 bis 17 %, besonders bevorzugt von 50 bis 30 %, und optional

(iii) das Strukturelement $[(R^1O)_{1-x}(R^2)_xSi(A)O]_a$ in der allgemeinen Formel I in Bezug auf alle Silizium-Atome der allgemeinen Formel I von 28 bis 50 % als M-Struktur vorliegt, und optional

(iv) das Strukturelement $[Si(B)(R^4)_y(OR^3)_{1-y}O]_b$ in der allgemeinen Formel I in Bezug auf alle Silizium-Atome der allgemeinen Formel I zu kleiner gleich 40% bis 30 % als M-Struktur vorliegt.

Ebenfalls bevorzugt liegt das Verhältnis von M zu D Strukturen in den olefinischen Siloxanoligomeren, insbesondere der allgemeinen Formel I, in Bezug auf alle Silizium-Atome von 1 : 2 bis 10 : 1, bevorzugt 1 : 2 bis 3 : 1, besonders bevorzugt 1 : 2 bis 3 : 1, weiter bevorzugt 1 : 2 bis 2,5 : 1, besonders bevorzugt 1: 1,2 bis 3 : 1, insbesondere zusätzlich zu dem Gehalt an T-Strukturen aller Strukturelemente in der allgemeinen Formel I von 8,0 bis 0,0 %, vorzugsweise 8,0 bis 0,5 %. Zusätzlich weisen die Zusammensetzung hohe Flammpunkte von größer gleich 85 °C auf, insbesondere größer gleich 90 °C. Der gute Flammpunkt wird auf eine sehr hohe Reinheit der isolierten Zusammensetzung und einem sehr geringen Gehalt an Katalysatorrückständen bzw. keine Katalysatorrückstände zurückgeführt. Ferner sind Zusammensetzung Gegenstand der Erfindung, in denen die olefinisch funktionalisierten Siloxanoligomere ein Verhältnis von M zu D Strukturen oder mindestens eine Siloxanoligomer der allgemeinen Formel I in Bezug auf alle Silizium-Atome von 1 : 1,2 bis 3 : 1 und der Flammpunkt der Zusammensetzung bei einer Temperatur größer gleich 85 °C liegt.

Der Gehalt an M-, D-, T- oder Q-Strukturen wird in der Regel nach einer dem Fachmann an sich bekannten Methode ermittelt, bevorzugt mittels $^{29}$Si-NMR.

Die Definition für M-, D-, T- und Q-Strukturen bezieht sich in der Regel auf die Anzahl gebundener Sauerstoffe in Siloxanbindungen, wie nachfolgend anhand von Alkoxysilyleinheiten beispielhaft dargestellt: Mit jeweils unabhängig R gleich $OR^1$, $OR^3$, Gruppe-A oder Gruppe B, wie vorstehend definiert. Mit M = $[-O_{1/2}-Si(R)_3]$, D = $[-O_{1/2}-Si(R)_2-O_{1/2}-]$, T = $[RSi(-O_{1/2}-)_3]$ und Q = $[Si(-O_{1/2}-)_4]$. $-O_{1/2}-$ ist immer ein Sauerstoff in einer Siloxanbindung. So kann man, um Silicone und Siloxane bzw. Silanoligomere anschaulicher beschreiben zu können, anstelle einer idealisierten formelmäßigen Beschreibung auch auf die M-, D-, T- (vernetzt) und Q-Strukturen (raumvernetzt) zurückgegriffen. Zur genaueren Nomenklatur der Benennung solcher Siloxanstrukturen sei auf das "Römpp Chemielexikon" - Stichwort: Silicone - hingewiesen. Beispielsweise können aus Baueinheiten M lediglich Dimere mit $M_2$ gebildet werden, wie Hexaalkoxydisiloxan. Zum Aufbau von Ketten werden Zusammensetzungen von Baueinheiten D und M benötigt, sodass Trimere ($M_2D$, Octaalkoxytrisiloxan), Tetramere ($M_2D_2$) und so fort bis zu linearen Oligomeren mit $M_2D_n$ aufgebaut werden können. Zur Ausbildung von cyclischen Oligomeren werden Baueinheiten D benötigt. Auf diese Weise können beispielsweise Ringe mit $D_3$, $D_4$, $D_5$ oder höher aufgebaut werden. Verzweigte bzw. vernetzte Strukturelemente, zu denen auch Spiroverbindungen zu rechnen sind, werden erhalten, wenn Baueinheiten T und /oder Q zusammen vorliegen. Denkbare vernetzte Strukturen können als $T_n$ ($n \geq 4$), $D_nT_m$ ($m < n$), $D_nT_m$ ($n \gg m$), $D_3T_2$, $M_4Q$, $D_4Q$ und so weiter vorliegen, um nur einige denkbare Möglichkeiten zu nennen. Baueinheiten M werden auch als Stopper oder Regler bezeichnet, während D-Einheiten als Ketten- oder Ringbildner und die T- und gegebenenfalls auch die Q-Einheiten als Netzwerkbildner bezeichnet werden. So kann der Einsatz von Tetraalkoxysilanen aufgrund der vier hydrolysierbaren Gruppen und Zutritt von Wasser bzw. Feuchtigkeit Baueinheiten Q und somit die Ausbildung eines Netzwerks (raumvernetzt) bewirken. Demgegenüber können vollständig hydrolysierte Trialkoxysilane Verzweigungen, T-Einheiten $[-Si(-O-)_{3/2}]$, in einem Strukturelement bedingen, beispielsweise $MD_3TM_2$ für ein Oligomer mit einem Oligomerisierungsgrad von n=7, wobei in diesen Strukturdarstellungen die jeweiligen Funktionalitäten an den freien Valenzen der Silyloxyeinheiten zu definieren sind.

Weitere Details zum Nomenklaturverständnis von M-, D-, T- und Q-Strukturen sowie diesbezüglicher Untersuchungsmethoden sind u. a.:

- "Strukturuntersuchungen von oligomeren und polymeren Siloxanen durch hochauflösende 29Si-Kernresonanz", H.-G. Horn, H. Ch. Marsmann, Die Markromolekulare Chemie 162 (1972), 255-267;
- "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300;
- "Chapter 8 - NMR spectroscopy of organosilicon compounds", Elizabeth A. Williams, The Chemistry of Organic Silicon Compounds, 1989 John Wiley & Sons Ltd., 511-533.

Zusammensetzungen, die die vorgenannten Strukturen aufweisen verfügen über einen hohen Flammpunkt und zeigen besonders geringe VOC-Gehalte bei der späteren Anwendung. Ein besonders hervorzuhebender Vorteil der erfindungsgemäßen Zusammensetzungen und des erfindungsgemäßen Verfahrens ist, dass die hergestellten olefinischen Siloxanoligomere, insbesondere die Vinyloligomere, oder auch die Vinyl-/Alkyl-Siloxanoligomere, anders als die bekannten Oligomere keine weitere Aufarbeitung benötigen, wie die Destillation der Zusammensetzungen der Siloxanoligomere in EP 0 518 057 B1.

Ein besonderer Vorteil der erfindungsgemäßen olefinisch-funktionalisierten Siloxanoligomere ist auch, dass das definierte Gewichtsmittel des Molekulargewichtes, vorzugsweise mit einem definierten Zahlenmittel des Molekulargewichtes, vorzugsweise mit dem erfindungsgemäßen Verhältnis von M- zu D-Strukturen unmittelbar die Verarbeitbarkeit der Siloxanoligomere mit Polymeren verbessert, beispielsweise bei der Knetung oder Compoundierung. Konkret zeigt sich die verbessert Wasseraufnahmefähigkeit in einer Reduzierung der aufgenommenen Wassermenge. Auch der Volumen-Fließindex ist verbessert, so dass der Energieaufwand bei der Verarbeitung sinkt. Ferner nimmt die Korrosion der eisenhaltigen Maschinen ab, da der Chloridgehalt weiter gesenkt werden konnte. Die verminderte Wasseraufnahmefähigkeit ist in den späteren Anwendungsfeldern vorteilhaft, beispielsweise bei der Herstellung von gefüllten Kabelmassen, insbesondere für Kabel, die in der Erde verlegt werden sollen und anhaltender Feuchtigkeit ausgesetzt sind. Zur Vermeidung einer schleichenden Korrosion von metallischen Leitern in Elektrokabeln tragen die erfindungsgemäßen sehr chloridarmen bzw. chloridfreien Zusammensetzungen bei.

Es kann ferner bevorzugt sein, dass die erfindungsgemäße Zusammensetzung und/oder das Siloxanoligomer zudem Trialkylsilan-Gruppen aufweisen, wie Trimethylsilan oder Triethylsilan-Gruppen, beispielsweise durch die Zugabe von Alkoxytrialkylsilan, um den Oligomerisierungsgrad einzustellen. Zur Einstellung des Oligomerisierungsgrades während der Herstellung der Zusammensetzung kann es daher bevorzugt sein, für einen Kettenabbruch zu einem gewünschten Zeitpunkt, ein Alkoxytrialkylsilan, wie vorzugsweise ein Ethoxytrimethylsilan oder Methoxytrimethylsilan zur herzustellenden Zusammensetzung zuzusetzen.

Erfindungsgemäße Zusammensetzungen können mindestens 20 Gew.-% an Siloxanoligomeren aufweisen, bei denen der Oligomerisierungsgrad der Siloxanoligomere, insbesondere der Formel I, die Summe aus (a + b) eine ganze Zahl größer gleich 5 ist, insbesondere ist die Summe aus (a+b) größer gleich 6, zweckmäßig ist die Summe aus (a+b) größer gleich 8, mit a größer gleich 1 und b gleich 0 oder b größer gleich 1, vorzugsweise jeweils a und b unabhängig voneinander größer gleich 2, insbesondere unabhängig größer gleich 4, und vorzugsweise mit c gleich 0 oder gegebenenfalls mit c in (a+b+c) größer gleich 1.

Zusätzlich oder alternativ zu einem oder mehreren der vorgenannten Merkmale weist die Zusammensetzung vorzugsweise nach vollständiger Hydrolyse aller Alkoxy-Gruppen einen Alkoholgehalt von unter 55 Gew.-% auf, insbesondere unter 50 Gew.-%, bei Methoxysiloxanen bevorzugt unter 40 Gew.-%, weiter bevorzugt unter 35 Gew.-%, besonders bevorzugt unter 30 Gew.-% und größer gleich 5 Gew.-%, bevorzugt größer gleich 10 Gew.-%, insbesondere größer gleich 20 Gew.-%, mit der Maßgabe, dass nur so viel Wasser zugesetzt wird, wie zur Hydrolyse benötigt wird. Eine weitere Verdünnung erfolgt zur Bestimmung nicht.

Ein besonderer Vorteil einer Alternative der erfindungsgemäßen Zusammensetzungen enthaltend olefinisch funktionalisierte Siloxanoligomere ist, dass sie bei der Hydrolyse maximal 55 Gew.-% in Bezug auf die Gesamtzusammensetzung Hydrolysealkohol aus hydrolysierbaren Alkoxy-Gruppen freisetzen, bevorzugt werden kleiner 45 %, weiter bevorzugt kleiner 40 % VOC (Bestimmung s. Methoden Beschreibung).

Zusätzlich oder alternativ zu einem oder mehreren der vorgenannten Merkmale weist die Zusammensetzung vorzugsweise ein Molverhältnis von A-Resten zu B-Resten von 1 : 0 bis 1 : 8 auf, vorzugsweise von etwa 1 : 0 bis 1 : 4, besonders bevorzugt ein Verhältnis von 1 : 0 bis 1 : 2, vorzugsweise 1 : 0 bis 1 : 1, bevorzugt um 1 : 1.

Dabei ist es weiter bevorzugt, wenn die Zusammensetzung olefinische Siloxanoligomere aufweist, in denen das Verhältnis der Silizium-Atome ausgewählt aus olefinisch funktionalisierten Silizium-Atomen und aus mit einem gesättigten Kohlenwasserstoff funktionalisierten Silizium-Atomen zu Alkoxy-Gruppen im Siloxanoligomere oder alternativ in der allgemeinen Formel I von 1 : 0,3 bis 1 : 2,5, bevorzugt 1 : 1,0 bis 1 : 2,0, ebenfalls bevorzugt sind jedoch auch 1 : 1,3 bis 1 : 1,9, besonders bevorzugt sind 1 : 1, 3 bis 1 : 1,6, mit der Maßgabe, dass das olefinisch funktionalisierte Siloxanoligomer aus Alkoxysilanen der allgemeinen Formel II oder der Formel II und III abgeleitet ist.

Gemäß einer Alternative werden Zusammensetzungen von rein olefinisch substituierten Siloxanoligomeren hergestellt, insbesondere der Formel I mit a gleich eine ganze Zahl größer gleich 2 und mit b gleich 0 und c gleich 0, insbesondere mit einem Gewichtsmittel des Molekulargewichts (Mw) von größer 315 g/mol, insbesondere bis 800 g/mol, bevorzugt bis 750 g/mol. Wobei zweckmäßig mindestens 20 Gew.-% der Siloxanoligomere mit a größer gleich 4, ggf. größer gleich 8 vorliegen. Bevorzugte olefinische Gruppen sind lineare, verzweigte oder cyclische, Alkenyl-, Cycloalkenyl-alkylen-funktionelle Gruppen mit jeweils 2 bis 16 C-Atomen, bevorzugt eine Vinyl-, Allyl-, Butenyl-, wie 3-Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, wie 3'-Cyclohexenyl-2-ethylen- und/oder Cyclohexadienyl-C1 bis C8-alkylen-, vorzugsweise Cyclohexadienyl-2-ethylen-Gruppe. Gegebenenfalls kann die Zusammensetzung auf einem Siloxanoligomer beruhen, das in Gegenwart von Tetraalkoxysilan hergestellt wurde.

Entsprechend einer zweiten bevorzugten Alternative werden Zusammensetzungen von olefinisch- und Alkyl-substituierten Siloxanoligomeren hergestellt, insbesondere der Formel I mit a größer gleich 1 und b größer gleich 1, insbesondere mit einem Gewichtsmittel des Molekulargewichts (Mw) von größer 315 g/mol, insbesondere bis 800 g/mol, bevorzugt bis 750 g/mol. Insbesondere können mindestens 20 Gew.-% der Siloxanoligomere für (a+b) größer gleich 4, vorzugsweise eine ganze Zahl größer gleich 8 aufweisen. Bei diesen Zusammensetzungen ist es weiter bevorzugt, wenn das Molverhältnis von A-Resten zu B-Resten 1 : 0 bis 1 : 8 ist, insbesondere ist das Verhältnis von a : b gleich 1 : 0 bis 1 : 8, insbesondere 1 : 0 oder 1 : 1 bis 1 : 8. Gegebenenfalls kann die Zusammensetzung auf einem Siloxanoligomer beruhen, das in Gegenwart von Tetraalkoxysilan hergestellt wurde.

Entsprechend einer weiteren bevorzugten Alternative werden Zusammensetzungen von Vinyl- und Alkyl-substituierten Siloxanoligomeren hergestellt, insbesondere der Formel I mit a größer gleich 1 und b größer gleich 1, vorzugsweise mit einem Gewichtsmittel des Molekulargewichts (Mw) von größer 315 g/mol, insbesondere bis 800 g/mol, bevorzugt bis 750 g/mol. Ferner weisen vorzugsweise 20 Gew.-% der Siloxane mit (a+b) größer gleich 4, vorzugsweise eine ganze Zahl größer gleich 8 auf, vorzugsweise mit einem Molverhältnisse von A-Resten zu B-Resten 1 : 0 bis 1 : 8, bevorzugt von a : b gleich 1 : 0 bis 1 : 8, insbesondere 1 : 0 oder 1 : 1 bis 1 : 8. Gegebenenfalls können die Zusammensetzungen auf einem Siloxanoligomer beruhen, das in Gegenwart von Tetraalkoxysilan hergestellt wurde.

Weiter bevorzugt umfasst die Zusammensetzung Siloxanoligomere mit Strukturelementen, die erhältlich sind bzw. abgeleitet sind aus mindestens einem der Alkoxysilane, aus olefinisch funktionalisierten Alkoxysilanen der allgemeinen Formel II und gegebenenfalls aus mit einem gesättigten Kohlenwasserstoff-Rest funktionalisierten Alkoxysilan der Formel III, und gegebenenfalls aus einem Tetraalkoxysilan der allgemeinen Formel IV gleich $Si(OR^3)_4$, wobei das Gewichtsmittel des Molekulargewichtes (Mw) größer 315 g/mol ist, insbesondere bis 800 g/mol, bevorzugt bis 750 g/mol.

Unter einem Strukturelement - einer monomeren Siloxan-Einheit - wird durchgängig die einzelne Baueinheit M, D, T oder Q verstanden (zur Nomenklatur von M-, D- und T- und Q-Struktureinheiten vgl. die bereits oben gemachten Ausführungen), d. h. die aus einem Alkoxy-substituierten Silan abgeleitete Baueinheit, die sich durch zumindest teilweise Hydrolyse bis gegebenenfalls vollständige Hydrolyse und zumindest teilweise Kondensation in einem Kondensat bildet. Erfindungsgemäß können sich insbesondere die Siloxanoligomere mit den folgenden Strukturelementen bilden, wie vorzugsweise: $(R^1O)[(R^1O)_{1-x}(R^2)_xSi(A)O]_aR^1$; $(R^1O)[(R^1O)_{1-x}(R^2)_xSi(A)O]_a$; $[(R^1O)_{1-x}(R^2)_xSi(A)O]_a$; $[(R^1O)_{1-x}(R^2)_xSi(A)O]_aR^1$; $(R^3O)[Si(Y)_2O]_c$; $[Si(Y)_2O]_cR^3$, $(R^3O)[Si(Y)_2O]_cR^3$; $[Si(Y)_2O]_c$; $(R^3O)[Si(B)(R^4)_y(OR^3)_{1-y}O]_bR^3$; $[Si(B)(R^4)_y(OR^3)_{1-y}O]_bR^3$, $[Si(B)(R^4)_y(OR^3)_{1-y}O]_b$; $(R^3O)[Si(B)(R^4)_y(OR^3)_{1-y}O]_bR^3$ die kettenförmige, cyclische und/oder vernetzte Strukturen bilden können und in Gegenwart von Tetraalkoxysilanen oder deren Hydrolyse und/oder Kondensationsprodukten können sich auch raumvernetzte Strukturen ausbilden. Die Strukturelemente mit freien Valenzen am Si-Atom sind kovalent über -O-Si und die freien Valenzen am O-Atom mit -Si verbrückten Bindungen anderer Strukturelemente, Alkyl- oder ggf. Wasserstoff abgesättigt. Die Strukturelemente können dabei eine regellose oder auch statistische Anordnung in den Kondensaten einnehmen, die, wie der Fachmann weiß, auch durch die Zugabereihenfolge und die Hydrolyse- und/oder Kondensationsbedingungen gesteuert werden können. Die allgemeine Formel I gibt nicht die tatsächlich vorliegende Struktur oder Zusammensetzung wider. Sie entspricht einer idealisierten Darstellungsmöglichkeit.

Die Zusammensetzung enthält bevorzugt Siloxanoligomere, die durch statistische und/oder regellose Homooder Co-Hydrolyse und/oder Homo- oder Co-Kondensation und/oder Blockkondensation der genannten Strukturelemente, basierend auf den erfindungsgemäß mit A oder B-Resten substituierten Alkoxysilanen der Formeln II, III und/oder IV, entstehen und/oder sich unter den gewählten Versuchsbedingungen bilden.

Das Substitutionsmuster der Strukturelemente gilt entsprechend auch für die nicht in idealisierter Form dargestellten kettenförmigen, cyclischen, vernetzten und/oder raumvernetzten Siloxanoligomere in der Zusammensetzung, wobei die Silyl-Gruppen der Siloxanoligomere unabhängig, wie folgt substituiert sein können: mit Y einem $OR^3$ oder in vernetzten und/oder raumvernetzten Strukturen unabhängig voneinander $OR^3$ oder $O_{1/2}$ - in einer Siloxanbindung, mit Reste A und/oder B, wie definiert, $R^3$ entspricht in den Siloxanoligomeren im Wesentlichen einem Alkyl-Rest, wie für $R^3$ definiert, wobei in vernetzten und/oder raumvernetzten Strukturen auch aus den Resten $OR^3$ jeweils unabhängig voneinander Siloxanbindungen mit $O_{1/2}$ gebildet werden können bzw. diese Reste unabhängig voneinander als $O_{1/2}$ vorliegen können und ggf. unabhängig mit $R^2$ und/oder $R^4$ und die wie definiert einem Alkyl-Rest mit 1 bis 15 C-Atomen entsprechen, mit $-OR^1$, $R^1$ unabhängig ein Alkyl-Rest mit 1 bis 4 C-Atomen.

Ebenfalls Gegenstand der Erfindung sind Zusammensetzungen umfassend

a) die Siloxanoligomere und mindestens eine Struktur der Formel I jeweils abgeleitet aus Alkoxysilanen der Formel II als olefinischen Rest A eine Vinyl-Gruppe aufweisen, wobei $R^1$ jeweils unabhängig voneinander einer Methyloder Ethyl-Gruppe entspricht, sowie optional deren Umesterungsprodukte,

b) die Siloxanoligomere und mindestens eine Struktur der Formel I jeweils abgeleitet aus Alkoxysilanen der Formel II als olefinischen Rest A eine Vinyl-Gruppe und abgeleitet aus Alkoxysilanen der Formel III als unsubstituierten Kohlenwasserstoff-Rest B eine Propyl-Gruppe aufweisen, wobei $R^1$ und $R^3$ jeweils unabhängig voneinander einer Methyl- oder Ethyl-Gruppe entsprechen, sowie optional deren Umesterungsprodukte oder

c) die Siloxanoligomere und mindestens eine Struktur der Formel I jeweils abgeleitet aus Alkoxysilanen der Formel II und Formel IV und optional der Formel III ausgewählt aus a) oder b) sind, wobei $R^3$ aus Formel IV abgeleitet jeweils unabhängig voneinander einer Methyl- oder Ethyl-Gruppe entspricht sowie optional deren Umesterungsprodukte.

Ebenfalls Gegenstand der Erfindung sind Verfahren, in denen in dem olefinisch funktionalisierten Alkoxysilanen der allgemeinen Formel II x gleich 0 ist und optional in dem mit einem gesättigten Kohlenwasserstoff-Rest funktionalisierten Alkoxysilan der Formel III y gleich 0 ist. Alternativ kann x = 0 und y = 1 sein oder x = 1 und y = 0.

Ebenso bevorzugte Zusammensetzung umfassen jeweils unabhängig Siloxanoligomere, insbesondere mit aus Alkoxysilanen abgeleiteten Strukturelementen, und optional mindestens einer Struktur der Formel I aus mindestens einem olefinisch funktionalisierten Alkoxysilan der allgemeinen Formel II, das ausgewählt ist aus Vinyltriethoxysilan, Vinyltrimethoxysilan, und optional aus Alkoxysilanen Formel III, wobei die Alkoxysilane der Formel III jeweils unabhängig ausgewählt sind aus Methyltriethoxysilan, Methyltrimethoxysilan, Ethyltriethoxysilan, Ethyltrimethoxysilan, Propyltriethoxysilan, Propyltrimethoxysilan, Butyltriethoxysilan, Butyltrimethoxysilan, n-Butyltriethoxysilan, n-Butyltrimethoxysilan, i-Butyltriethoxysilan, i-Butyltrimethoxysilan, Hexyltriethoxysilan, Hexyltrimethoxysilan, n-Hexyltriethoxysilan, n-Hexyltrimethoxysilan, iso-Hexyltriethoxysilan, iso-Hexyltrimethoxysilan, Octyltriethoxysilan, Octyltrimethoxysilan, n-Octyltriethoxysilan, n-Octyltrimethoxysilan, iso-Octyltriethoxysilan, iso-Octyltrimethoxysilan, Undecyltriethoxysilan, Undecyltrimethoxysilan, Decyltriethoxysilan, Decyltrimethoxysilan, Nonadecyltriethoxysilan, Nonadecyltrimethoxysilan, Dodecyltriethoxysilan, Dodecyltrimethoxysilan, $C_{13}H_{27}$-Triethoxysilan, $C_{13}H_{27}$-Trimethoxysilan, $C_{14}H_{29}$-Triethoxysilan, $C_{14}H_{29}$-Trimethoxysilan, $C_{15}H_{31}$-Trimethoxysilan, $C_{15}H_{31}$-Triethoxysilan, Hexadecyltriethoxysilan und Hexadecyltrimethoxysilan, Dimethyldimethoxysilan (DMDMO), Dimethyldiethoxysilan, Propylmethyldimethoxysilan, Propylmethyldiethoxysilan, n-Octyl-methyl-dimethoxysilan, n-Hexyl-methyl-dimethoxysilan, n-Hexyl-methyl-diethoxysilan, Propyl-methyl-diethoxysilan, Propyl-methyl-diethoxysilan, Cyclohexyl-triethoxysilan, n-Propyl-tri-n-butoxysilan, Hexadecylmethyldimethoxysilan und/oder Hexadecylmethyldiethoxysilan sowie Mischungen dieser Silane oder eine Mischung umfassend mindestens zwei der Silane sowie deren Umesterungsprodukten.

Weitere bevorzugte Zusammensetzung umfassen jeweils unabhängig Siloxanoligomere mit abgeleiteten Strukturelemente und optional mindestens eine Struktur der Formel I aus mindestens einem olefinisch funktionalisierten Alkoxysilan der allgemeinen Formel II, die ausgewählt sind aus Alkoxysilanen der Formel II mit einem olefinischen Rest A ausgewählt aus mindestens einer Allyl-, Butenyl-, 3-Butenyl-, Pentenyl-, Hexenyl-, Ethylhexenyl-, Heptenyl-, Octenyl-, Cyclohexenyl-C1 bis C8-alkylen-, Cyclohexenyl-2-ethylen-, 3'-Cyclohexenyl-2-ethylen-, Cyclohexadienyl-C1 bis C8-alkylen- und Cyclohexadienyl-2-ethylen-Gruppe, wobei $R^1$ jeweils unabhängig voneinander einer Methyl- oder Ethyl-Gruppe entspricht, oder aus mindestens einem vorgenannten olefinisch funktionalisierten Alkoxysilans der Formel II, wobei die Kombination eines Cyclohexenyl-2-ethylen- oder Cyclohexadienyl-2-ethylen-funktionalisierten Alkoxysilans der Formel II mit einem Alkoxysilan der Formel III besonders bevorzugt ist, das mindestesn eine Alkoxysilan der Formel III ist ausgewählt aus Methyltriethoxysilan, Methyltrimethoxysilan, Ethyltriethoxysilan, Ethyltrimethoxysilan, Propyltriethoxysilan, Propyltrimethoxysilan, Butyltriethoxysilan, Butyltrimethoxysilan, n-Butyltriethoxysilan, n-Butyltrimethoxysilan, i-Butyltriethoxysilan, i-Butyltrimethoxysilan, Hexyltriethoxysilan, Hexyltrimethoxysilan, n-Hexyltriethoxysilan, n-Hexyltrimethoxysilan, iso-Hexyltriethoxysilan, iso-Hexyltrimethoxysilan, Octyltriethoxysilan, Octyltrimethoxysilan, n-Octyltriethoxysilan, n-Octyltrimethoxysilan, iso-Octyltriethoxysilan, iso-Octyltrimethoxysilan, Undecyltriethoxysilan, Undecyltrimethoxysilan, Decyltriethoxysilan, Decyltrimethoxysilan, Nonadecyltriethoxysilan, Nonadecyltrimethoxysilan, Dodecyltriethoxysilan, Dodecyltrimethoxysilan, $C_{13}H_{27}$-Triethoxysilan, $C_{13}H_{27}$-Trimethoxysilan, $C_{14}H_{29}$-Triethoxysilan, $C_{14}H_{29}$-Trimethoxysilan, $C_{15}H_{31}$-Trimethoxysilan, $C_{15}H_{31}$-Triethoxysilan, Hexadecyltriethoxysilan und Hexadecyltrimethoxysilan sowie deren Umesterungsprodukten..

Gegenstand der Erfindung ist auch eine Zusammensetzung enthaltend olefinisch funktionalisierte Siloxanoligomere, insbesondere mindestens ein Siloxanoligomer gemäß der idealisierten Formel I, die als weitere Komponenten mindestens ein organisches Lösemittel, ein organisches Polymer, Wasser, Salz, Füllstoff, Additiv, Pigment oder eine Mischung mindestens zwei der genannten Komponenten enthält. Die Komponenten können während der Herstellung der Zusammensetzung als auch zu einem späteren Zeitpunkt der Zusammensetzung zugesetzt werden.

Ein besonderer Vorteil der erfindungsgemäßen Zusammensetzung liegt darin, dass sie herstellbedingt einen sehr geringen Gehalt an Chlorid aufweist und somit bei einer Verarbeitung in Kabelmassen zu einer erheblichen Verbesserung der Brandschutzeigenschaften führt. Somit ist ein wesentlicher Vorteil der Zusammensetzung, dass sie als Sumpfprodukt, ggf. nach Abtrennung des Hydrolysealkohols und ggf. zugesetzten Lösemittels, direkt in wirtschaftlicher Weise erfindungsgemäß verwendet werden kann. Ein weiterer Vorteil der erfindungsgemäßen Zusammensetzungen ist, dass eine Viskosität der Zusammensetzung von < 3000 mPa s zu einer vorteilhaft guten Verarbeitbarkeit der damit verarbeiteten Thermoplasten und Elastomeren im Extruder führt.

Ein besonderer Vorteil des erfindungsgemäßen Verfahrens zeigt sich in der Verwendung von Lösemitteln in Kombination mit sauren Hydrolyse- und/oder Kondensationskatalysatoren unter Bedingungen der homogenen Katalyse. Die erfindungsgemäß verwendeten sauren Katalysatoren sind in dem Lösemittel, den Alkoxysilanen und den hergestellten Siloxanoligomeren löslich. Zudem sind die Alkoxysilane als auch die Siloxanoligomere in dem Lösemittel löslich. Durch diese Maßnahmen wurde es erst jetzt möglich, ohne eine aufwendige Destillation besonders enge Molmassenverteilungen der Siloxanoligomere und zugleich hochreine und nahezu katalysatorfreie, Säurekatlysator freie, insbesondere Gesamtchlorid freie Zusammensetzungen der Siloxanoligomere als Sumpfprodukt zu gewinnen.

Über die Zugabe und/oder die zugegebenen Menge an Lösemittel, vorzugsweise Alkohol, wird zusammen mit sehr definierten Wassermenge das Molekulargewicht und die Molekulargewichtverteilung optimal eingestellt und auf diese Weise wird eine Bildung hochmolekularer Oligomere weitgehend vermieden. Die unerwünschten höhermolekularen Oligomere werden nur mit einem geringen Gehalt gebildet.

Ein weiterer Aspekt der erfindungsgemäßen Zusammensetzung und des erfindungsgemäßen Verfahrens ist, dass das Verfahren ohne eine Verwendung basischer Katalysatoren, insbesondere Stickstoff enthaltender Verbindungen, oder sauren Schwefel enthaltenden Ionentauschern auskommt. Beide Katalysatoren führen zu Bedingungen der heterogenen Katalyse. So führt beispielsweise wässriger Ammoniak zur Bildung von Emulsionen und auch die Umsetzung an Sulfonsäure- oder Schwefelsäure-Gruppen aufweisenden Ionentauschern bedingen Bedingungen einer heterogenen Katalyse. Es wurde festgestellt, dass die Bedingungen einer heterogenen Katalyse zur Herstellung der gewünschten engen Molmassenverteilung von Siloxanoligomeren nicht geeignet sind. Folglich sind die erfindungsgemäßen Zusammensetzungen frei von sauren Schwefel enthaltenden Gruppen, insbesondere Schwefelsäure- oder Sulfonsäure-Gruppen und/oder frei von Stickstoff enthaltenden Verbindungen, insbesondere von Stickstoff enthaltenden Verbindungen, die über basische Katalysatoren eingetragen werden. Ebenso kann in dem erfindungsgemäßen Verfahren auf die Verwendung von Metalloxiden in Kombination mit einer Säure verzichtet werden, daher sind die erfindungsgemäßen Zusammensetzungen frei von metallischen Rückständen, die durch die Zugabe von Metalloxiden eingetragen werden, wie insbesondere Kupferoxide, Eisenoxide, Aluminiumoxide, Kupferhalogenide, Eisenhalogenide, Kupferhydroxid, Eisenhydroxid, Aluminiumhydroxid. Erfindungsgemäße Zusammensetzungen weisen daher vorzugsweise nur intrinsisch vorkommende Metalle auf, bevorzugt ist der Metallgehalt kleiner 0,001 Gew.-% bis 0,1 ppm-Gew. Entsprechend kann in dem erfindungsgemäßen Verfahren auf die Zugabe von basischen Verbindungen, wie Calciumcarbonat zur Neutralisation verzichtet werden. Folglich enthalten die erfindungsgemäßen Zusammensetzungen kein zusätzlich zugesetztes Calcium, vorzugsweise enthalten sie kleiner gleich 1 Gew.-%, insbesondere kleiner gleich 0,1 Gew.-% bis 0,1 ppm-Gew. Calcium. Somit sind die Zusammensetzungen und Verfahren frei von Stickstoff enthaltenden Verbindungen, Calcium enthaltenden Verbindungen, frei von Metall enthaltenden Verbindungen, insbesondere Metalloxide, und frei von Schwefel enthaltenden Verbindungen, insbesondere frei von sauren schwefelhaltigen Verbindungen.

Erfindungsgemäße Zusammensetzungen olefinisch funktionalisierter Siloxanoligomere weisen einen Gehalt an Alkohol in Bezug auf die Zusammensetzung, vorzugsweise an freiem Alkohol, von unter 2 Gew.-% bis 0,0001 Gew.-% auf, insbesondere unter 1,8 Gew.-%, bevorzugt unter 1,5 Gew.-%, weiter bevorzugt unter 1,0 Gew.-%, besonders bevorzugt unter 0,5 Gew.-% bis zur Nachweisgrenze. Dabei weist eine Zusammensetzung diesen geringen Gehalt an Alkohol, vorzugsweise freien Alkohol, über mindestens 3 Monate, vorzugweise über einen Zeitraum von 6 Monaten auf. Diese geringen Gehalte an VOC können durch das erfindungsgemäße Verfahren sichergestellt werden, das besonders Chlor arme Zusammensetzungen von Siloxanoligomeren mit geringem Alkoxygehalt bereitstellt.

Ebenfalls Gegenstand der Erfindung ist ein Verfahren zur Herstellung einer Zusammensetzung enthaltend olefinisch funktionalisierte Siloxanoligomere, sowie insbesondere auch Zusammensetzungen erhältlich nach diesem Verfahren, indem

(i) (mindestens) ein olefinisch funktionalisiertes Alkoxysilan der allgemeinen Formel II,

$$A\text{-}Si(R^2)_x(OR^1)_{3-x} \qquad (II),$$

wobei in Formel II A einem olefinischen Rest entspricht, der insbesondere ausgewählt ist aus einer linearen, verzweigten oder cyclischen Alkenyl- oder Cycloalkenyl-alkylen-funktionellen Gruppe mit jeweils 2 bis 16 C-Atomen, $R^2$ unabhängig einem linearen, verzweigten oder cyclischen Alkyl-Rest mit 1 bis 15 C-Atomen und x gleich 0 oder 1 und $R^1$ unabhängig einem linearen, verzweigten und/oder cyclischen Alkyl-Rest mit 1 bis 4 C-Atomen entsprechen, insbesondere mit x gleich 0,

(ii) in Gegenwart eines sauren Hydrolyse- und/oder Kondensationskatalysators, insbesondere von HCl, gesättigten oder ungesättigten organischen Säuren, wie Ameisensäure, Essigsäure, und/oder Fettsäuren, z. B. Myristinsäure, und/oder multifunktionelle organische Säuren, wie Zitronensäure, Fumarsäure,

(i.1) optional mit (mindestens) einem Alkoxysilan der Formel III,

$$B\text{-}Si(R^4)_y(OR^3)_{3-y} \qquad (III),$$

wobei in Formel III B einem gesättigten Kohlenwasserstoff-Rest insbesondere einem gesättigten Kohlenwasserstoff-Rest entspricht, der ausgewählt ist aus einem linearen, verzweigten oder cyclischen Alkyl-Rest mit 1 bis 16 C-Atomen, $R^3$ jeweils unabhängig voneinander einem linearen, verzweigten oder cyclischen Alkyl-Rest mit 1 bis 4 C-Atomen und $R^4$ einem linearen, verzweigten oder cyclischen Alkyl-Rest mit 1 bis 15 C-Atomen entsprechen und y gleich 0 oder 1 ist, insbesondere ist y gleich 0, und

(i.2) optional mit (mindestens) einem Tetraalkoxysilan der Formel IV, wobei in Formel IV $R^3$ jeweils unabhängig voneinander ein linearer, verzweigter und/oder cyclischer Alkyl-Rest mit 1 bis 4 C-Atomen ist,

$$Si(OR^3)_4 \qquad (IV),$$

(iii) mit Wasser in einem definierten molaren Verhältnis von Wasser zu Alkoxy-Gruppen der Alkoxysilane von 1 : 2,75 bis 1 : 5,0, besonders bevorzugt 1 : 2,75 bis 1: 4,5, 1 : 3,0 bis 1 : 4,5 oder 1 : 3,0 bis 1 : 4,25, weiter bevorzugt 1 : 3,5 bis 1 : 4,25, optional in Gegenwart eines Lösemittels, vorzugsweise in Gegenwart (mindestens) eines Alkohols als Lösemittel, zu den Siloxanoligomeren umgesetzt werden, insbesondere mit x = 0 und y = 0 in Formel II und III, und

(iv) der Hydrolysealkohol und das gegebenenfalls vorliegende Lösemittel im Wesentlichen abgetrennt werden, und insbesondere

(v) die Zusammensetzung enthaltend olefinisch funktionalisierte Siloxanoligomere im Anschluss an Schritt (iv) als Sumpfprodukt gewonnen wird.

Zweckmäßig kann in (iii) auch Wasser in einem definierten molaren Verhältnis von Wasser zu Alkoxy-Gruppen der Alkoxysilane von 1 : 2 bis 1 : 6, insbesondere 1 : 2,5 bis 1 : 5,5 eingesetzt werden.

Dabei wurde überraschenderweise auch gefunden, dass der bei der Umsetzung entstehende Hydrolysealkohol gegenüber flüchtigen Katalysatoren, wie u. a. HCl, Ameisensäure, Essigsäure, als Schleppmittel fungiert, diese so bei einer destillativen Abtrennung des Hydrolysealkohols zumindest anteilig, bevorzugt nahezu vollständig, aus dem System ausgetragen werden und dadurch vorteilhaft auf eine zusätzliche und aufwändige Destillation zur Gewinnung des Endprodukts verzichtet werden kann. Mit besonders hoher Reinheit gelingt dies mit bei Raumtemperatur gasförmigen Katalysatoren, die in den Lösemitten gut löslich sind, wie HCl.

So kann beim erfindungsgemäßen Verfahren vorteilhaft in (v) eine erfindungsgemäße Zusammensetzung enthaltend olefinisch funktionalisierte Siloxanoligomere im Anschluss an Schritt (iv) direkt als Sumpfprodukt erhalten bzw. gewonnen werden, besonders vorteilhaft, da beim erfindungsgemäßen Verfahren in wirtschaftlicher Weise auf eine aufwändige, zusätzliche Destillation des Produkts verzichtet werden kann und trotzdem eine ausgezeichnete Produktqualität erhalten wird.

Dabei wird insbesondere eine Zusammensetzung enthaltend ein Siloxanoligomer mit einem Gehalt an Rückständen des bei der Herstellung eingesetzten Säurekatalysators, wie Chlor, insbesondere Gesamtchlorid, kleiner gleich 250 mg/kg, insbesondere kleiner gleich 150 mg/kg, bevorzugt kleiner gleich 100 mg/kg, besonders bevorzugt kleiner gleich 75 mg/kg, weiter bevorzugt kleiner gleich 50 mg/kg, insbesondere kleiner gleich 35 mg/kg, wobei vorzugsweise der Gehalt an hydrolysierbarem Chlorid kleiner 8 mg/kg, vorzugsweise kleiner gleich 5 mg/kg ist, und/oder vorzugsweise (vi) die Silizium-Atome, insbesondere die Gesamtsumme an Silizium-Atomen, im Siloxanoligomer, vorzugsweise die Strukturelemente $[(R^1O)_{1-x}(R^2)_xSi(A)O]_a$, $[Si(B)(R^4)_y(OR^3)_{1-y}O]_b$ und/oder $[Si(Y)_2O]_c$ der Formel I zusammen in Bezug auf alle Silizium Atome der allgemeinen Formel I, von kleiner gleich 80 % bis größer gleich 30 %, insbesondere größer gleich 35 %, als M-Struktur vorliegen, mit einem Gewichtsmittel des Molekulargewichts (Mw) des Siloxanoligomers von größer gleich 315 g/mol erhalten, insbesondere mit einem Mw von 315 bis 850 g/mol, bevorzugt von 315 bis 800 g/mol, besonders bevorzugt von 315 bis 750 g/mol, wobei insbesondere jeweils die Polydispersität als Quotient aus Mw/Mn bei 1,05 bis 1,25, besonders bevorzugt bei 1,05 bis 1,18 liegt.

Gemäß einer Alternative wird in (i) mindestens ein Alkoxysilan der Formel II und optional deren Umesterungsprodukte in (ii) in Gegenwart eines sauren Hydrolyse- und/oder Kondensationskatalysators (iii) mit Wasser in einem definierten molaren Verhältnis, wie vorstehend beschrieben, umgesetzt, (iv) der Hydrolysealkol und das optional vorliegende Lösemittel werden im Wesentlichen abgetrennt und die Zusammensetzung wird im Anschluss an Schritt (iv) als Sumpfprodukt gewonnen.

Gemäß einer zweiten Alternative wird in (i) mindestens ein Alkoxysilan der Formel II mit (i.1) mindestens einem Alkoxysilan der Formel III und optional jeweils unabhängig deren Umesterungsprodukte in (ii) in Gegenwart eines sauren Hydrolyse- und/oder Kondensationskatalysators (iii) mit Wasser in einem definierten molaren Verhältnis, wie vorstehend beschrieben, umgesetzt, (iv) der Hydrolysealkol und das optional vorliegende Lösemittel werden im Wesentlichen abgetrennt und die Zusammensetzung wird im Anschluss an Schritt (iv) als Sumpfprodukt gewonnen.

Gemäß einer dritten Alternative wird in (i) mindestens ein Alkoxysilan der Formel II mit (i.2) mindestens einem Alkoxysilan der Formel IV und optional mit (i.1) mindestens einem Alkoxysilan der Formel III, sowie optional jeweils unabhängig deren Umesterungsprodukte, in (ii) in Gegenwart eines sauren Hydrolyse- und/oder Kondensationskatalysators (iii) mit Wasser in einem definierten molaren Verhältnis, wie vorstehend beschrieben, umgesetzt, (iv) der Hydrolysealkol und das optional vorliegende Lösemittel werden im Wesentlichen abgetrennt und die Zusammensetzung wird im Anschluss an Schritt (iv) als Sumpfprodukt gewonnen.

Gemäß einer Alternativ kann auch mit Wasser in einem definierten molaren Verhältnis von Wasser zu Alkoxy-Gruppen von 1 : 2 bis 1 : 6, insbesondere 1 : 2,5 bis 1 : 5,5 umgesetzt werden.

Vorzugsweise sind das Gewichtsmittel des Molekulargewichts (Mw) größer gleich 420 g/mol und das Zahlenmittel des Molekulargewichts (Mn) größer gleich 400 g/mol bei den Siloxanoligomeren, wobei die Polydispersität als Quotient aus Mw/Mn bei 1,05 bis 1,25, besonders bevorzugt bei 1,05 bis 1,18 liegt. Wobei besonders bevorzugt größer gleich 90 % (Flächen-%, GPC) ein Molekulargewicht kleiner gleich 1000 g/mol aufweisen.

Besonders bevorzugt wird im erfindungsgemäßen Verfahren ein Alkoxysilan der Formel II oder Alkoxysilane der Formeln II und III, jeweils gegebenenfalls in Gegenwart eines Alkoxysilans der Formel IV, mit Wasser in einem definierten molaren Verhältnis von Wasser zu Alkoxy-Gruppen der Alkoxysilane von 1 : 2,5 bis 1 : 5,5, bevorzugt von 1 : 2,75 bis 1 : 5,0, besonders bevorzugt von 1 : 2,75 bis 1 : 4,5, alternativ besonders bevorzugt von 1 : 3,0 bis 1 : 4, weiter bevorzugt 1 : 3,5 bis 1 : 4,25 zu den Siloxanoligomeren umgesetzt. Weiter bevorzugt sind x und y gleich 0.

Gemäß einer bevorzugten Ausführungsform wird ein Alkenyl-funktionalisiertes Alkoxysilan der allgemeinen Formel II gegebenenfalls zusammen mit einem Alkylalkoxysilan der allgemeinen Formel III in Gegenwart eines Kondensationskatalysators umgesetzt. Weiter bevorzugt werden jeweils ein Alkenyltrialkoxysilan und gegebenenfalls ein Alkyltrialkoxysilan umgesetzt. Die Umsetzung kann optional in Gegenwart eines Lösemittels erfolgen, vorzugsweise wird der korrespondierende Alkohol des Alkoxysilans eingesetzt. Besonders vorteilhaft können in dem erfindungsgemäßen Verfahren pro Volumeneinheit Alkoxysilan, insbesondere Trialkoxysilan, 0,001 bis 5 Volumeneinheiten des korrespondierenden Alkohols eingesetzt werden. Weiter bevorzugt werden 0,5 bis 2,5 Volumeneinheiten je Volumeneinheit Trialkoxysilan eingesetzt.

Das eingesetzte Lösemittel und/oder der eingesetzte Alkohol sind wasserfrei, insbesondere werden das Lösemittel oder der Alkohol mit einem Wassergehalt von kleiner 1 Gew.-ppm eingesetzt. Bei Lösemitteln mit einem Gehalt an Wasser ist dieser Wassergehalt bei der Umsetzung zu berücksichtigen.

Vorzugsweise wird als olefinisch- funktionalisiertes Alkoxysilan ein Silan der allgemeinen Formel II eingesetzt,

$$A\text{-}Si(R^2)_x(OR^1)_{3\text{-}x} \qquad (II)$$

mit A gleich eine lineare, verzweigte oder cyclische Alkenyl- oder Cycloalkenyl-alkylen-funktionelle Gruppe mit jeweils 2 bis 18 C-Atomen, insbesondere mit 2 bis 16 C-Atomen, bevorzugt mit 2 bis 8 C-Atomen alternativ mit 2 bis 6 C-Atomen, weiter bevorzugt eine Alkenyl-Gruppe mit ein bis zwei Doppelbindungen, besonders bevorzugt jeweils unabhängig ausgewählt aus einer Vinyl-, Allyl-, Butenyl-, Pentenyl-, Hexenyl-, Ethylhexenyl-, Heptenyl-, Octenyl- und Cyclohexenyl-C1 bis C8-alkylenGruppe, vorzugsweise Cyclohexenyl-2-ethylen-, wie 3'-Cyclohexenyl-2-ethylen- oder Cyclohexadienyl-C1 bis C8-alkylen-, besonders vorzugsweise eine Cyclohexadienyl-2-ethylen-Gruppe, insbesondere ist x gleich 0, und $R^1$ unabhängig ausgewählt aus Methyl-, Ethyl- oder Propyl-Gruppe. Besonders bevorzugt sind die Vinyl-, Cyclohexenyl-2-ethylen-, 3'-Cyclohexenyl-2-ethylen- und Cyclohexadienyl-C1 bis C8-alkylen-Gruppen.

Als Alkoxysilan der Formel III wird vorzugsweise ein Alkoxysilan mit einem unsubstituierten Kohlenwasserstoff-Rest B,

$$B\text{-}Si(R^4)_y(OR^3)_{3\text{-}y} \qquad (III),$$

eingesetzt, der ausgewählt ist aus einer Methyl-, Ethyl-, Propyl- , Butyl-, i-Butyl-, Octyl-, Butyl-, n-Butyl-, tert-Butyl, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, n-Octyl-, iso-Octyl-, Nonyl-, Decyl-, Undecyl- Dodecyl-, $C_{13}H_{27}$-, $C_{14}H_{29}$-, $C_{15}H_{31}$- und Hexadecyl-Gruppe und $R^3$ einer Methyl-, Ethyl- oder Propyl-Gruppe und y gleich 0 oder 1 sind. Besonders bevorzugt ist B ausgewählt aus einer Methyl-, Ethyl-, Propyl-, i-Butyl-, Octyl- und Hexadecyl-Gruppe. Und $R^2$ und $R^4$ können unabhängig voneinander in Formel II und III vorzugsweise Methyl-, Ethyl-, Propyl-, Butyl, Pentyl, Hexyl-, Cyclohexyl-, Heptyl-, Octyl-, Nonyl- sowie weitere vorgenannte Alkyl-Gruppen sowie dem Fachmann bekannte Alkyl-Gruppen mitsamt den Strukturisomeren sein.

Gemäß einer alternativen bevorzugten Ausführungsform werden als Rest B unsubstituierte Kohlenwasserstoffe mit verzweigten und/oder cyclischen Alkylresten mit 3 bis 16 C-Atomen eingesetzt. Gemäß einer weiteren bevorzugten Alternative der Erfindung werden lineare Alkyl-Reste mit 1 bis 6 C-Atomen als unsubstituierter Kohlenwasserstoff-Rest B eingesetzt.

Zumindest wird partiell hydrolysiert und, insbesondere zumindest partiell cokondensiert, bevorzugt werden die kondensationsfähigen, partiell hydrolysierten Alkoxysilane im Wesentlichen vollständig kondensiert. Besonders bevorzugt findet nur in dem Maße eine partielle Hydrolyse und Kondensation statt, wie dies zur Herstellung der Oligomere eines bevorzugten Oligomerisierungsgrades gewünscht ist. Erfindungsgemäß wird das Verfahren satzweise durchgeführt.

Die erhaltene Zusammensetzung ist im Wesentlichen frei von Lösemitteln, wie Alkoholen. Dazu wird erfindungsgemäß der Hydrolysealkohol entfernt, vorzugsweise durch Destillation und die erfindungsgemäße Zusammensetzung erhalten. Eine besonders schonende Destillation des Hydrolysealkohols bzw. des Lösemittels findet unter Vakuum statt. Je nach Verfahrensführung kann ein besonders wirtschaftliches Verfahren ohne den Zusatz eines Lösemittels durchgeführt werden. Erfindungsgemäß muss die so hergestellte Zusammensetzung nach Entfernung des Hydrolysealkohols und ggf. Lösemittels selbst nicht weiter aufgereinigt, insbesondere nicht selbst destilliert, werden, um für die erfindungsgemäßen Verwendungen geeignet zu sein. Je nach Aufbereitung kann die Zusammensetzung nach Entfernung des Hydrolysealkohols ggf. filtriert oder dekantiert werden. Daher ist das erfindungsgemäße Verfahren deutlich wirtschaftlicher als bekannte Verfahren, in denen das Oligomer, um zur weiteren Anwendung geeignet zu sein, destillativ aufgereinigt werden muss.

Gemäß dem erfindungsgemäßen Verfahren wird eine Zusammensetzung umfassend Siloxanoligomere erhalten, die nach Durchführung der Schritte i, ii, iii, iv sowie optional v, gegebenenfalls mit (i.1) und/oder (i.2), bereits den erfindungsgemäßen geringen Gehalt an Chlor, insbesondere Gehalt an Gesamtchlorid, kleiner gleich 250 mg/kg aufweist, insbesondere kleiner gleich 150 mg/kg, bevorzugt kleiner gleich 100 mg/kg, besonders bevorzugt kleiner gleich 75 mg/kg, weiter bevorzugt kleiner gleich 50 mg/kg, insbesondere kleiner gleich 35 mg/kg, wobei vorzugsweise der Gehalt an hydrolysierbarem Chlorid kleiner 8 mg/kg, vorzugsweise kleiner gleich 5 mg/kg ist, und/oder als Gewichtsmittel des Molekulargewichts (Mw) größer 315 g/mol aufweist.

Für die Umsetzung in Gegenwart eines definierten molaren Verhältnisses von Wasser zu Alkoxy-Gruppen der Alkoxysilan von 1 : 2,75 bis 1 : 5,0 sind alle Zwischenwerte bis zur zweiten Nachkommastelle für die erfindungsgemäße Umsetzung geeignet und die Zwischenwerte 1 : 2,2; 1 : 2,4; 1 : 2,6; 1 : 2,8; 1 : 3,0, 1 : 3,2; 1 : 3,4; 1 : 3,6; 1 : 3,8; 1 : 4,0; 1 : 4,2; 1 :4,4 ; 1 : 4,6; 1 : 4,8; 1 : 5,0; 1 : 5,2; 1 : 5,4; 1 : 5,6; 1 : 5,8; 1 : 5,8 sowie alle Zwischenwerte plus/minus 0,1 von 1 : 2,0 bis 1 : 6 offenbart, vorzugsweise 1 : 3,0 bis 1 : 4,5. Zweckmäßig 1 : 2 bis 1: 6.

Das Wasser ist vorzugsweise vollentsalzt. Dem Fachmann ist dabei klar, dass das Wasser sowohl vorgelegt, portionsweise, kontinuierlich oder zusammen mit einem oder allen Silanen dem Verfahren zugesetzt werden kann. Bevorzugt wird das Wasser kontinuierlich oder mit mindestens einer Unterbrechung über einen Zeitraum von kleiner 1 Minute bis 100 Minuten dosiert und die Umsetzung der Alkoxysilane vorzugsweise bei Reaktionstemperaturen im Bereich vorzugsweise 20 bis 80 °C, oder von 40 °C bis 80 °C, weiter bevorzugt im Bereich von 50 bis 80 °C, insbesondere bei einem pH kleiner 7 durchgeführt. Die Wassergehalte von zugesetzten Lösemitteln, wie Alkohol sind in dem Verfahren als Wasser zu berücksichtigen.

Generell kann das Wasser oder eine Wassermenge, gemäß Punkt (iii) des vorliegenden Verfahrens, kontinuierlich oder mindestens mit einer Unterbrechung über einen Zeitraum von 1 bis 1000 Minuten zudosiert werden und eine Temperatur im Reaktionsgemisch von 5 bis 90 °C eingestellt werden, insbesondere von 20 bis 90 °C oder von 37 bis 90 °C, vorzugsweise 40 bis 90 °C, besonders bevorzugt bei 50 bis 90 °C, weiter bevorzugt von 50 bis 80 °C, wobei vorzugsweise der pH-Wert unter 7 liegt, gegebenenfalls wird das Wasser zusammen mit dem Katalysator und gegebenenfalls einem Lösemittel, insbesondere mit einem Alkohol, zugegeben. Die Umsetzung kann dann vorzugsweise so erfolgen, dass diese Mischung (Reaktionsgemisch) gegebenenfalls für mindestens 10 Minuten bis 36 Stunden, insbesondere von 10 Minuten bis 8 Stunden, von 5 bis 80 °C, bevorzugt von 40 bis 80 °C behandelt wird bzw. weiter umgesetzt wird, bevorzugt unter Durchmischung, gegebenenfalls kann die Reaktionsmischung auch beim Abkühlen nachreagieren. Die so erhaltene Zusammensetzung kann dann dekantiert oder zur destillativen Entfernung des Alkohols, wie des Hydrolysealkohols, erwärmt werden. Vorzugsweise wird aus diesem Rohprodukt der Alkohol, optional einschließlich Katalysator, insbesondere HCl, unter Erwärmen und vermindertem Druck durch Destillation entfernt. Die erhaltene, erfindungsgemäße Zusammensetzung selbst wird nicht destilliert.

Nach einer optionalen Ausführungsform wird in dem Verfahren gemäß Punkt iv der Hydrolysealkohol und das vorliegende Lösemittel, insbesondere der als Verdünnungsmittel zugesetzte Alkohol, destillativ abgetrennt und vorteilhaft mindestens einmal, vorzugsweise zwei bis sechsmal, während der destillativen Aufarbeitung eine definierte Menge Alkohol zugegeben und/oder vor oder während der destillativen Abtrennung des Hydrolysealkohols und ggf. Löse- bzw. Verdünnungsmittels zugegeben, insbesondere des Alkohols.

Es kann zweckmäßig sein ein definierte Menge eines Reduktionsmittels, insbesondere eines anorganischen Reduktionsmittels, wie Alkalimetall, Erdalkalimetall, Aluminium oder ein Metallhydrid, oder eine Base, wie vorzugsweise HMDS oder ein anderes Amin oder ein Alkalialkoholat, zugesetzt, und nachfolgend wird das olefinisch funktionalisierte Siloxanoligomer, das als Sumpfprodukt vorliegt, vorteilhaft filtriert oder dekantiert und/oder das olefinische Siloxanoligomer wird mit einem Ionentauscher in Kontakt gebracht. Gemäß der ersten Alternative können durch das Filtrieren und/oder Dekantieren gebildete Niederschläge oder Ausflockungen im Wesentlichen von der Zusammensetzung umfassend das Siloxanoligomer abgetrennt werden. Bevorzugt wird eine definierte Menge eines Reduktionsmittels zugesetzt, insbesondere eines anorganischen Reduktionsmittels, besonders bevorzugt eines metallischen Reduktionsmittels, wie Alkalimetall, bevorzugt Natrium, oder als Erdalkalimetall, bevorzugt Magnesium oder Calcium, oder Aluminium, und als Metallhydrid, bevorzugt Li-Aluminiumhydrid, Aluminiumhydrid, oder als Base vorzugsweise Ammoniakgas, Li-Diisopropylamid (LDA), Li-Isopropylhexylamid, Hexamethyldisilazan (HMDS), und als Alkalialkoholat, wie Na- bzw. K-Methanolat oder Na- bzw. K-Ethanolat, Alkalialkylat, wie Butyl-Li, eingesetzt. Auch dem Fachmann bekannte Metallhydride, wie NaH oder auch Lithiumaluminiumhydrid (LAH) oder Basen, die mit dem Hydrogenchlorid (HCl) schwerlösliche Niederschläge bilden, können in dem Verfahren zusätzlich eingesetzt werden, um den Chlor(id)gehalt der Zusammensetzung weiter zu senken. Für das Verfahren geeignete Basen sollten bei einer Reaktion mit dem Katalysator, beispielsweise HCl, oder mit organisch gebundenem Chlor, wie bei Chloralkylsilanen, kein Wasser bilden.

Der bereits vorhandene und/oder bei der Umsetzung entstandene Alkohol wird in allen erfindungsgemäßen Verfahrensvarianten im Wesentlichen, bevorzugt vollständig, aus dem Reaktionsgemisch entfernt. Die destillative Abtrennung des Alkohols wird vorzugsweise unter vermindertem Druck durchgeführt. Die destillative Entfernung des Alkohols wird vorzugsweise solange durchgeführt, bis im Kopf der Kolonne eine Temperatur erreicht ist, die der Siedetemperatur von Wasser oder der der Siloxanoligomere entspricht. Alternativ, bis ein Alkoholgehalt von kleiner 1,0 Gew.-%, bevorzugt kleiner gleich 0,5 Gew.-% nachgewiesen wird bzw. bis hin zur aktuellen analytischen Nachweisgrenze. In der Regel ist die resultierende erfindungsgemäße Zusammensetzung dann im Wesentlichen lösemittelfrei, insbesondere alkoholfrei. Die so erhaltene Zusammensetzung entspricht bevorzugt direkt der erfindungsgemäßen Zusammensetzung, und muss vorzugsweise nicht selbst weiter aufgereinigt werde.

Erfindungsgemäß wird der Alkohol, insbesondere sowohl der Hydrolysealkohol als auch der gegebenenfalls zugesetzte Alkohol, im Wesentlichen vollständig entfernt. Der Hydrolyse- und/oder der zugesetzte Alkohol entsprechen dem freien Alkohol. Besonders bevorzugt ist der Gehalt an freiem Alkohol in der Gesamtzusammensetzung kleiner gleich 2 Gew.-% bis 0,01 Gew.-%, insbesondere kleiner gleich 1,5 Gew.-% bis 0,01 Gew.-%, besonders bevorzugt kleiner gleich 1 Gew.-% bis 0,01 Gew.-% insbesondere bis hin zur Nachweisgrenze.

Das erfindungsgemäße Verfahren wird bevorzugt diskontinuierlich betrieben werden, kann aber auch kontinuierlich durchgeführt werden. Vor oder auch nach dem Entfernen des Alkohols kann der Zusammensetzung mindestens ein Verarbeitungshilfsmittel wie Silikonöl, wie Polydimethylsiloxan, Paraffin, Paraffinöl oder eine Mischung enthaltend eines dieser Verarbeitungshilfsmittel zugesetzt werden.

Nach einer bevorzugten Variante des Verfahrens werden die Alkoxysilane der allgemeinen Formeln II, III und/oder IV in Gegenwart eines sauren Katalysators, insbesondere mit Chlorwasserstoff, zumindest partiell hydrolysiert und kondensiert. Die Hydrolyse- und Kondensation kann bei Bedarf auch in Gegenwart von HCl und einem Co-Katalysator erfolgen. Als Co-Katalysatoren kommen Fettsäuren in Betracht. Alternativ können auch HCl und gesättigte oder ungesättigte organische Säuren, wie Ameisensäure, Essigsäure und/oder Fettsäuren, wie zum Beispiel Myristinsäure, und/oder multifunktionelle organische Säuren, wie Zitronensäure, Fumarsäure, als Katalysator oder als Co-Katalysator mit HCl eingesetzt werden.

Bei einer besonders bevorzugen Ausführungsform des erfindungsgemäßen Verfahrens können das Silan der Formel II und das Silan der Formel III vorteilhaft in einem molaren Verhältnis von 1 : 1 mit jeweils plus/minus 0,5, von 0,5 : 1,5 bis 1,5 : 0,5, eingesetzt werden, wobei insbesondere auch die jeweils dazwischen liegenden Zahlwerte 0,6; 0,7; 0,8; 0,9; 1,1; 1,2; 1,3 sowie 1,4 nicht ungenannt bleiben sollen.

Bevorzugte Alkohole entsprechen dem Hydrolysealkohol, der durch die zumindest teilweise Hydrolyse- und/oder Kondensation entsteht. Zu nennen sind Ethanol oder Methanol. Dem Fachmann ist klar, dass die Umsetzung auch in Gegenwart eines anderen üblichen Lösemittels erfolgen kann, wobei jene, die sich leicht und vorzugsweise vollständig abdestillieren lassen bevorzugt sind, dies können beispielsweise aber nicht abschließend Ether, Ketone, Kohlenwasserstoffe oder Ester sein. Zweckmäßige Lösemittel können aber auch Essigester, THF, Ketone, Ether oder Kohlenwasserstoffe sein. Dem Fachmann ist klar, dass aus ökonomischen und wirtschaftlichen Gründen als Lösemittel ein Alkohol eingesetzt wird, der sich auch als Hydrolysealkohol bildet. Mischungen von Alkoholen können daher grundsätzlich auch eingesetzt werden. In allen Verfahrensvarianten werden vorzugsweise das Lösemittel und der bei der Umsetzung entstandene Alkohol destillativ aus dem Reaktionsgemisch entfernt.

In dem erfindungsgemäßen Verfahren wird vorzugsweise die Viskosität der Zusammensetzung auf kleiner gleich 3.000 mPa s, insbesondere auf kleiner gleich 1000 mPa s, bevorzugt auf kleiner gleich 500 mPa s bis etwa um 10 mPa s, besonders bevorzugt auf etwa 1 bis 5 mPa s oder 3 bis 6 mPa s eingestellt, mit einer Schwankungsbreite von plus/minus 0,5 mPa s.

Weiter kann in dem Verfahren die Zusammensetzung enthaltend olefinische Siloxanoligomere, insbesondere das Sumpfprodukt, vorzugsweise nach der destillativen Entfernung des Lösemittels und/oder Alkohols mit einem Ionentauscher in Kontakt gebracht werden, insbesondere einem Anionentauscher, vorzugsweise einem Amin-funktionellen Ionentauscher, um den Chloridgehalt weiter zu reduzieren. Vorteilhaft, ist bei diesem Verfahrensschritt, dass sich durch diese Maßnahme, anders als bei einer Destillation, der Oligomerisierungs- und/oder Verzweigungsgrad des Produktes nicht verändert. Bei einer Destillation würde zwangsläufig eine Auftrennung des Siloxanoligomers in Leicht-, Mittel- und Schwersieder (Sumpf) erfolgen. Durch den erfindungsgemäßen Einsatz des Ionentauschers bleibt der Oligomerisierungsgrad der Siloxanoligomere gleich und der Chloridgehalt kann weiter abgesenkt werden.

Bevorzugt kann durch das Inkontaktbringen mit einem Ionentauscher, insbesondere einem basische Anionenaustauscher, der Chlorid Gehalt bzw. der Gehalt an Chlor in Gew.-ppm der olefinischen Siloxanoligomere um mindestens 80 % in Bezug auf die, dem Iontauscher zugeführten Siloxanoligomere vermindert werden. Weiter bevorzugt ist der Gehalt an Chlor in Gew.-ppm der olefinischen Siloxanoligomere in Bezug auf die zugeführten um mindestens 85 %, bevorzugt um mindestens 90 %, besonders bevorzugt mindestens um 92 %, insbesondere mindestens um 95 %, und weiter bevorzugt um mindestens 98 % vermindert. Je nach olefinisch funktionalisiertem Siloxanoligomer und in Abhängigkeit von der Ausgangskonzentration an Chlor, der Fliessgeschwindigkeit und der Kontaktzeit mit dem Anionenaustauscher kann der Gehalt an Chlor vorzugsweise auf unter 100 mg/kg gesenkt werden, vorzugsweise auf unter 50 mg/kg, weiter bevorzugt auf unter 25 mg/kg.

Bei olefinisch funktionalisierten Siloxanoligomeren mit einem Gehalt an Chlor, mit hydrolysierbarem Chlor, insbesondere chlorfunktionelle Alkylalkoxysilane und/oder Alkylalkoxysilane mit HCl, kann der Gehalt an hydrolysierbarem Chlorid vorzugsweise bei Fließgeschwindigkeiten von 0,01 m/h bis 15 m/h, vorzugsweise bis zu 5 m/h, insbesondere bei bis zu 2,5 m/h, um mindestens 80 %, insbesondere um mindestens 85 %, bevorzugt um mindestens 90 %, besonders bevorzugt mindestens um 92 %, insbesondere mindestens um 95 %, und weiter bevorzugt um mindestens 98 % reduziert werden, dabei werden insbesondere die olefinisch funktionalisierten Siloxanoligomere nicht weiter kondensiert, und wobei vorzugsweise die Anionenaustauschersäule einen Durchmesser von 3 cm und eine Höhe von 15 cm aufweist. Sehr gute Ergebnisse einer Verminderung an hydrolysierbarem Chlor von bis zu 80% werden auch bei Fließgeschwindigkeiten von bis zu 10 m/h erzielt.

Im erfindungsgemäßen Verfahren weist der Anionenaustauscher ein Trägerpolymer mit quartären Alkylammonium-Gruppen und/oder mit tertiären Dialkylamino-Gruppen auf, wobei insbesondere die quartären Alkylammonium-Gruppen im Wesentlichen Hydroxid-Ionen als Gegenionen aufweisen und/oder die tertiären Dialkylamino-Gruppen in Form der freien Base vorliegen. Dabei ist es besonders bevorzugt, wenn der basische Anionenaustauscher ein Styrol-Divinylbenzol-Copolymer mit Trialkylammonium-Gruppen, insbesondere in der OH-Form, und/oder ein Styrol-Divinylbenzol-Copolymer mit Dialkylamino-Gruppen in Form der freien Base ist. Bei Verwendung von basischen Anionenaustauschern mit einem Styrol-Divinylbenzol-Copolymer mit Trialkylammonium-Gruppen in der Chlorid-Form werden die Chloride vor der Verwendung in die OH-Form überführt, beispielsweise mit einer Alkalihydroxid-Lösung. Als Alkalihydroxid-Lösungen werden vorzugsweise wässrige Lösungen von Kaliumhydroxid, Natriumhydroxid oder auch andere in Wasser- oder Wasser-Alkohol-lösliche Basen, wie Ammoniak oder Alkalicarbonate, beispielsweise $Na_2CO_3$, eingesetzt. Dabei wird nach der Überführung des Anionentauschers in die OH-Form vor dem Inkontaktbringen mit den olefinischen Siloxanoligomeren der Anionentauscher mit einen Alkohol gespült, um insbesondere überschüssiges Wasser zu verdrängen. Als Alkohol wird vorzugsweise der Alkohol eingesetzt, der durch Hydrolyse der jeweiligen Alkoxy-Gruppen gebildet würde. Bei Methoxy-Gruppen Methanol oder Ethanol bei Ethoxy-Gruppen im Alkoxysilan.

Als quartäre Ammonium-Gruppen gelten sowohl Alkylammonium- als auch N-Alkyl-Imin-funktionelle Gruppen, wie N-Alkyl-Pyridinium-Gruppen. Geeignete Alkyl-Gruppen enthalten 1 bis 20 C-Atome, vorzugsweise mit 1 bis 4 C-Atomen, und sind vorzugsweise Methyl- oder Ethylgruppen. Erfindungsgemäß sind die schwach basischen Anionaustauscher mit Hydroxid-Ionen beladen und insbesondere weisen sie Stickstoff enthaltende Gruppen auf.

Es hat sich überraschend herausgestellt, dass aufgrund der weiteren Reduktion des Gehaltes an Chlor die durch das erfindungsgemäße Verfahren erhaltenen funktionellen Siloxanoligomere deutlich stabiler gegenüber einer Hydrolyse sind, obwohl sie anders als bisher nicht mehr aufwendig destilliert werden. Dadurch erweisen sich die erfindungsgemäßen Siloxanoligomere stabiler als bekannte Oligomere und zugleich ist deren VOC-Gehalt gegenüber den Oligomeren des Standes der Technik deutlich reduziert.

Der vorteilhaft über einen Zeitraum von 6 bis 12 Monaten stabile Gehalt an Lösemitteln, wie VOC, insbesondere an freiem Alkohol, in Bezug zur gesamten Zusammensetzung liegt bevorzugt unter 2 Gew.-%, insbesondere bei kleiner gleich 1 Gew.-%, besonders bevorzugt bei kleiner gleich 0,4 Gew.-%, vorzugsweise bei kleiner gleich 0,3 Gew.-% bis hin zur Nachweisgrenze.

In das erfindungsgemäße Verfahren einsetzbare Verbindungen der Formel II sind: Vinyltriethoxysilan, Vinyltrimethoxysilan, Allyltriethoxysilan, Allyltrimethoxysilan, Butenyltriethoxysilan, Butenyltrimethoxysilan, Cyclohexenyl-alkylen-trimethoxysilan, insbesondere Cyclohexenyl-2-ethylen-trimethoxysilan, Cyclohexadienyl-C1 bis C8-alkylentriethoxysilan oder Cyclohexadienyl-2-ethylentriethoxysilan, Cyclohexenyl-2-ethylentrimethoxysilan, 3'-Cyclohexenyl-2-ethylentrimethoxysilan, Cyclohexadienyl-C1 bis C8-alkylentrimethoxysilan oder Cyclohexadienyl-2-ethylentrimethoxysilan, Cyclohexenyl-2-ethylen-triethoxysilan, weiter bevorzugt 3'-Cyclohexenyl-2-ethylen-triethoxysilan und/oder 3'-Cyclohexenyl-2-ethylen-trimethoxysilan, Cyclohexendienylalklylentriethoxysilan, Hexenyltriethoxysilan, Hexenyltrimethoxysilan, Ethylhexenyltrimethoxysilan, Ethylhexenyltriethoxysilan, Octenyltriethoxysilan, Octenyltrimethoxysilan, wobei die methoxysubstituierten besonders bevorzugt sind.

Bevorzugt verwendbare Alkylalkoxysilanverbindungen der Formel III sind: Verbindungen der Formel III mit y = 0 oder 1, wobei B einem linearen oder verzweigten Alkyl-Rest mit 1 bis 18 C-Atomen, insbesondere mit 1 bis 8 C-Atomen, bevorzugt einem Methyl-, Ethyl, besonders bevorzugt n-Propyl-, iso-Propyl- , Butyl-, Pentyl-, Hexyl-, Heptyl-, Octyl-, Hexadecyl- oder Octadecyl-Rest, $R^4$ einem linearen, verzweigten oder cyclischen Alkyl-Rest mit 1 bis 15 C-Atomen, insbesondere mit 1 bis 8 C-Atomen, bevorzugt einem Methyl-, Ethyl, besonders bevorzugt n-Propyl-, iso-Propyl-und/oder Octyl-Rest, $R^3$ einem linearen und/oder verzweigten Alkyl-Rest mit 1 bis 3 C-Atomen, besonders bevorzugt einem Methyl-, Ethyl- und/oder iso-Propyl- oder n-Propyl-Rest entsprechen. Besonders bevorzugt ist B ein Methyl-, Ethyl-, Propyl-, Octyl-, Hexadecyl- oder Octadecyl-Rest und $R^4$ ein Methyl- oder Ethyl-Rest und $R^1$ ein Methyl- oder Ethyl-Rest, wobei die methoxysubstituierten besonders bevorzugt sind.

Bevorzugte beispielhaft genannte Verbindungen der Formel III sind: Methyltrimethoxysilan, Methyltriethoxysilan (MTES), Propyltrimethoxysilan (PTMO), Dimethyldimethoxysilan (DMDMO), Dimethyldiethoxysilan, Propylmethyldimethoxysilan, Propylmethyldiethoxysilan, iso-Propyltriethoxysilan, n-Propyltriethoxysilan, n-Octyl-methyl-dimethoxysilan, n-Hexyl-methyl-dimethoxysilan, n-Hexyl-methyl-diethoxysilan, Propyl-methyl-diethoxysilan, Propyl-methyl-diethoxysilan, Propyltriethoxysilan, Propyltrimethoxysilan, Butyltriethoxysilan, Butyltrimethoxysilan, i-Butyltrimethoxysilan, i-Butyltriethoxysilan, n-Butyltriethoxysilan, n-Butyltrimethoxysilan, Hexyltriethoxysilan, Pentyltrimethoxysilan, Pentyltriethoxysilan, Hexyltrimethoxysilan, n-Hexyltrimethoxysilan, iso-Hexyltriethoxysilan, iso-Hexyltrimethoxysilan, Heptyltrimethoxysilan Octyltrimethoxysilan, Octyltriethoxysilan, n-Octyltrimethoxysilan, n-Octyltriethoxysilan, i-Octyltrimethoxysilan, i-Octyltriethoxysilan, n-Hexyl-triethoxysilan, Cyclohexyl-triethoxysilan, n-Propyl-tri-n-butoxysilan, n-Propyl-trimethoxysilan, iso-Propyltrimethoxysilan, Heptyltrimethoxysilan, n-Octyltriethoxysilan, iso-Octyltriethoxysilan, Undecyltriethoxysi-lan, Decyltriethoxysilan, Nonadecyltriethoxysilan, Dodecyltriethoxysilan, $C_{13}H_{27}$-Triethoxysilan, $C_{14}H_{29}$-Triethoxysilan oder $C_{15}H_{31}$-Triethoxysilan, n-Octyltrimethoxysilan, iso-Octyltrimethoxysilan, Undecyltrimethoxysilan, Decyltrimethoxy-silan, Nonadecyltrimethoxysilan, Dodecyltrimethoxysilan, $C_{13}H_{27}$-Trimethoxysilan, $C_{14}H_{29}$-Trimethoxysilan oder $C_{15}H_{31}$-Trimethoxysilan, Hexadecyltriethoxysilan, Hexadecyltrimethoxysilan, Octadecyltriethoxysilan, Octadecyltrimethoxysilan, Octadecylmethyldiethoxysilan, Octadecylmethyldimethoxysilan, Hexadecylmethyldimethoxysilan und/oder Hexadecylmethyldiethoxysilan sowie Mischungen dieser Silane oder eine Mischung umfassend mindestens zwei der Silane sowie Umesterungsprodukte dieser.

Besonders bevorzugte Kombinationen an Verbindungen der Formeln II, III und gegebenenfalls IV zur Herstellung der olefinisch funktionalisierten Siloxanoligomere, bzw. die daraus erhältlichen olefinisch funktionalisierten Siloxanoligomere sind, wobei Siloxanoligomere bevorzugt ohne Zugabe von Verbindungen der Formel IV hergestellt werden: Dabei werden jeweils die durch Semikolon eingeschlossenen Verbindungen in dem Verfahren zur Herstellung der Siloxanoligomere eingesetzt: Vinyltriethoxysilan (VTEO); Vinyltrimethoxysilan (VTMO); Vinyltriethoxysilan und Tetraethoxysilan; Vinyltrimethoxysilan und Tetramethoxysilan; Vinyltriethoxysilan und Methyltriethoxysilan; Vinyltriethoxysilan, Methyltriethoxysilan und Tetraethoxysilan (TEOS); Vinyltrimethoxysilan und Methyltrimethoxysilan; Vinyltrimethoxysilan, Methyltrimethoxysilan und Tetraethoxysilan oder Tetramethoxysilan; Vinyltriethoxysilan und Ethyltriethoxysilan; Vinyltriethoxysilan, Ethyltriethoxysilan und Tetraethoxysilan; Vinyltrimethoxysilan und Ethyltrimethoxysilan; Vinyltrimethoxysilan, Ethyltrimethoxysilan und Tetraethoxysilan oder Tetramethoxysilan; Vinyltriethoxysilan und Propyltriethoxysilan; Vinyltriethoxysilan, Propyltriethoxysilan und Tetraethoxysilan; Vinyltrimethoxysilan und Propyltrimethoxysilan; Vinyltrimethoxysilan, Propyltrimethoxysilan und Tetraethoxysilan oder Tetramethoxysilan; Vinyltriethoxysilan und iso-Butyltriethoxysilan; Vinyltriethoxysilan, iso-Butyltriethoxysilan und Tetraethoxysilan; Vinyltrimethoxysilan und iso-Butyltrimethoxysilan; Vinyltrimethoxysilan, iso-Butyltrimethoxysilan und Tetramethoxysilan; Vinyltrimethoxysilan und Heptyltrimethoxysilan; Vinyltrimethoxysilan und Heptyltriethoxysilan; Vinyltrimethoxysilan und Hexyltrimethoxysilan; Vinyltrimethoxysilan und Hexyltriethoxysilan; Vinyltriethoxysilan und Octyltriethoxysilan; Vinyltriethoxysilan, Octyltriethoxysilan und Tetraethoxysilan; insbesondere mit Vinyltriethoxysilan und Tetraethoxysilan im Verhältnis von 1 : 0,20 bis 1 : 0; Vinyltrimethoxysilan und Octyltrimethoxysilan; Vinyltrimethoxysilan, Octyltrimethoxysilan und Tetramethoxysilan; insbesondere mit Vinyltrimethoxysilan und Tetramethoxysilan im Verhältnis von 1 : 0,2 bis 1 :0; Vinyltriethoxysilan und Hexadecyltriethoxysilan; Vinyltrimethoxysilan und Hexadecyltrimethoxysilan; Vinyltriethoxysilan und Tetramethoxysilan im Verhältnis von 1 : 0,2 bis 1 :0 und Hexadecyltriethoxysilan; Vinyltrimethoxysilan und Tetramethoxysilan im Verhältnis von 1 : 0,2 bis 1 :0 und Hexadecyltrimethoxysilan.

Ebenso besonders bevorzugt werden in dem erfindungsgemäßen Verfahren eingesetzte jeweils unabhängig mindestens ein Cyclohexenyl-2-ethylen-trialkoxysilan, 3'-Cyclohexenyl-2-ethylen-trialkoxysilan oder Cyclohexadienyl-C1 bis C8-alkylenGruppen. Alternativ ebenfalls besonders bevorzugt können als Kombinationen in dem erfindungsgemäßen Verfahren jeweils unabhängig mindestens ein Cyclohexenyl-2-ethylen-trialkoxysilan, 3'-Cyclohexenyl-2-ethylen-trialkoxysilan oder Cyclohexadienyl-C1 bis C8-alkylen-Gruppen mit einem der vorgenannten Alkylalkoxysilanen umgesetzt werden.

Besonders bevorzugte Verfahren basieren auf der Umsetzung von bzw. bevorzugte Siloxanoligomere sind erhältlich durch die Umsetzung von a) Vinyltriethoxysilan, b) Vinyltrimethoxysilan, c) Vinyltriethoxysilan und Propyltriethoxysilan, Vinyltrimethoxysilan und Propyltrimethoxysilan, Vinyltrimethoxysilan und Propyltriethoxysilan oder Vinyltriethoxysilan und Propyltrimethoxysilan, oder in dem a), b), c) jeweils unabhängig mit Tetraethoxysilan oder a), b) und c) jeweils unabhängig mit Tetramethoxsilan umgesetzt werden.

Zusätzlich oder alternativ zu einem der vorgenannten Merkmale kann in dem Verfahren auch als Verarbeitungshilfsmittel mindestens ein Silikonöl, wie Polydimethylsiloxan, Paraffin, Paraffinöl oder eine Mischung enthaltend eines dieser Verarbeitungshilfsmittel eingesetzt werden. Ein besonders bevorzugtes Verarbeitungshilfsmittel ist Polydimethylsiloxan, bevorzugt mit einer kinematische Viskosität von circa 150 bis 400 mm$^2$/s, besonders bevorzugte Alternativen weisen eine Viskosität von um 200 mm$^2$/s oder um 350 mm$^2$/s.

Gegenstand der Erfindung ist auch das folgende Verfahren zur Herstellung der Zusammensetzung, als auch eine Zusammensetzung erhältlich nach diesem Verfahren, die insbesondere besonders chlorarm sind, vorzugsweise mit den folgenden Einzelschritten,

1) mindestens ein olefinisch funktionalisiertes Alkoxysilan der Formel II, und gegebenenfalls ein Alkoxysilan der Formel III und gegebenenfalls ein Alkoxysilan der Formel IV, gegebenenfalls als Mischung, vorzugsweise werden sie vorgelegt, gegebenenfalls wird ein Lösemittel zur Verdünnung zugesetzt, bevorzugt der korrespondierende Alkohol zum Hydrolysealkohol.

2) Mindestens ein saurer Hydrolyse- bzw. Kondensationskatalysator, wie HCl, eine organische gesättigte oder ungesättigte Carbonsäure, wird zugesetzt und ein definiertes molares Verhältnis Wasser zu Alkoxy-Gruppen der Alkoxysilane wird eingestellt. Vorzugsweise wird dabei ein pH-Wert kleiner 7, vorzugsweise von 1 bis 6, weiter bevorzugt von 3 bis 5 eingestellt. Alternativ kann gegebenenfalls eine Mischung hergestellt werden (1+2), enthaltend mindestens eines der Silane der Formel II, III und ggf. IV gegebenenfalls mit einem Alkohol in einer Gewichtsmenge von 0,2- bis 8-fach, vorzugsweise 0,2 bis 1,0-fach, in Bezug auf die Silane der Formeln II, III und ggf. IV, insbesondere Methanol oder Ethanol, je nach eingesetztem Alkoxysilan, und eine definierte Menge Wasser, wobei vorzugsweise mindestens ein saurer Hydrolyse- bzw. Kondensationskatalysators, wie HCl, in der definierten Menge Wasser gelöst ist. Vorzugsweise wird dabei ein pH-Wert kleiner 7, vorzugsweise von 1 bis 6, weiter bevorzugt von 3 bis 5 eingestellt.

Gegenstand der Erfindung ist auch das folgende Verfahren zur Herstellung der Zusammensetzung, als auch eine Zusammensetzung erhältlich nach diesem Verfahren, die insbesondere besonders chlorarm sind, vorzugsweise mit den folgenden Einzelschritten,

1) mindestens ein olefinisch funktionalisiertes Alkoxysilan der Formel II, und optional ein Alkoxysilan der Formel III werden vorgelegt, und jeweils unabhängig optional zusätzlich und gegebenenfalls ein Alkoxysilan der Formel IV, wobei die Alkoxysilane vorzugsweise als Mischung vorgelegt werden,

2) Zusetzen eines Gemisches umfassend Lösemittel, Wasser und HCl als saurer Hydrolyse- und/oder Kondensationskatalysator, wobei das Lösemittel der korrespondierende Alkohol zum Hydrolysealkohol ist, und ein definiertes molares Verhältnis Wasser zu Alkoxy-Gruppen der Alkoxysilane von 1 : 2,57 bis 1: 5,0 eingestellt wird, vorzugsweise 1: 3,0 bis 1 : 4,5. wobei vorzugsweise der Alkohol in einer Gewichtsmenge von 0,2- bis 8-fach in Bezug auf die Silane der Formeln II, III und optional IV eingesetzt wird, vorzugsweise 0,2 bis 3,0-fach. Weiter bevorzugt ist eine Gewichtsmenge Alkohol von 0,2 bis 1,5-fach, insbesondere 0,2 bis 1,0-fach, besonders bevorzugt 0,3 bis 0,8-fach in Bezug auf das Gewicht der Silane der Formeln II, III und optional IV eingesetzt wird.

Dazu werden, vorzugsweise in einer Vorlage, wie einem Rührkessel, unter Durchmischung, Alkoxysilane und das Wasser umgesetzt. Die definierte Menge Wasser kann kontinuierlich oder mit mindestens einer Unterbrechung über einen Zeitraum von 1 bis 1.000 Minuten dosiert werden. Die Temperatur des Reaktionsgemisches wird vorzugsweise auf 5 bis 90 °C für die Umsetzung eingestellt, vorzugsweise auf 20 bis 55 °C, bevorzugt auf 30 bis 40 °C oder auf etwa 35 °C. Nach der Zugabe der Mischung wird die Temperatur der gebildeten Reaktionsmischung weiter erhöht, insbesondere wird auf Rückflusstemperatur des Alkohols eingestellt. Beispielsweise durch Erwärmen der Reaktionsmischung auf eine Temperatur von 40 bis 80 °C, bevorzugt von 50 bis 80 °C, besonders bevorzugt auf um 55 bis 80 °C, erfindungsgemäss auf etwa Siedetemperatur des Alkohols.

Über einen Zeitraum von mindestens 10 Minuten bis 36 Stunden, vorzugsweise 10 min. bis 8 h, bei einer Reaktionstemperatur von 5 bis 80°C, vorzugsweise 40 °C bis 80 °C kann die Reaktionsmischung nachreagieren, bevorzugt unter Durchmischung, beispielsweise unter Rühren.

3) nach beendeter Reaktion wird der Alkohol abgetrennt. Bevorzugt wird mehrere Stunden, beispielsweise etwa 2 bis 10 Stunden, vorzugsweise 3 bis 5 Stunden, besonders bevorzugt um 3,5 Stunden unter Rückfluss erhitzt und anschließend

4) der Alkohol, umfassend den Hydrolysealkohol und den eingesetzten Alkohol sowie gegebenenfalls Wasser abdestilliert, vorzugsweise unter Vakuum und bei erhöhter Temperatur, bevorzugt bis die Reaktionsmischung bzw. die erhaltene Zusammensetzung im Wesentlichen lösemittelfrei, insbesondere alkoholfrei ist.

Die Destillation des Alkohols erfolgt vorzugsweise bei einer Sumpftemperatur von 0°C bis 100 °C und einem Druck von 300 bar bis 1 mbar, dabei wird zugleich HCl abdestilliert, weiter bevorzugt bei 40 °C bis 100 °C und einem Druck von 250 bar bis 10 bar. Erhalten wird die erfindungsgemäße Zusammensetzung olefinisch funktionalisierter Siloxanoligomere.

Dem Fachmann ist klar, dass die so hergestellten funktionellen Siloxanoligomere je nach gewünschter Anwendung mit einem Verdünnungsmittel verdünnt oder auch mit einem Polymer, wie einem thermoplastischen Basispolymer, wie PE, PP oder einem Elastomer, wie EVA versetzt oder compoundiert werden können. Weitere thermoplastische Basispolymere und Elastomere sind nachfolgend exemplarisch genannte, der Fachmann weiß, dass generell alle thermoplastischen Basispolymere bzw. Polymere oder Elastomere geeignet sind. Dem Fachmann sind übliche Verdünnungsmittel für Alkoxysiloxane bekannt, beispielsweise sind hier Alkohole, Ether, Ketone, Kohlenwasserstoffe, oder auch Mischungen dieser zu nennen. Die Zusammensetzungen der funktionellen Siloxanoligomere können somit je nach gewünschter Anwendung als Konzentrat oder auch als verdünnte Zusammensetzung von 99,9 bis 0,001 Gew.-% sowie alle dazwischen liegenden Werte, an funktionellen Siloxanoligomeren in der Gesamtzusammensetzung hergestellt werden. Bevorzugte Verdünnungen enthalten 10 bis 90 Gew.-% an funktionellen Siloxanoligomeren, besonders bevorzugt 20 bis 80 Gew.-%, weiter bevorzugt sind 30 bis 70 Gew.-%.

Als thermoplastische Basispolymere im Sinne der Erfindung werden insbesondere Acrylnitril-Butadien-Styrol (ABS), Polyamide (PA), Polymethylmethacrylat (PMMA), Polycarbonat (PC), Polyethylen (PE), wie LDPE, LLD-PE, m-PE, Polypropylen (PP), Polystyrol (PS), Polyvinylchlorid (PVC), Chloropren, sowie die auf Ethylen-Einheiten basierenden Polymere Ethylen-Vinylacetat-Copolymere (EVA), EPDM oder EPM und/oder Celluloid oder silan-co-polymerisierte Polymere verstanden und beispielsweise aus ungesättigten funktionellen Monomeren inkl. Silanen, wie VTMO, VTEO, und Monomeren wie Ethylen und anderen Olefinen hergestellte Basispolymere, Monomere und/oder Prepolymere Vorläuferverbindungen dieser Basispolymere, wie Ethylen, Propylen. Weitere bevorzugte Elastomere können ausgewählt werden aus der Reihe Ethylen-Propylen-Kautschuk (EPR), Ethylen-Propylen-Dien-Kautschuk (EPDM), Styrol-Butadien-Kautschuk (SBR), Naturkautschuk (NR), Acrylatcopolymerkautschuk (ACM), Acrylnitril-Butadien-Kautschuk (NBR) und/oder Polybutadien-Kautschuk (BR).

Gegenstand der Erfindung sind auch Zusammensetzungen erhältlich nach dem erfindungsgemäßen Verfahren enthaltend olefinisch funktionalisierte Siloxanoligomere, insbesondere Siloxanoligomere deren Gewichtsmittel des Molekulargewichts (Mw) größer gleich 315 g/mol ist, und vorzugsweise deren Zahlenmittel des Molekulargewichts (Mn) größer gleich 300 g/mol ist, wobei insbesondere die Polydispersität als Quotient aus Mw/Mn bei 1,05 bis 1,25 liegt, besonders bevorzugt bei 1,05 bis 1,20. Weiter bevorzugt ist das Gewichtsmittel des Molekulargewichts (Mw) größer gleich 420 g/mol und das Zahlenmittel des Molekulargewichts (Mn) größer gleich 400 g/mol, wobei die Polydispersität als Quotient aus Mw/Mn bei 1,05 bis 1,25 ist, besonders bevorzugt bei 1,05 bis 1,17. Dabei ist es weiter bevorzugt, wenn die erhältlichen Zusammensetzungen größer gleich 90 % (Flächen-%, GPC) Siloxanoligomere mit einem Molekulargewicht kleiner gleich 1000 g/mol aufweisen. Die so erhältlichen Zusammensetzungen können jederzeit einfach mit einem Verdünnungsmittel verdünnt werden. Verfahrensbedingt kann eine Zusammensetzung erhalten werden, die in Gegenwart von Feuchte einen sauren pH-Wert anzeigt. Üblicherweise kann der pH-Wert zwischen 2 und 6 liegen.

Zugleich ist vorzugsweise der Gesatmchloridgehalt dieser Zusammensetzungen vorteilhaft kleiner gleich 250 mg/kg, insbesondere kleiner gleich 80 mg/kg, weiter bevorzugt kleiner gleich 50 mg/kg, in Bezug auf die Gesamtzusammensetzung.

Um eine schnelle Verteilung im Extruder zu erlauben, ohne zu hohe Masseverluste in den heißen Extrudern zu erleiden ist ein ausgewogenes Verhältnis des Molekulargewichts Mw zur TGA Temperatur bei der 5% oder 50 % Masseverlust auftreten einzuhalten. Die vorgenannten Verbindungen zeigen üblicherweise Masseverlust von 50% bei Temperaturen deutlich oberhalb 200 °C, insbesondere oberhalb von 220 °C. Daher sind die erfindungsgemäßen Zusammensetzungen sehr gut zur Anwendung in Extrudern geeignet und erlauben zugleich aufgrund des sehr eng eingestellten Molekulargewichtes eine rasche Verteilung der Siloxanoligomere in den Thermoplasten. Zu dieser guten Verteilung bzw. Dispergierbarkeit tragen auch die leicht erhöhten T-Strukturen in den Siloxanen bei, da die Moleküle kompakter sind.

Gegenstand der Erfindung ist auch die Verwendung der erfindungsgemäßen Zusammensetzung oder der nach dem erfindungsgemäßen Verfahren hergestellten Zusammensetzungen als Haftmittel, als Vernetzungsmittel durch Pfropfpolymerisation und/oder hydrolytische Kondensation in an sich bekannter Weise, zur Herstellung von mit olefinisch funktionalisierten Siloxanoligomeren gepfropfter Polymere, Pre-Polymere und/oder von mineralisch gefüllten Polymeren (Compounds), insbesondere bei der Herstellung von Thermoplasten oder Elastomeren, bevorzugt von mineralisch gefüllten Thermoplasten, Elastomeren oder von Pre-Polymeren dieser, zur Pfropfung oder bei der Polymerisation thermoplastischer Polyolefine, als Trockenmittel, insbesondere als Wasserfänger für Silikondichtmassen, in vernetzbaren Polymeren zur Herstellung von Kabeln, zur Herstellung vernetzbarer Polymere, als Ölphase in einer Emulsion und/oder gemeinsam mit Organosilanen oder Organopolysiloxanen. Zur erfindungsgemäßen gemeinsamen Verwendung der Zusammensetzung mit Organosilanen oder Organosiloxanen wird vollständig auf die Offenbarung der EP 1 205 481 B1 Bezug genommen, insbesondere auf den Offenbarungsgehalt des Absatzes [0039] und auf die dort offenbarte Liste an Organosilanen und Organosiloxanen. Ferner finden erfindungsgemäße Zusammensetzungen vorteilhaft Verwendung zur Füllstoffmodifizierung (Füllstoffbeschichtung), Harzmodifizierung (Additiv), Oberflächenmodifizierung (Funktionalisierung, Hydrophobierung), als Bestandteil in Beschichtungssystemen (insbesondere Sol-Gel Systeme oder Hybridsysteme), zur Modifizierung von Kathoden und Anodenmaterialien in Batterien, als Elektrolytflüssigkeit, als Additiv in Elektrolytflüssigkeiten, für die Modifizierung von Fasern, insbesondere Glasfasern und Naturfasern, sowie zur Modifizierung von Textilien, zur Modifizierung von Füllstoffen für die Kunststeinindustrie, als Bautenschutzmittel oder Bestandteil in Bautenschutzmittel, als Zusatz für mineralisch härtende Massen, zur Modifizierung von Holz, Holzfasern und Cellulose. Zudem wird der gesamte Offenbarungsgehalt der DE 10 2011 086 862.3 mit dem Anmeldetag 22.11.2011 eingereicht beim Deutsche Patent- und Markenamt zum Inhalt der vorliegenden Erfindung gemacht.

Die Erfindung wird anhand der folgenden Beispiele näher erläutert ohne sie auf diese Ausführungsbeispiele zu begrenzen.

**Beispiele:**

Bestimmung des Molekulargewichts: Die Bestimmung von Molmassen bzw. des Molekulargewichts sowie der Molmassenverteilung kann mittels Gelpermeationschromatographie (GPC) erfolgen. Das GPC-Analyseverfahren wird u. a. in "Modern Size-Exclusion Liquid Chromatography", Andre Striegel et al, Verlag Wiley & Sons, 2. Aufl. 2009, ausführlich beschrieben. Dabei kann man zur Kalibrierung der Methode für Siloxananalysen als Standard beispielsweise Divinyltetramethoxydisiloxan oder Divinylteraethoxydisiloxan verwenden. Prozentangaben in Bezug auf die olefinischen Siloxanoligomere im vorliegenden Dokument entsprechen einer Angabe in Flächenprozent, die aus GPC-Analysen ermittelt werden können. Verwendete Säulen MZ-Analysetechnik: Säulen: 50x8.0 mm, MZ-Gel SDplus (Styrol-/Divinylbenzol-Copolymer mit hohem Vernetzungsgrad, sphärische Teilchenform), Porosität 50A (Angstroem, Å), 5 $\mu$m (Mikrometer) (Vorsäule), 300x8.0 mm, MZ-Gel SDplus, Porosität 50A (Angstroem, Å), 5 $\mu$m, 300x8.0 mm, MZ-Gelplus, Porosität 100A (Angstroem, Å), 5 $\mu$m, 300x8.0mm, MZ-Gel SDplus, Porosität 500A (Angstroem, Å), 5 $\mu$m; Elutionsmittel und Pumpenfluss: Methylketon (MEK) bei 1 ml/min, Standardsubstanz: Interner Standard - 1 g/l Ethylbenzol in 1 %iger Proben-Lösung. Das Messgerät wird zuvor gegen die jeweilige Substanz kalibriet (Monomer, Dimer, Trisiloxan etc.).

Messgerät von Agilent: 1100 Series isotaktische Pumpe G1310A, 1100 Series Säulenofen G1316A, 1100 Series RID Detektor G1362A, Manueller Injektor G1328A, Vakuum Degasser G1322A, GPC-Software (PSS WinGPC Unity).

Bestimmung des Chlorgehaltes bzw. des Gesamtchlorid-Wertes: In einer Kalorimeterbombe wird das Silan mit Sauerstoff aufgeschlossen und anschließend mit Essigsäure und Flusssäure hydrolysiert. In der erhaltenen Lösung wird der Chloridgehalt durch Titration mit einer wohl definierten Silbernitratlösung bestimmt.

Bestimmung des Chlorgehaltes sowie des hydrolysierbaren Chlorids: Nach Hydrolyse mit Essigsäure. wird der Chloridgehalt durch Titration mit einer wohl definierten Silbernitratlösung bestimmt.

Bestimmung des $SiO_2$-Gehaltes - Tiegelmethode: Der Si02 Gehalt wird durch sauren Aufschluss mit konzentrierter Schwefelsäure und nachfolgender Verdampfung durch Fluorinierung bestimmt.

GC-Analytik: Im Rahmen der dem Fachmann wohl bekannten GC-Standardanalytik wird der Monomergehalt durch eine geeignete Kalibrierung und ggf. internen Standard bestimmt.

$^{29}$Si-NMR-Spektrometrie: Ferner kann zur Bestimmung des Monomerengehalts sowie von M-, D- und T-Strukturen kann dem Fachmann ebenfalls wohl bekannte $^{29}$Si-NMR-Spektrometrie eingesetzt werden.

Bestimmung der dynamischen Viskosität: Die Bestimmung der dynamischen Viskosität wurde gemäß DIN 53015 durchgeführt.

Alkohol nach Hydrolyse: Eine definierte Menge einer Probe wird mit Schwefelsäure (25%iger) versetzt. Anschließend wird eine definierte Menge Wasser zugesetzt und mit Natronlauge (20%ig) neutralisiert. Nach Durchführung einer Wasserdampfdestillation wird der Alkoholgehalt gegen einen inneren Standard mittels GC bestimmt (sek-Butanol, HP 5890 mit Integrator HP 3396, 1 ml/min).

Flammpunktbestimmung: DIN EN ISO 13736 (Januar 2009), DIN EN ISO 2719 (Sep 2003). Flammpunkte über 40°C werden mittels DIN EN ISO 2719 an (= DIN 51758 = EN 22719) und zwischen -30°C und +40°C nach DIN EN ISO 13736 (= DIN 51755) bestimmt.

Wassergehalt: Karl-Fischer (DIN 51777)

TGA: Bei der TGA (Thermogravimetrische Analyse) wird eine zu analysierende Probe in einem Tiegel an einer Waage angebracht. Die Probe selbst befindet sich während der Messung in einem beheizbaren Ofen. Der Tiegel ist üblicherweise offen (ohne Deckel oder Deckel mit Löchern). Das innere des Ofens wird mit einem inerten Gas ($N_2$) durchgespült um mögliche durch den Sauerstoff-Kontakt bedingte Reaktionen zu vermeiden.

Gerät: TG 209 der Firma Netzsch, Temperaturbereich: RT bis ca. 1000°C Heizrate: 10 K/min, Einwaage: ca. 10 - 12 mg, Tiegel: Platin mit Loch im Deckel. Weitere Informationen zu TGA-Analysen finden sich beispielsweise im Internetlehrbuch: Moderne Pharmazeutische Technologie 2009, Cornelia M. Keck, Reiner H. Müller, Kapitel 3.5, Thermoanalyse, Lothar Schwabe, FU Berlin, Seite 76, Abb.: 5, http://pharmazie-lehrbuch.de/ Moderne%20Pharmazeutische%20 Technologie.pdf oder anderen Lehrbüchern zu analytischen Methoden.

Tabelle 1: Übersicht der eingesetzten Rohstoffe.

| Stofftyp | Bezeichnung |
|---|---|
| Silan | Vinyltrimethoxysilan (VTMO) |
| | Vinyltriethoxysilan (VTEO) |
| | Propyltriethoxysilan (PTEO) |
| Alkohol | Methanol |
| | Ethanol |
| Säure | Salzsäure 37%ig |
| Silikonöl | AK 350 (Wacker) |
| Stabilisator | Irganox 1010 |
| Peroxid | Dicumylperoxid |

**Beispiel 1: VTMO-Siloxanoligomer - Verhältnis Wasser zur Alkoxy 1 : 3,7 - V087**

Vinyltrimethoxysilanoligomer: 220 g Vinyltrimethoxysilan wurden in einem Reaktionskolben vorgelegt. 95 g Methanol wurden mit 21 g Wasser und 0,4 g 20%-iger Salzsäure gemischt und in einen Tropftrichter überführt. Bei einer Temperatur von etwa 25 °C wurde aus dem Tropftrichter langsam unter Rühren zu dem Vinylsilan zugetropft. Nach beendeter Zugabe wurde das Ölbad auf 85 °C erhitzt, so dass das Methanol unter Rückfluss siedete. Nach etwa dreistündiger Reaktionsdauer wurde das Methanol bei der genannten Ölbadtemperatur und einem Unterdruck von etwa 150 bis 180 mbar abdestilliert. Zur weiteren Abtrennung Methanol wurde das Vakuum auf unter 1 mbar eingestellt.

**Beispiel 2: VTEO-Siloxanoligomer** - **Verhältnis Wasser zu Alkoxy 1 : 3,7** - **V088**

Vinyltriethoxysilanoligomer: 195 g Vinyltriethoxysilan wurden in einem Reaktionskolben vorgelegt. 93 g Ethanol wurden mit 14,8 g Wasser und 0,2 g 20%-iger Salzsäure gemischt und in einen Tropftrichter überführt. Bei einer Temperatur von etwa 25 °C wurde aus dem Tropftrichter langsam unter Rühren zu dem Vinylsilan zugetropft. Nach beendeter Zugabe wurde das Ölbad auf 85 °C erhitzt, so dass das Ethanol unter Rückfluss siedete. Nach etwa dreistündiger Reaktionsdauer wurde das Ethanol bei der genannten Ölbadtemperatur und einem Unterdruck von etwa 150 bis 180 mbar abdestilliert. Zur weiteren Abtrennung Ethanol wurde das Vakuum auf unter 1 mbar eingestellt.

**Beispiel 3: PTEO/VTEO-Siloxanoligomer** - **Verhältnis Wasser zu Alkoxy** 1: **4,0** - **V089**

Co-Oligomer aus Propyltriethoxysilan mit Vinyltriethoxysilan: 98 g Vinyltriethoxysilan und 100 g Propyltriethoxysilan wurden in einem Reaktionskolben vorgelegt. 87 g Ethanol wurden mit 13 g Wasser und 0,2 g 20%-iger Salzsäure gemischt und in einen Tropftrichter überführt. Bei einer Temperatur von etwa 25 °C wurde aus dem Tropftrichter langsam unter Rühren zu dem Vinylsilan zugetropft. Nach beendeter Zugabe wurde das Ölbad auf 85 °C erhitzt, so dass das Ethanol unter Rückfluss siedete. Nach etwa dreistündiger Reaktionsdauer wurde das Ethanol bei der genannten Ölbadtemperatur und einem Unterdruck von etwa 150 bis 180 mbar abdestilliert. Zur weiteren Abtrennung Ethanol wurde das Vakuum auf unter 1 mbar eingestellt.

**Beispiel 4: VTEO/PTEO-Siloxanoligomer** - **Verhältnis Wasser zu Alkoxy 1 : 4,8** - **V097**

Durchführung: In einer 2-l-Vierhalsapparatur mit Wasserkühlung und Magnetrührer wurden 190,3 g VTEO und 206,2 g PTEO (Propyltriethoxysilan) vorgelegt. Im Anschluss wurde ein Gemisch aus Ethanol, Bi-Dest-Wasser und Salzsäure (37 %) bei 35 °C und Umgebungsdruck zudosiert. Es fand eine exotherme Reaktion statt. Sofern die Temperatur über 60°C stieg, wurde die Dosierung unterbrochen. Die Gesamtreaktionszeit belief sich auf 5 Stunden Rühren beginnend bei 79°C nach vollständiger Dosierung des $H_2O$/EtOH/HCl-Gemisches. Nach der Reaktionszeit wurde am Rotationsverdampfer der Alkohol bei bis zu 100°C und 100 mbar destilliert. Nach Erreichen der 100 mbar wurde dieser noch 15 Minuten gehalten bevor die Anlage entlastet wurde. Der erhaltene Sumpf war ein Vinyl- und Propyl-funktionalisiertes Siloxanoligomer aus VTEO und PTEO (VTEO/PTEO-Siloxan).

Tabelle 2: Rohstoffe V097

| Stoff | Einwaage |
|---|---|
| VTEO | 190,3 g |
| PTEO | 206,2 g |
| Wasser | 22,7 g |
| Ethanol | 174,6 g |
| Salzsäure | 0,19 g |

**Beispiel 5: VTEO/PTEO-Siloxanoligomer** - **Verhältnis Wasser zu Alkoxy 1 : 4,0** - **V098**

Durchführung: In einer 2-l-Vierhalsapparatur mit Wasserkühlung und Magnetrührer wurden Vinyltrimethoxysilan (VTEO) und Propyltriethoxysilan (PTEO) vorgelegt. Im Anschluss wurde ein Gemisch aus Ethanol, Bi-Dest-Wasser undSalzsäure (37 %) bei 35 °C und Umgebungsdruck zudosiert. Es fand eine exotherme Reaktion statt. Sofern die Temperatur über 60 °C stieg wurde die Dosierung unterbrochen. Die Gesamtreaktionszeit belief sich auf 5 Stunden Rühren beginnend bei 79 °C nach vollständiger Dosierung des $H_2O$/EtOH/HCl-Gemisches. Nach der Reaktionszeit wurde am Rotationsverdampfer der Alkohol bei bis zu 100 °C und 100 mbar destilliert. Nach Erreichen der 100 mbar wurde dieser noch 15 Minuten gehalten bevor die Anlage entlastet wurde. Der erhaltene Sumpf war VTEO-/PTEO-Siloxanoligomer.

Tabelle 3: Rohstoffe V098

| Stoff | Einwaage |
|---|---|
| VTEO | 190,3 |
| PTEO | 206,4g |

(fortgesetzt)

| Stoff | Einwaage |
|---|---|
| Wasser | 27,2g |
| Ethanol | 175,1g |
| Salzsäure | 0,19g |

**Beispiel 6: VTEO/PTEO/TEOS-Siloxanoligomer- Verhältnis Wasser zu Alkoxy 1 : 5,0 (5,1) - V099**

Durchführung: In einer 2-I-Vierhalsapparatur mit Wasserkühlung und Magnetrührer wurden 190,3 g VTEO, 206,4 g PTEO und 20,9 g Tetraethoxysilan vorgelegt. Im Anschluss wurde ein Gemisch aus Ethanol, Bi-Dest-Wasser und Salzsäure (37 %) bei 35 °C und Umgebungsdruck zudosiert. Es fand eine exotherme Reaktion statt. Sofern die Temperatur über 60 °C stieg wurde die Dosierung unterbrochen. Die Gesamtreaktionszeit belief sich auf 5 Stunden Rühren beginnend bei 79 °C nach vollständiger Dosierung des $H_2O$/EtOH/HCl-Gemisches. Nach der Reaktionszeit wurde am Rotationsverdampfer der Alkohol bei bis zu 100 °C und 100 mbar destilliert. Nach Erreichen der 100 mbar wurde dieser noch 15 Minuten gehalten bevor die Anlage entlastet wurde. Der erhaltene Sumpf war ein Vinyl- und Propyl-funktionalisiertes Siloxanoligomer mit Q-Strukturelementen basierend auf dem zur gezielten Hydrolyse und Kondensation bzw. Cokondensation eingesetzten VTEO, PTEO und Tetraethoxysilan.

Tabelle 4: weitere Einsatzstoffe V099

| Stoff | Einwaage |
|---|---|
| Wasser | 22,7 g |
| Ethanol | 174,8 g |
| Salzsäure | 0,19 g |

**Beispiel 7: VTMO/PTMO - Siloxanoligomer - V079**

Durchführung: In einer 2-1- Vierhalsapparatur mit Wasserkühlung und Magnetrührer wurden die zwei Monomere, 370,58g Vinyltrimethoxysilan und 514,20g Propyltrimethoxysilan vorgelegt. Im Anschluss wurde ein Gemisch aus 540,20g Methanol, 1,02g Salzsäure (20%) und 80,28g VE - Wasser bei RT und Umgebungsdruck innerhalb von 10 min zudosiert wobei ein exothermer Vorgang zu beobachten war. Die Temperatur stieg auf ca. 40 °C. Anschließend wurde der Ansatz auf 100°C Ölbadtemperatur erhitzt. Die Gesamtreaktionszeit belief sich auf 5 Stunden.
Nach der Reaktionszeit wurde der der Alkohol unter niedrigem Druck (< 1 mbar) bei 100°C Ölbadtemperatur abdestilliert. Erhalten wurden 596,30g Siloxanoligomer.
Die Ausbeuten In den Beispielen 1 bis 7 konnten durch das erfindungsgemäße Verfahren auf über 99% gesteigert werden.

**Vergleichsbeispiel 1:** V078 - Beispiel 1 aus EP0518057 B1 - Herstellung eines Cokondensats aus Vinyltrimethoxysilan und Methyltrimethoxysilan mit einem Molverhältnis Vinyl- : Methoxy-Gruppen von rd. 1 : 3

Durchführung: In einer 2-I-Vierhalsapparatur mit Wasserkühler und Magnetrührer wurden 397,6 g Vinyltrimethoxysilan (VTMO) und 244,6 g Methyltrimethoxysilan bei 20 °C vorgelegt. Das Gemisch wurde mit einer 2400 ppm Chlorwasserstoff enthaltenden Lösung von 49,9 g destilliertem Wasser in 332,8 g Methanol versetzt; dazu diente ein 500 ml Tropftrichter. Nach insgesamt 16 Stunden wurde das gesamte Methanol samt HCl bei ca. 300 mbar abdestilliert. Danach wurde das so erhaltene Oligomerengemisch bis zu einem Druck von ca. 1 mbar und einem Siedeintervall bis 113 °C destilliert. So wurden 170 g klares Produkt gewonnen.

Tabelle 5: Rohstoffe V078

| Stoff | Lieferant | Einwaage |
|---|---|---|
| VTMO | Evonik Degussa GmbH | 397,6 g |
| MTMS | Evonik Degussa GmbH | 244,6 g |
| Salzsäure 2400ppm | Merck (HCl 37%) Wasser Bidest | 49,9 g |

(fortgesetzt)

| Stoff | Lieferant | Einwaage |
|---|---|---|
| Methanol | ROTH | 332,8 g |

**Vergleichsbeispiel 2:** V081 - Beispiel 6 aus EP 0518057 B1 - Herstellung eines Kondensats aus Vinyltrimethoxysilan mit einem Molverhältnis von Vinyl- : Methoxy-Gruppen von ca. 1 : 1,75

Durchführung: In einer 2-I-Vierhalsapparatur mit Wasserkühler und Magnetrührer wurden 693,83 g VTMO bei 20 °C vorgelegt. Das Gemisch wurde mit einer 1100 ppm Chlorwasserstoff enthaltenden Lösung von 52,82 g destilliertem Wasser in 351,53 g Methanol versetzt. Dazu diente ein 500ml Tropftrichter. Die Temperatur stieg innerhalb von 26 Minuten auf ca. 36 °C an. Nach insgesamt 13 Stunden wurde das gesamte Methanol samt Salzsäure innerhalb von 2 - 3 Stunden bei ca. 300 mbar abdestilliert. Danach wurde das so erhaltene Oligomerengemisch bis zu einem Druck von ca. 1 mbar und einem Siedeintervall bis 100 °C destilliert. So wurden 240 g klares Produkt gewonnen.

Tabelle 6: Rohstoffe V081

| Stoff | Lieferant | Einwaage |
|---|---|---|
| VTMO | Evonik Degussa GmbH | 693,7 g |
| Methanol | | 351,5 g |
| Salzsäure 1100ppm | Merck (HCl 37%) Wasser Bidest | 52,8 g |

**Vergleichsbeispiele 3 bis 5 analog zu Bespiel 6, EP 0518057:**

Das in Beispiel 6 offenbarte Verfahren wurde jeweils für die Verbindung VTMO nachgearbeitet und für die Verbindungen VTEO, VTMO sowie für die Cooligomere VTMO und Propyltrimethoxysilan (PTMO) und für Vinyltriethoxsilan (VTEO) mit Propyltriethoxysilan (PTEO) als neue Varianten durchgeführt. Dabei wurden die Verfahren mit äquimolaren Mengen in einer Ansatzgröße mit 1000 g Maßstab durchgeführt. In einer 2I - Rührapparatur wurden jeweils die Silane bei Raumtemperatur vorgelegt (Vinyltrimethyoxysilan (V074), Vinyltriethyoxysilan (V075), Vinyltrimethoxy- und Propyltrimethoxysilan (V076) sowie Vinyltriethyoxy- und Propyltriethyoxysilan (V077). Das Wasser/Alkohol - Gemisch (Beispiele V074, V076, Methanol; Beispiele V075, V077 = Ethanol) das jeweils 1100 ppm (0,11%) Chlorwasserstoff beinhaltete, wurde zudosiert. Es war jeweils ein exothermer Temperaturverlauf zu beobachten. Die Temperatur stieg hierbei jeweils auf 35 - 40°C. Nach 13h Reaktionszeit wurde bei 300 mbar Absolutdruck der Alkohol innerhalb 3 Stunden abgezogen. Abschließend wurde das Oligomerengemisch selbst bei einem Druck <0,1mbar abdestilliert.

Tabelle 7: Einsatzstoffe und Ausbeute

| Versuchsnummer | V074 | V075 | V076 | V077 |
|---|---|---|---|---|
| Bemerkungen: Destillate | Beispiel 6 | VTEO neue Variante Beispiel 6 EP 0518057 | VTMO/PTMO neue Variante von Beispiel 6 EP 0518057 | VTEO/PTEO neue Variante von Beispiel 6 EP 0518057 |
| Silan A | VTMO 631,50 g | VTEO 614,46 g | VTMO 307,01 g | VTEO 301,35 g |
| Silan B | | | PTMO 340,35 g | PTEO 326,74 g |
| Katalysator (20%ige Salzsäure) | 2,02 g | 2,12 g | 1,86 g | 2,04 g |
| Alkohol | 320,02 g | 348,69 g | 305,24 g | 335,55 g |
| Wasser | 46,46 g | 34,74 g | 45,53 g | 34,32 g |
| Ausbeute (%), über mol Si | 37,40 | 93,75 | 76,02 | 89,62 |

**Analysenergebnisse**

Tabelle 8: Analysenergebnisse Vergleichsbeispiele 3 bis 5, k.R.: kein Rückstand, (1.1): einzelne schwarze Punkte am Tiegelboden; (1.2) kein Rückstand erkennbar, (1.3) schwarze Punkte am Tiegelboden und Tiegelbodenrand, (2): DTG1: Temperatur bei max. Masseabnahmegeschwindigkeit [dm/dt] - erster Peak.

| Versuch | V081 | V074 | V075 | V076 | V077 |
|---|---|---|---|---|---|
| Viskosität 20°C [mPa·s] | | 2,1 | 2,3 | 3 | 2,6 |
| TGA | | | | | |
| Gewichtsabnahme % | | 99,5%, k. R. | 98,3%, (1.1) | 99,5%, (1.2) | 98,2% (1.3) |
| DTG 1 (2) | | 176°C u. 196°C | 196 °C | 222 °C | 209 °C |
| 5% Masseverlust bei T = | 111 °C | 118 °C | 135 °C | 135 °C | 131 °C |
| 50% Masseverlust bei T = | 164 °C | 162 °C | 197 °C | 203 °C | 202 °C |
| 95% Masseverlust bei T = | | 209 °C | 235 °C | 243 °C | 238 °C |
| Masseverlust [%] bei 150°C | 28 | 23 | 12 | 26 | 11 |
| Masseverlust [%] bei 200°C | 99 | 86 | 59 | 49 | 50 |

Tabelle 9: Analysenergebnisse der Siloxanoligomere vom Typ VTEO/PTEO

| | Versuchs-Nr. V097 | Versuchs-Nr. V098 | Versuchs-Nr. V099 |
|---|---|---|---|
| Gesamtchlorid [mg/kg] | 55 | 35 | 60 |
| Hydrol. Chlorid [mg/kg] | 8 | 5 | 4 |
| $SiO_2$ [% (Masse)] | 39,1 | 41,4 | 38,6 |
| Freies Ethanol [% (Masse)] | 0,5 | 0,5 | 0,6 |
| VTEO/PTEO [% (Masse)] | 9 | 4,3 | 10,6 |
| Aussehen | 1 | 1 | 0 |
| Farbzahl (mg Pt-Co/l) | <5 | <5 | <5 |
| Dichte bei 20°C [g/cm3] | 0,965 | 0,98 | 0,964 |
| Viskosität bei 20°C [mPa s] | 2,3 | 3,2 | 2,2 |
| Flammpunkt (°C) | 12 | 38 | 46 |
| Alkohol nach Hydrolyse (%, VOC) | 16 | 10 | 8,6 |

Tabelle 10: Analysenergebnisse Siloxanoligomere analog V087 bis V089 und V079 hergestellt.

| Beschreibung | VTMO/PTMO Oligomer | VTMO Oligomer | VTEO Oligomer | VTEO/PTEO Oligomer |
|---|---|---|---|---|
| Oligomer | Sumpfprodukt | Sumpfprodukt | Sumpfprodukt | Sumpfprodukt |
| Versuchsnummer | V079 Beispiel 7 | analog V087 Beispiel 1 | analog V088 Beispiel 2 | analog V089 Beispiel 3 |

(fortgesetzt)

| Beschreibung | VTMO/PTMO Oligomer | VTMO Oligomer | VTEO Oligomer | VTEO/PTEO Oligomer |
|---|---|---|---|---|
| Oligomer | Sumpfprodukt | Sumpfprodukt | Sumpfprodukt | Sumpfprodukt |
| Gesamtchlorid [mg/kg] | 55,00 | 75,00 | 140,00 | 45,00 |
| hydrol.Chlorid [mg/kg] | 8,00 | < 3 | 16,00 | < 3 |
| pH - Wert | 4,10 | 4,30 | 3,70 | 3,70 |
| freies Methanol [Gew%] | < 0,1 | < 0,1 | - | - |
| freies Ethanol [Gew%] | - | - | 0,10 | < 0,1 |
| $SiO_2$-Gehalt [Gew %] | 50,50 | 54,40 | 46,50 | 42,90 |
| Flammpunkt [°C] | 92,00 | 104,00 | 101,00 | 99,00 |
| Dichte 20°C [g/mol] | 1,05 | 1,09 | 1,02 | 0,99 |
| Viskosität 20°C [mPa·s] | 5,60 | 5,10 | 3,70 | 4,40 |
| Brechzahl [20°C] | 1,42 | 1,43 | 1,42 | 1,42 |
| Alkohol nach Hydrolyse [%VOC] | 33,00 | 37,00 | 45,00 | 3,90 |

Tabelle 11 Analysenergebnisse zu V078 (Vergleichsbeispiel 1), (1) vgl. Beispiel 1 in EP0518057B1.

| Versuchs- Nr. V078 | Gesamtchloride [mg/kg] | hydrolysierbares Chlorid [mg/kg] | $SiO_2$ (Masse) [%] | VTMO (Masse) [%] | Farbzahl [mg Pt-Co/l] |
|---|---|---|---|---|---|
| Destillat (1) | 230 | 16 | 52,4 | <0,1 | <5 |

Tabelle 12: Analysenergebnisse zu V081 (Vergleichsbeispiel 2), (2) (vgl. Beispiel 6 in EP0518057B1).

| Versuchs- Nr. V081 | Gesamtchloride [mg/kg] | Hydrolysierbares. Chlorid, [mg/kg] | $SiO_2$ (Masse) [%] | VTMO (Masse) [%] | Farbzahl [mg Pt-Co/l] |
|---|---|---|---|---|---|
| Destillat (2) | 50 | <3 | 48,6 | 1,7 | <5 |

Tabelle 13: Auswertung der GPC-Analysenergebnisse (2) analoger zweiter Ansatz Die Analysen zeigen eine gute Reproduzierbarkeit der Molmassen als auch der Molmassenverteilung.

| Versuchs- Nummer | Mn [g/mol] | Mw [g/mol] | D = Mw/Mn |
|---|---|---|---|
| V087 | 461,98 | 545,00 | 1,1797 |
| V087 (2) | 460,40 | 538,63 | 1,1699 |
| V088 | 457,84 | 513,50 | 1,1606 |
| V088 (2) | 416,18 | 466,50 | 1,1209 |
| V089 | 446,93 | 510,18 | 1,1415 |

(fortgesetzt)

| Versuchs- Nummer | Mn [g/mol] | Mw [g/mol] | D = Mw/Mn |
|---|---|---|---|
| V097 | 369,51 | 419,02 | 1,134 |
| V098 | 418,20 | 456,81 | 1,0923 |
| V099 | 363,06 | 411,36 | 1,1330 |
| V078 | 275,13 | 291,11 | 1,0581 |
| V081 | 254,06 | 269,90 | 1,0624 |

Tabelle 14: Ergebnisse aus den $^{29}$Si-NMR-Untersuchen an den Siloxanoligomeren vom Typ VTEO, VTMO, VTEO/ PTEO sowie VTEO/PTEO/TEOS, [VS = Vinylsilyl, PS = Propylsilyl, ES = Ethoxysilyl]

| Versuchs-Nr. | Anteile in den Siloxanoligomer-Zusammensetzungen | | | |
|---|---|---|---|---|
| | Silan-Monomer [mol-%] | M-Struktur [mol-%] | D-Struktur [mol-%] | T-Struktur [mol-%] |
| V087 | 0,4 (VTMO) | 44,6 (VS) | 47,4 (VS) | 7,6 (VS) |
| V088 | 0,7 (VTEO) | 48,2 (VS) | 45,7 (VS) | 5,4 (VS) |
| V089 | - | 29,1 (VS) | 20,4 (VS) | 1,7 (VS) |
| | 0,5 (PTEO) | 32,5 (PS) | 15,3 (PS) | 0,5 (PS) |
| V097 | 1,4 (VTEO) | 38,1 (VS) | 11,2 (VS) | - |
| | 5,3 (PTEO) | 36,8 (PS) | 7,3 (PS) | - |
| V098 | 0,6 (VTEO) | 34,1 (VS) | 15,3 (VS) | - |
| | 2,5 (PTEO) | 36,1 (PS) | 11,4 (PS) | - |
| V099 | 1,9 (VTEO) | 35,2 (VS) | 9,8 (VS) | - |
| | 6,3 (PTEO) | 34,7 (PS) | 8,1 (PS) | - |
| | 0,5 (TEOS) | 2,7 (ES) | 0,8 (ES) | - |

Tabelle 15: Ergebnisse aus den $^{29}$Si-NMR-Analysen an den Produkten aus den Vergleichsversuchen V078 und V081, [VS = Vinylsilyl, MS = Methylsilyl]

| Vergleichsversuchs-Nr. | Anteile in den Siloxanoligomeren-Zusammensetzungen | | | |
|---|---|---|---|---|
| | M-Struktur [mol-%] | D-Struktur [mol-%] | T-Struktur [mol-%] | Silan-Monomer [mol-%] |
| V078 | 52,1 (VS) | 9,1 (VS) | - (VS) | 0,9 (VTMO) |
| | 29,3 (MS) | 8,6 (MS) | - (MS) | - (MTMS) |
| V081 | 91,8 (VS) | 6,8 (VS) | - (VS) | 1,2 (VTMO) |

Tabelle 16a: s. 16e

| Analysen | VTMO/PTMO (V079) | |
|---|---|---|
| GPC | Sumpf | |
| Mn [g/mol] | 374,80 | |
| Mw [g/mol] | 428,99 | |
| D | 1,14 | |

Tabelle 16b: s. 16e, MP = Molekulagewichte Peak

| Analysen | VTMO/PTMO (V079) | |
|---|---|---|
| Verteilung: GPC | MP [D] | Flächen [%] |
| Disiloxan | 214,65 | 8,44 |
| Trisiloxan | 320,66 | 35,64 |
| Tetrasiloxan | 420,89 | 27,29 |
| Pentasiloxan | 481,28 | 13,32 |
| > Pentasiloxan | 581,43 | 14,88 |

Tabelle 16c: s. 16e

| Analysen | VTMO/PTMO (V079) | |
|---|---|---|
| NMR: NMR 1H, 13C | Cooligomer | |
| Silan : Alkoxy | 2,4 | |
| Alkyl : Vinyl | 0,83 | |
| Alkyl : Alkohol | 0,02 | |
| Vinyl :Alkohol | | |
| 29 Si Siloxan | 29 Si Silan A | 29 Si Silan B |
| Monomergehalt Silan [%] | - | 0,20 |
| Zusatzsignal | - | |
| M-Struktur [%] | 16,70 | 25,70 |
| D-Struktur [%] | 24,40 | 25,70 |
| T-Struktur [%] | 3,90 | 2,20 |

Tabelle 16d: s. 16e

| Sonstige Analysen: | VTMO/PTMO (V079) |
|---|---|
| Gesamtchlorid [mg/kg] | 55,00 |
| hydrol.Chlorid [mg/kg] | 8,00 |
| pH-Wert | 4,10 |
| freies Methanol [Gew%] | < 0,1 |
| freies Ethanol [Gew%] | - |
| Si02-Gehalt [Gew %] | 50,50 |
| Farbzahl [mg Pt/Co/l] | < 5 |
| Aussehen | 1,00 |
| Flammpunkt [°C] | 92,00 |
| Dichte 20°C [g/mol] | 1,05 |
| Viskosität 20°C [mPa·s] | 5,60 |
| Brechzahl [20°C] | 1,42 |
| Alkohol nach Hydrolyse [%VOC] | 33,00 |

Tabelle 16e: Analysenergebnisse V079, Beispiel 7, (1)): DTG1: Temperatur bei max. Masseabnahmegeschwindigkeit [dm/dt] - erster Peak.

| TGA | V079 |
|---|---|
| Gewichtsabnahme % | 96,0 % |
| TG End : DTG 1 (1) | 235 °C |
| 5% Masseverlust bei T = | 156 °C |
| 50% Masseverlust bei T = | 232 °C |
| 95% Masseverlust bei T = | 538 °C |
| Masseverlust [%] bei 150°C | 4 |
| Masseverlust [%] bei 200°C | 23 |

Tabelle 17: Fraktionen der Siloxanoligomere sowie ihr Anteil in den Zusammensetzungen in Flächen-%, GPC weiterer analog Bsp. 1 bis 3 und 7 hergestellter Siloxanoligomere, (1) analog Bsp.1, V087, (2) analog Bsp.2, V088, (3) analog Bsp.3, V089, Die Angaben sind Anteile in Flächen-%, die über GPC-Messungen erhalten werden. Siehe Erläuterung auf Seite 72.

| Oligomer aus Silan | <Disiloxan [%] | Disiloxan, Cyclo-Trisiloxan [%] | Trisiloxan, Cyclo-Tetrasiloxan [%] | Tetrasiloxan, Cyclo-Pentasiloxan [%] | Pentasiloxan, Cyclo-Hexasiloxan [%] | > Pentasiloxan, [%] |
|---|---|---|---|---|---|---|
| VTMO (1) | 0,28 | 9,73 | 24,34 | 25,37 | 16,83 | 23,45 |
| VTEO (2) | 0,25 | 19,73 | 39,39 | 18,94 | 9,49 | 12,20 |
| VTEO/ PTEO (3) | 0,01 | 18,61 | 46,02 | 17,85 | 7,71 | 9,79 |
| VTMO/ PTMO (V079) | 0,43 | 8,44 | 35,64 | 27,29 | 13,32 | 14,88 |

Tabelle 18a: Mw, Mn und D weiterer analog Bsp. 1 bis 3 und 7 hergestellter Siloxanoligomere, (1) analog Bsp.1, V087, (2) analog Bsp.2, V088, (3) analog Bsp.3, V089.

| Oligomer aus Silan | Mw [g/mol] | Mn [g/mol] | D |
|---|---|---|---|
| VTMO (1) | 543,09 | 469,25 | 1,16 |
| VTEO (2) | 515,66 | 450,10 | 1,15 |
| VTEO/PTEO (3) | 514,59 | 464,13 | 1,11 |
| VTMO/PTMO (V079) | 374,80 | 428,99 | 1,14 |

Tabelle 18b: Mw (rel) weiterer analog Bsp. 1 bis 3 und 7 hergestellter Siloxanoligomere, (1) analog Bsp.1, V087, (2) analog Bsp.2, V088. Die Angaben sind Anteile in Flächen-%, die über GPC-Messungen erhalten werden. Siehe Erläuterung auf Seite 72.

| Probe | 0 - 250 rel. MW [%] | 250 - 500 rel. MW [%] | 500 - 750 rel. MW [%] | 750 - 1000 rel. MW [%] | > 1000 rel. MW [%] |
|---|---|---|---|---|---|
| VTMO (1) | 3,0 | 49,6 | 30,9 | 11,41 | 5,06 |
| VTEO (2) | 1,1 | 56,5 | 28,9 | 9,1 | 4,5 |

(fortgesetzt)

| Probe | 0 - 250 rel. MW [%] | 250 - 500 rel. MW [%] | 500 - 750 rel. MW [%] | 750 - 1000 rel. MW [%] | > 1000 rel. MW [%] |
|---|---|---|---|---|---|
| VTEO/PTEO (V079) | 0,9 | 63,3 | 25,2 | 7,28 | 3,37 |

Die Analysen zeigen, dass die erfindungsgemäßen Zusammensetzungen olefinischfunktionalisierter Siloxanoligomere mit einem Gehalt an Disiloxanen und/oder Cyclo-Trisiloxanen kleiner gleich 30 % (Flächen %, GPC), bevorzugt kleiner gleich 20 %, besonders geringe Masseverluste von unter 50 Gew.-% selbst bei hohen Temperaturen von größer 210 bis größer 220 °C im TGA zeigen. Ein besonderer Vorteil ist dabei auch ihr hoher Flammpunkt von größer 80 °C bzw. bis größer 90 °C. Es hat sich gezeigt, dass generell Zusammensetzung mit folgenden Anteilen an Siloxanoligomeren diese vorteilhaften Eigenschaften zeigen: kleiner gleich 30 % Disiloxane und/oder Cyclo-Trisiloxane, und vorzugsweise größer gleich 20 %, besonders bevorzugt größer gleich 23 % (Flächen %, GPC) lineare, verzweigte Trisiloxane und/oder Cyclo-Tetrasiloxane, und insbesondere größer gleich 10 %, insbesondere größer 14 % (Flächen %, GPC) lineare, verzweigte Tetrasiloxane und/oder Cyclo-Pentasiloxane und vorzugsweise höhermolekulare Anteile möglichst nur in geringen Mengen vorhanden sind. Hochmolekulare Oligomere führen zu einer schlechteren Verteilbarkeit in der Anwendungstechnik in den eingesetzten Kunststoffen, insbesondere während der Extruderlaufzeit, denn sie lassen sich nicht ausreichend schnell gleichmäßig verteilen. Daher ist es weiter bevorzugt, wenn die Zusammensetzungen olefinisch-funktionalisierte Siloxanoligomere aufweisen, deren Anteil an linearen oder verzweigten Pentasiloxanen und/oder Cyclohexasiloxanen zwischen 7 bis 40 % (Flächen %, GPC) beträgt. Besonders bevorzugt weist die Zusammensetzungen einen besonders geringen Anteil an Siloxanoligomeren, wie lineare, verzweigte Hexasiloxane, Cycloheptasiloxane und höhere Siloxane von kleiner 30 % auf, besonders bevorzugt von kleiner 25 %. Aufgrund der genannten Anforderungen, dass einerseits der Flammpunkt sehr hoch sein soll und auch die Massenverluste im Temperaturbereich zwischen 150 bis 200 °C, vorzugsweise auch zwischen 200 bis 220 °C besonders gering sein sollen und zugleich eine gute und schnelle Verteilbarkeit in den Produkten erzielt werden muss, ist generell ein sehr ausgewogenes und eng definiertes Verhältnis an Molekulargewichten in den Zusammensetzungen der olefinisch funktionalisierten Siloxanoligomere notwendig, um die angestrebten technischen Anforderungen zu erfüllen. Wie vorstehend anhand der Analytik belegt, erfüllen die alle nach dem erfindungsgemäßen Verfahren hergestellten Zusammensetzungen die genannten Anforderungen an die Reinheit, den geringen Gehalt an Gesamtchlorid, und weisen zudem hohe Flammpunkte oberhalb 90 °C auf, bei zugleich guter Verteilbarkeit in Polymeren, Prepolymeren oder Mischungen dieser ggf. zusammen mit Monomeren. Dabei ist die vorgenannte Offenbarung nicht auf die konkreten Beispiele beschränkt sondern gilt für alle erfindungsgemäßen Zusammensetzungen und Verfahren. Aufgrund der geringen Massenverluste bis 220 °C konnte der VOC Gehalt während einer Hochtemperaturumsetzung, bspw. in Extrudern, weiter gesenkt werden. Wie nachfolgend in den Anwendungsbeispielen belegt, konnte auch die Wasseraufnahme der unter Verwendung der erfindungsgemäßen Siloxanoligomere hergestellten Kabelcompounds weiter gesenkt werden.

Tabelle 19: TGA weiterer analog erfindungsgemäß Bsp. 1 bis 3 und 7 hergestellter Siloxanoligomere [(1) analog Bsp.1, V087, (2) analog Bsp.2, V088, (3) analog Bsp.3, V089]

| Bemerkung: jeweils Sumpfprodukt | VTMO-Oligomer (1) | VTEO-Oligomer (2) | VTMO-PTMO Oligomer (Bsp.7, V079) | VTEO-PTEO Oligomer (3) |
|---|---|---|---|---|
| 5% Masseverlust bei T = | 146 °C | 149 °C | 156 °C | 156 °C |
| 50% Masseverlust bei T = | 232 °C | 228 °C | 232 °C | 242 °C |
| Masseverlust [%] bei 150°C | 7 | 6 | 4 | 3 |
| Masseverlust [%] bei 200°C | 28 | 29 | 23 | 23 |

Anmerkung: Typische Verarbeitungstemperaturen im Kunststoff und Gummibereich liegen zwischen 150 und 200 °C.

**Knetungen**

Tabelle 20: Übersicht der zur Knetstudie verwendete Einsatzstoffe.

| Stofftyp | Bezeichnung |
|---|---|
| Polymer | EVA (Ethylen vinyl acetat) |
| Füllstoff | ATH (Aluminiumtrihydroxid) |
| Stabilisator | Irganox 1010 |
| Peroxid | Dicumylperoxid (DCUP) |

Vorbereitung der Messkörper: Von den hergestellten Proben wurden nach einer Lagerung von bei 23°C und 50% relative Luftfeuchtigkeit im Klimaraum, Probekörper für Zugversuche und die Bestimmung der Wasseraufnahmefähigkeit bzw. Bestimmung des Schmelzindex gemacht.

Tabelle 21: Peroxid-Mischungen für Knetungen

| Silan-DCUP-Lsg. Charge | Einwaage DCUP | Einwaage Silan | Für Versuch Nr. |
|---|---|---|---|
| V078 | 9,81g | 0,19g | V116 |
| V081 | 9,81g | 0,19g | V118 |
| Silan/Siloxan | VTMO-Siloxan | | |
| V087 | 4,91g | 0,09g | V150 |

Knetstudie: Folgende Knetungen wurden mit einem Temp.-Profil von "3 min bei 140 °C, von 140 °C auf 170 °C in 2 min, 5 min bei 170 °C" bei einer Drehzahl von 30 U/min im HAAKE-Kneter bearbeitet. Von jedem Ansatz wurden anschließend je zwei Platten bei 165 °C und einem Lastdruck von 20t gepresst.

Tabelle 22: Einwaagen der Knetstudie

| Versuchs- Nr. | Einwaage EVA | Einwaage ATH | Einwaage DCUP-Silan-Lsg | Silan-DCUP-Lsg. Charge | Bemerkung |
|---|---|---|---|---|---|
| V150 | | | 0,43g | V087 | |
| V116 | 27,72g | 41,61g | 0,45g | V078 | |
| V118 | | | 0,44g | V081 | Beispiele |
| V153 | | | - | - | Blindwert |

Anwendungstechnische Ausprüfungen: Von den hergestellten Proben wurden nach einer Lagerung von bei 23 °C und 50 % relative Luftfeuchtigkeit im Klimaraum, Probekörper für die Bestimmung der Wasseraufnahmefähigkeit gemacht.

Tabelle 23: Ergebnisse der Wasseraufnahmefähigkeit

| Info | Versuchsnummer | Wert [mg/cm2] 7d Lagerung |
|---|---|---|
| Ohne Silan | V153 | 3,81 |
| V078 | V116 | 1,55 |
| V081 | V118 | 1,40 |
| VTMO-Siloxan, V087 | V150 | 1,22 |

Die erfindungsgemäßen Zusammensetzungen zeigen in Kabelcompounds eine geringere Wasseraufnahme als bekannte Systeme.

**Patentansprüche**

1. Zusammensetzung enthaltend olefinisch funktionalisierte Siloxanoligomere, die höchstens einen olefinischen Rest am Silizium-Atom aufweisen,
   **dadurch gekennzeichnet,**

   **dass**

   - die olefinisch funktionalisierten Siloxanoligomere Si-O-vernetzte Strukturelemente aufweisen, die kettenförmige, cyclische, vernetzte oder optional raumvernetzte Strukturen bilden, wobei mindestens eine Struktur der allgemeinen Formel I entspricht,

   $$(R^1O)[(R^1O)_{1-x}(R^2)_xSi(A)O]_a[Si(Y)_2O]_c[Si(B)(R^4)_y(OR^3)_{1-y}O]_bR^3 \qquad (I),$$

   - wobei die Strukturelemente aus Alkoxysilanen abgeleitet sind und
   - A in dem Strukturelement einem olefinischen Rest entspricht, der ausgewählt ist aus einer linearen, verzweigten oder cyclischen Alkenyl- oder Cycloalkenyl-alkylen-funktionellen Gruppe mit jeweils 2 bis 16 C-Atomen und
   - B in dem Strukturelement einem gesättigten Kohlenwasserstoff-Rest entspricht, der ausgewählt ist aus einem linearen, verzweigten oder cyclischen Alkyl-Rest mit 1 bis 16 C-Atomen,
   - Y entspricht $OR^3$ oder in vernetzten und optional raumvernetzten Strukturen unabhängig voneinander $OR^3$ oder $O_{1/2}$,
   - wobei $R^1$ unabhängig voneinander einem linearen, verzweigten oder cyclischen Alkyl-Rest mit 1 bis 4 C-Atomen oder H entspricht,
   - $R^3$ jeweils unabhängig voneinander einem linearen, verzweigten oder cyclischen Alkyl-Rest mit 1 bis 4 C-Atomen oder H entspricht, $R^2$ jeweils unabhängig einem linearen, verzweigten oder cyclischen Alkyl-Rest mit 1 bis 15 C-Atomen entspricht, und $R^4$ jeweils unabhängig einem linearen, verzweigten oder cyclischen Alkyl-Rest mit 1 bis 15 C-Atomen entspricht,
   - a, b, c, x und y unabhängig ganzen Zahlen entsprechen, mit $1 \leq a$, $0 \leq b$, $0 \leq c$, x unabhängig voneinander 0 oder 1 ist, y unabhängig voneinander 0 oder 1 ist, und $(a+b+c) \geq 2$ ist,
   - wobei die Strukturelemente $[(R^1O)_{1-x}(R^2)_xSi(A)O]_a$, $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I zu kleiner gleich 80 % und größer gleich 30 % als M-Struktur vorliegen,
   - das Gewichtsmittel des Molekulargewichts (Mw) größer gleich 315 g/mol ist und
   - mit einem Gehalt an Rückständen des bei der Herstellung eingesetzten Säurekatalysators von kleiner gleich 250 mg/kg Zusammensetzung.

2. Zusammensetzung nach Anspruch 1,
   **dadurch gekennzeichnet,**
   **dass** die Siloxanoligomere abgeleitete Strukturelemente aus mindestens einem der Alkoxysilane aufweisen,

   (i) aus olefinisch funktionalisierten Alkoxysilanen der allgemeinen Formel II,

   $$A\text{-}Si(R^2)_x(OR^1)_{3-x} \qquad (II)$$

   mit A einem olefinischen Rest, der ausgewählt ist aus einer linearen, verzweigten oder cyclischen Alkenyl- oder Cycloalkenyl-alkylen-funktionellen Gruppe mit jeweils 2 bis 16 C-Atomen, mit $R^2$ jeweils unabhängig einem linearen, verzweigten oder cyclischen Alkyl-Rest mit 1 bis 15 C-Atomen und x gleich 0 oder 1 und $R^1$ jeweils unabhängig eine Methyl-, Ethyl- oder Propyl-Gruppe ist, und optional
   (ii) aus mit einem gesättigten Kohlenwasserstoff-Rest funktionalisierten Alkoxysilan der Formel III,

   $$B\text{-}Si(R^4)_y(OR^3)_{3-y} \qquad (III)$$

   mit B einem unsubstituierten Kohlenwasserstoff-Rest, der ausgewählt ist aus einem linearen, verzweigten oder cyclischen Alkyl-Rest mit 1 bis 16 C-Atomen, mit $R^4$ jeweils unabhängig einem linearen, verzweigten oder cyclischen Alkyl-Rest mit 1 bis 15 C-Atomen und y gleich 0 oder 1 und $R^3$ jeweils unabhängig eine Methyl-, Ethyl- oder Propyl-Gruppe ist und optional

(iii) aus einem Tetraalkoxysilan der allgemeinen Formel IV gleich $Si(OR^3)_4$ mit $R^3$ unabhängig voneinander wie vorstehend definiert.

**3.** Zusammensetzung nach Anspruch 1 oder 2,
**dadurch gekennzeichnet,**
**dass** in dem olefinisch funktionalisierten Alkoxysilanen der allgemeinen Formel II x gleich 0 ist und optional in dem mit einem gesättigten Kohlenwasserstoff-Rest funktionalisierten Alkoxysilan der Formel III y gleich 0 ist.

**4.** Zusammensetzung nach einem der Ansprüche 1 bis 3,
**dadurch gekennzeichnet,**
**dass** der Gehalt an Rückständen des bei der Herstellung eingesetzten Säurekatalysators an Chlor, Chlorid oder Gesamtchlorid kleiner gleich 250 mg/kg Zusammensetzung beträgt.

**5.** Zusammensetzung nach einem der Ansprüche 1 bis 4,
**dadurch gekennzeichnet,**
**dass** jeweils unabhängig voneinander ausgewählt

(i) das Strukturelement $[(R^1O)_{1-x}(R^2)_xSi(A)O]_a$ in der allgemeinen Formel I in Bezug auf alle Silizium-Atome der allgemeinen Formel I von 0,0 bis 8,0 % als T-Struktur vorliegt,
(ii) das die Strukturelemente $[(R^1O)_{1-x}(R^2)_xSi(A)O]_a$ und $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I von kleiner gleich 75 bis 40 % als D-Struktur vorliegen,
(iii) das Strukturelement $[(R^1O)_{1-x}(R^2)_xSi(A)O]_a$ in der allgemeinen Formel I in Bezug auf alle Silizium-Atome der allgemeinen Formel I von 25 bis 55 % als M-Struktur vorliegt,
(iv) das Strukturelement $[Si(B)(R^4)_y(OR^3)_{1-y}O]_b$ in der allgemeinen Formel I in Bezug auf alle Silizium-Atome der allgemeinen Formel I zu kleiner gleich 40% als M-Struktur vorliegt,
(v) das Strukturelement $[Si(Y)_2O]_c$ in der allgemeinen Formel I zu größer 20 % als D-Struktur vorliegt und
(vi) das Strukturelement $[Si(Y)_2O]_c$ in der allgemeinen Formel I von 0,0 bis 1 % als T-Struktur vorliegt.

**6.** Zusammensetzung nach einem der Ansprüche 1 bis 5,
**dadurch gekennzeichnet, dass**
das Gewichtsmittel des Molekulargewichts (Mw) größer gleich 350 g/mol bis 800 g/mol ist.

**7.** Zusammensetzung nach Anspruch 6
**dadurch gekennzeichnet, dass**
das Gewichtsmittel des Molekulargewichts (Mw) größer gleich 350 g/mol bis 750 g/mol ist.

**8.** Zusammensetzung nach einem der Ansprüche 1 bis 7,
**dadurch gekennzeichnet,**
**dass**

- in Formeln I und/oder II der olefinische Rest A jeweils unabhängig ausgewählt ist aus einer Vinyl-, Allyl-, Butenyl-, 3-Butenyl-, Pentenyl-, Hexenyl-, Ethylhexenyl-, Heptenyl-, Octenyl-, Cyclohexenyl-C1 bis C8-alkylen- Cyclohexenyl-2-ethylen-, 3'-Cyclohexenyl-2-ethylen-, Cyclohexadienyl-C1 bis C8-alkylen- oder Cyclohexadienyl-2-ethylenGruppe und unabhängig davon
- in Formeln I und/oder III der unsubstituierte Kohlenwasserstoff-Rest B jeweils unabhängig ausgewählt ist aus einer Methyl-, Ethyl-, Propyl-, i-Butyl-, Octyl- oder Hexadecyl-Gruppe und
- jeweils voneinander unabhängig $R^1$ eine Methyl-, Ethyl- oder Propyl-Gruppe ist und $R^3$ unabhängig eine Methyl-, Ethyl- oder Propyl-Gruppe ist.

**9.** Zusammensetzung nach einem der Ansprüche 1 bis 8,
**dadurch gekennzeichnet,**
**dass**

- in Formeln I und/oder II der olefinische Rest A eine Vinyl-Gruppe ist, und unabhängig davon
- in Formeln I und/oder III der unsubstituierte Kohlenwasserstoff-Rest B ausgewählt ist aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, Heptyl-, 2,2-Dimethylbutyl-, 2,3-Dimethylbutyl-, 2-Methylpentyl-, 3-Methylpentyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe, und
- jeweils voneinander unabhängig $R^1$ eine Methyl-, Ethyl- oder Propyl-Gruppe und $R^3$ unabhängig eine Methyl-, Ethyl- oder Propyl-Gruppe ist.

10. Zusammensetzung nach einem der Ansprüche 1 bis 9,
**dadurch gekennzeichnet,**
**dass** die olefinisch funktionalisierte Siloxanoligomere zu größer gleich 90 Flächen % gemessen durch GPC entsprechend der Beschreibung in Bezug auf die Gesamtzusammensetzung mit einem Molekulargewicht von kleiner gleich 1000 g/mol in der Zusammensetzung vorliegen.

11. Zusammensetzung nach einem der Ansprüche 1 bis 10,
**dadurch gekennzeichnet,**
**dass** das Gewichtsmittel des Molekulargewichts (Mw) größer 315 g/mol und das Zahlenmittel des Molekulargewichts (Mn) größer 300 g/mol sind, wobei die Polydispersität (D) als Quotient aus Mw/Mn bei 1,05 bis 1,25 liegt.

12. Zusammensetzung nach Ansprüche 1 bis 11,
**dadurch gekennzeichnet,**
**dass** c in Formel I gleich 0 ist.

13. Zusammensetzung nach einem der Ansprüche 1 bis 12,
**dadurch gekennzeichnet,**
**dass** das Gewichtsmittel des Molekulargewichts (Mw) größer gleich 420 g/mol und das Zahlenmittel des Molekulargewichts (Mn) größer gleich 400 g/mol sind, wobei die Polydispersität (D) als Quotient aus Mw/Mn bei 1,05 bis 1,25 liegt.

14. Zusammensetzung nach einem der Ansprüche 1 bis 13,
**dadurch gekennzeichnet,**
**dass** das Gewichtsmittel des Molekulargewichts (Mw) größer 450 g/mol bis 590 g/mol und das Zahlenmittel des Molekulargewichts (Mn) größer 410 g/mol bis 510 g/mol sind, wobei die Polydispersität (D) als Quotient aus Mw/Mn bei 1,05 bis 1,25 liegt.

15. Zusammensetzung nach einem der Ansprüche 1 bis 14,
**dadurch gekennzeichnet,**
**dass** in der Zusammensetzung die olefinisch funktionalisierten Siloxanoligomere zu größer gleich 45 Flächen % gemessen durch GPC entsprechend der Beschreibung als Trisiloxan, Tetrasiloxan, Cyclo-Tetrasiloxan und/oder Cyclo-Pentasiloxan in der Zusammensetzung vorliegen.

16. Zusammensetzung nach einem der Ansprüche 1 bis 15,
**dadurch gekennzeichnet,**
**dass** ein Masseverlust der Zusammensetzung von 50 Gew.-%, bestimmt mittels TGA, bei einer Temperatur oberhalb 210 °C eintritt.

17. Zusammensetzung nach einem der Ansprüche 1 bis 16,
**dadurch gekennzeichnet,**
**dass** der Masseverlust der Zusammensetzung bestimmt nach TGA mit Platintiegel Deckel mit Loch, 10 K/min bei einer Temperatur bis einschließlich 140 °C unter 5 Gew.-% liegt.

18. Zusammensetzung nach einem der Ansprüche 1 bis 17,
**dadurch gekennzeichnet,**
**dass** das Verhältnis von M- zu D-Strukturen im Siloxanoligomer oder der allgemeinen Formel I in Bezug auf alle Silizium-Atome bei 1 : 2 bis 10 : 1 liegt.

19. Zusammensetzung nach einem der Ansprüche 1 bis 18,
**dadurch gekennzeichnet, dass**

a) die Siloxanoligomere und mindestens eine Struktur der Formel I jeweils abgeleitet aus Alkoxysilanen der Formel II als olefinischen Rest A eine Vinyl-Gruppe aufweisen, wobei $R^1$ jeweils unabhängig voneinander einer Methyl- oder Ethyl-Gruppe entspricht,

b) die Siloxanoligomere und mindestens eine Struktur der Formel I jeweils abgeleitet aus Alkoxysilanen der Formel II als olefinischen Rest A eine Vinyl-Gruppe und abgeleitet aus Alkoxysilanen der Formel III als unsubstituierten Kohlenwasserstoff-Rest B eine Propyl-Gruppe aufweisen, wobei $R^1$ und $R^3$ jeweils unabhängig voneinander einer Methyl- oder Ethyl-Gruppe entsprechen, oder

c) die Siloxanoligomere und mindestens eine Struktur der Formel I jeweils abgeleitet aus Alkoxysilanen der Formel II und Formel IV und optional der Formel III ausgewählt aus a) oder b) sind, wobei $R^3$ aus Formel IV abgeleitet jeweils unabhängig voneinander einer Methyl- oder Ethyl-Gruppe entspricht.

**20.** Zusammensetzung nach einem der Ansprüche 1 bis 18,
**dadurch gekennzeichnet,**
**dass** jeweils unabhängig die Siloxanoligomere abgeleitet sind aus mindestens einem olefinisch funktionalisierten Alkoxysilan der allgemeinen Formel II, das ausgewählt ist aus Vinyltriethoxysilan, Vinyltrimethoxysilan, und optional aus mindestens einem Alkoxysilan der Formel III, wobei das Alkoxysilan der Formel III jeweils unabhängig ausgewählt ist aus Methyltriethoxysilan, Methyltrimethoxysilan, Ethyltriethoxysilan, Ethyltrimethoxysilan, Propyltriethoxysilan, Propyltrimethoxysilan, Butyltriethoxysilan, Butyltrimethoxysilan, n-Butyltriethoxysilan, n-Butyltrimethoxysilan, i-Butyltriethoxysilan, i-Butyltrimethoxysilan, Hexyltriethoxysilan, Hexyltrimethoxysilan, n-Hexyltriethoxysilan, n-Hexyltrimethoxysilan, iso-Hexyltriethoxysilan, iso-Hexyltrimethoxysilan, Octyltriethoxysilan, Octyltrimethoxysilan, n-Octyltriethoxysilan, n-Octyltrimethoxysilan, iso-Octyltriethoxysilan, iso-Octyltrimethoxysilan, Undecyltriethoxysilan, Undecyltrimethoxysilan, Decyltriethoxysilan, Decyltrimethoxysilan, Nonadecyltriethoxysilan, Nonadecyltrimethoxysilan, Dodecyltriethoxysilan, Dodecyltrimethoxysilan, $C_{13}H_{27}$-Triethoxysilan, $C_{13}H_{27}$-Trimethoxysilan, $C_{14}H_{29}$-Triethoxysilan, $C_{14}H_{29}$-Trimethoxysilan, $C_{15}H_{31}$-Trimethoxysilan, $C_{15}H_{31}$-Triethoxysilan, Hexadecyltriethoxysilan und Hexadecyltrimethoxysilan sowie deren Umesterungsprodukten.

**21.** Verfahren zur Herstellung einer Zusammensetzung nach einem der Ansprüche 1 bis 20, enthaltend olefinisch funktionalisierte Siloxanoligomere, indem mindestens

(i) ein olefinisch funktionalisiertes Alkoxysilan der allgemeinen Formel II,

$$A\text{-}Si(R^2)_x(OR^1)_{3-x} \qquad (II),$$

wobei in Formel II A einem olefinischen Rest entspricht, der ausgewählt ist aus einer linearen, verzweigten oder cyclischen Alkenyl- oder Cycloalkenyl-alkylen-funktionellen Gruppe mit jeweils 2 bis 16 C-Atomen, $R^2$ unabhängig einem linearen, verzweigten oder cyclischen Alkyl-Rest mit 1 bis 15 C-Atomen und x gleich 0 oder 1 und $R^1$ unabhängig einem linearen, verzweigten oder cyclischen Alkyl-Rest mit 1 bis 4 C-Atomen entsprechen,
(ii) in Gegenwart eines sauren Hydrolyse- und/oder Kondensationskatalysators,
(iii) mit Wasser in einem definierten molaren Verhältnis von Wasser zu Alkoxy-Gruppen der Alkoxysilane von 1 : 2,75 bis 1 : 5,0 in Gegenwart eines Lösemittels zu den Siloxanoligomeren umgesetzt werden und
(iv) der Hydrolysealkohol und das vorliegende Lösemittel im Wesentlichen abgetrennt werden und
(v) die Zusammensetzung enthaltend olefinisch funktionalisierte Siloxanoligomere im Anschluss an Schritt (iv) als Sumpfprodukt gewonnen wird.

**22.** Verfahren nach Anspruch 21,
**dadurch gekennzeichnet, dass** (i) ein olefinisch funktionalisiertes Alkoxysilan der allgemeinen Formel II in (ii) in Gegenwart eines sauren Hydrolyse- und/oder Kondensationskatalysators mit
(i.1) mindestens einem Alkoxysilan der Formel III umgesetzt wird,

$$B\text{-}Si(R^4)_y(OR^3)_{3-y} \qquad (III),$$

wobei in Formel III B einem gesättigten Kohlenwasserstoff-Rest entspricht, der ausgewählt ist aus einem linearen, verzweigten oder cyclischen Alkyl-Rest mit 1 bis 16 C-Atomen, $R^3$ jeweils unabhängig voneinander einem linearen, verzweigten oder cyclischen Alkyl-Rest mit 1 bis 4 C-Atomen und $R^4$ einem linearen, verzweigten oder cyclischen Alkyl-Rest mit 1 bis 15 C-Atomen entsprechen und y gleich 0 oder 1 ist.

**23.** Verfahren nach Anspruch 21 oder 22,
**dadurch gekennzeichnet, dass** (i) ein olefinisch funktionalisiertes Alkoxysilan der allgemeinen Formel II, und optional (i.1) mindestens ein Alkoxysilan der Formel III, in (ii) in Gegenwart eines sauren Hydrolyse- und/oder Kondensationskatalysators mit

(i.2) mindestens einem Tetraalkoxysilan der Formel IV umgesetzt werden,

$$Si(OR^3)_4 \qquad (IV),$$

wobei in Formel IV $R^3$ jeweils unabhängig voneinander ein linearer, verzweigter oder cyclischer Alkyl-Rest mit 1 bis 4 C-Atomen ist.

**24.** Verfahren nach einem der Ansprüche 21 bis 23,
**dadurch gekennzeichnet,**
**dass** die Umsetzung in Gegenwart mindestens eines Alkohols als Lösemittel erfolgt.

**25.** Verfahren nach einem der Ansprüche 21 bis 24, **dadurch gekennzeichnet, dass** das mindestens ein Alkoxysilan der Formel II und optional mindestens ein Alkoxysilan der Formel III mit Wasser in einem definierten molaren Verhältnis von Wasser zu Alkoxy-Gruppen der Alkoxysilane von 1 : 3 bis 1 : 4,5 zu den Siloxanoligomeren umgesetzt werden.

**26.** Verfahren nach einem der Ansprüche 21 bis 25,
**dadurch gekennzeichnet,**
**dass**

- im olefinisch funktionalisierten Alkoxysilan der allgemeinen Formel II,

$$A\text{-}Si(R^2)_x(OR^1)_{3\text{-}x} \qquad (II),$$

A ausgewählt ist aus einer Vinyl-, Allyl-, Butenyl-, Pentenyl-, Hexenyl-, Ethylhexenyl-, Heptenyl-, Octenyl-, Cyclohexenyl-C1 bis C8-alkylen-, Cyclohexenyl-2-ethylen-, 3'-Cyclohexenyl-2-ethylen- und Cyclohexadienyl-C1 bis C8-alkylen-Gruppe, und $R^1$ unabhängig eine Methyl-, Ethyl- oder Propyl-Gruppe und x gleich 0 oder 1 sind, und unabhängig
- im Alkoxysilan der Formel III,

$$B\text{-}Si(R^4)_y(OR^3)_{3\text{-}y} \qquad (III),$$

der unsubstituierte Kohlenwasserstoff-Rest B ausgewählt ist aus einer Methyl-, Ethyl-, Propyl- , Butyl-, i-Butyl-, Octyl-, Butyl-, n-Butyl-, tert-Butyl, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Heptyl-, n-Heptyl-, Octyl-, iso-Octyl-, No-nyl-, Decyl-, Undecyl- Dodecyl-, $C_{13}H_{27}$-, $C_{14}H_{29}$-, $C_{15}H_{31}$- und Hexadecyl-Gruppe und $R^3$ einer Methyl-, Ethyl- oder Propyl-Gruppe und y gleich 0 oder 1 sind.

**27.** Verfahren nach einem der Ansprüche 21 bis 26
**dadurch gekennzeichnet, dass**
in dem olefinisch funktionalisierten Alkoxysilanen der allgemeinen Formel II x gleich 0 ist und/oder in dem mit einem gesättigten Kohlenwasserstoff-Rest funktionalisierten Alkoxysilan der Formel III y gleich 0 ist.

**28.** Verfahren nach Anspruch 27,
**dadurch gekennzeichnet,**
**dass** jeweils unabhängig

- das olefinisch funktionalisierten Alkoxysilan der allgemeinen Formel II ausgewählt ist aus Vinyltriethoxysilan, Allyltriethoxysilan, Butenyltriethoxysilan, Pentenyltriethoxysilan, Hexenyltriethoxysilan, Ethylhexenyltriethoxysilan, Heptenyltriethoxysilan, Octenyltriethoxysilan, Cyclohexenyl-C1 bis C8-alkylentriethoxysilan, Cyclohexenyl-2-ethylentriethoxysilan, 3'-Cyclohexenyl-2-ethylentriethoxysilan, Cyclohexadienyl-C1 bis C8-alkylentriethoxysilan oder Cyclohexadienyl-2-ethylentriethoxysilan, Vinyltrimethoxysilan, Allyltrimethoxysilan, Butenyltrime-thoxysilan, Pentenyltrimethoxysilan, Hexenyltrimethoxysilan, Ethylhexenyltrimethoxysilan, Heptenyltrimethoxy-silan, Octenyltrimethoxysilan, Cyclohexenyl-C1 bis C8-alkylentrimethoxysilan, Cyclohexenyl-2-ethylentrimethoxysilan, 3'-Cyclohexenyl-2-ethylentrimethoxysilan, Cyclohexadienyl-C1 bis C8-alkylentrimethoxysilan oder Cyclohexadienyl-2-ethylentrimethoxysilan, und jeweils unabhängig
- das Alkoxysilan der Formel III ausgewählt ist aus Methyltriethoxysilan, Ethyltriethoxysilan, n-Propyltriethoxysilan, iso-Propyltriethoxysilan, Butyltriethoxysilan, n-Butyltriethoxysilan, i-Butyltriethoxysilan, Hexyltriethoxysilan, n-Hexyltriethoxysilan, iso-Hexyltriethoxysilan, Heptyltriethoxysilan, Octyltriethoxysilan, n-Octyltriethoxysilan, iso-Octyltriethoxysilan, Undecyltriethoxysilan, Decyltriethoxysilan, Nonadecyltriethoxysilan, Dodecyltriethoxysilan, $C_{13}H_{27}$-Triethoxysilan, $C_{14}H_{29}$-Triethoxysilan oder $C_{15}H_{31}$-Triethoxysilan, Hexadecyltriethoxysilan, Methyltrimethoxysilan, Ethyltrimethoxysilan, n-Propyltrimethoxysilan, iso-Propyltrimethoxysilan Butyltrimethoxysilan, n-Butyltrimethoxysilan, i-Butyltrimethoxysilan, Hexyltrimethoxysilan, n-Hexyltrimethoxysilan, iso-Hexyltrimethoxysilan, Heptyltrimethoxysilan, Octyltrimethoxysilan, n-Octyltrimethoxysilan, iso-Octyltrimethoxysilan, Undecyltrimethoxysilan, Decyltrimethoxysilan, Nonadecyltrimethoxysilan, Dodecyltrimethoxysilan, $C_{13}H_{27}$-Trimethoxysilan, $C_{14}H_{29}$-Trimethoxysilan oder $C_{15}H_{31}$-Trimethoxysilan und Hexadecyltrimethoxysilan und jeweils unabhängig

- das Alkoxysilan der Formel IV ausgewählt ist aus Tetraethoxysilan und Tetramethoxysilan.

29. Verfahren nach einem der Ansprüche 21 bis 28,
**dadurch gekennzeichnet,**
**dass** ein Vinyltrimethoxysilan oder ein Vinyltriethoxysilan eingesetzt wird.

30. Verfahren nach einem der Ansprüche 21 bis 29,
**dadurch gekennzeichnet,**
**dass** die Alkoxysilane der Formeln II, III und/oder IV in Gegenwart des sauren Katalysators Chlorwasserstoff zumindest partiell hydrolysiert und kondensiert werden.

31. Verfahren nach einem der Ansprüche 21 bis 30,
**dadurch gekennzeichnet,**
**dass** (v) ein Gehalt an Gesamtchlorid kleiner gleich 250 mg/kg eingestellt wird.

32. Verfahren nach einem der Ansprüche 21 bis 31,
**dadurch gekennzeichnet,**
**dass** (v) die Gesamtzahl der Silizium-Atome im Siloxanoligomer von kleiner gleich 80 % bis größer gleich 35 % als M-Struktur vorliegen, bei einem Gewichtsmittel des Molekulargewichts (Mw) von größer gleich 315 g/mol.

33. Verfahren nach einem der Ansprüche 21 bis 32,
**dadurch gekennzeichnet, dass** in dem Verfahren ein

a) Vinyltrimethoxysilan als Alkoxysilan der Formel II eingesetzt wird,
b) Vinyltriethoxysilan als Alkoxysilan der Formel II eingesetzt wird,
c) als Alkoxysilane der Formeln II und III Vinyltrimethoxysilan und Propyltrimethoxysilan, Vinyltriethoxysilan und Propyltriethoxysilan, Vinyltriethoxysilan und Propyltrimethoxysilan oder Vinyltrimethoxysilan und Propyltriethoxysilan eingesetzt werden, oder in a), b) oder c) die entsprechend Methoxy- und Ethoxy-gemischtfunktionalisierten Alkoxysilane eingesetzt werden oder
d) zusätzlich in a), b) oder c) als Alkoxysilan der Formel IV ein Tetraethoxysilan, Tetramethoxysilan oder ein Gemisch davon eingesetzt wird.

34. Verfahren nach einem der Ansprüche 21 bis 33, **gekennzeichnet, durch** die Einzelschritte,

1) Vorlegen mindestens eines (i) olefinisch funktionalisierten Alkoxysilans der Formel II oder mindestens eines (i.1) olefinische funktionalisierten Alkoxysilans der Formel I und mindestens eines Alkoxysilans der Formel III und jeweils optional mindestens eines (i.2) Alkoxysilans der Formel IV,
2) Zusetzen eines Gemisches umfassend Lösemittel, Wasser und HCl als sauren Hydrolyse- und/oder Kondensationskatalysator, wobei das Lösemittel der korrespondierende Alkohol zum Hydrolysealkohol ist und ein definiertes molares Verhältnis von Wasser zu Alkoxy-Gruppen der Alkoxysilane von 1 : 2,75 bis 5,0, vorzugsweise von 3,0 bis 1 : 4,5 eingestellt wird, wobei der Alkohol in einer Gewichtsmenge von 0,2- bis 8-fach in Bezug auf das Gewicht der Alkoxysilane der Formeln II, III und optional IV eingesetzt wird.

35. Verfahren nach Anspruch 34, **dadurch gekennzeichnet, dass** der Alkohol in einer Gewichtsmenge von 0,2 bis 1,5-fach in Bezug auf das Gewicht der Silane der Formeln II, III und optional IV eingesetzt wird.

36. Zusammensetzung enthaltend olefinisch funktionalisierte Siloxanoligomere erhältlich nach einem Verfahren nach einem der Ansprüche 21 bis 35.

**37.** Verwendung einer Zusammensetzung nach einem der Ansprüche 1 bis 20 oder 36 oder hergestellt nach einem der Ansprüche 21 bis 35, als Haftmittel, als Vernetzungsmittel durch Pfropfpolymerisation und/oder hydrolytische Kondensation in an sich bekannter Weise, zur Herstellung von mit olefinisch funktionalisierten Siloxanoligomeren gepfropfter Polymere, Pre-Polymere und/oder von mineralisch gefüllten Polymeren, zur Herstellung von mit olefinisch funktionalisierten Siloxanoligomeren gepfropfter Polymere, Pre-Polymere und/oder von mineralisch gefüllten Thermoplasten oder Elastomeren oder von Pre-Polymeren dieser, zur Pfropfung oder bei der Polymerisation thermoplastischer Polyolefine, als Trockenmittel, insbesondere als Wasserfänger für Silikondichtmassen, in vernetzbaren Polymeren zur Herstellung von Kabeln, zur Herstellung vernetzbarer Polymere, als Ölphase in einer Emulsion und/oder gemeinsam mit Organosilanen oder Organopolysiloxanen, zur Füllstoffmodifizierung, Füllstoffbeschichtung, Harzmodifizierung, Harzadditiv, Oberflächenmodifizierung, Oberflächenfunktionalisierung, Oberflächenhydrophobierung, als Bestandteil in Beschichtungssystemen als Bestandteil in Sol-Gel Systemen Beschichtungssystemen oder Hybrid-Beschichtungssystemen, zur Modifizierung von Kathoden und Anodenmaterialien in Batterien, als Elektrolytflüssigkeit, als Additiv in Elektrolytflüssigkeiten, für die Modifizierung von Fasern, insbesondere Glasfasern und Naturfasern, sowie zur Modifizierung von Textilien, zur Modifizierung von Füllstoffen für die Kunststeinindustrie, als Bautenschutzmittel oder Bestandteil in Bautenschutzmittel, als Zusatz für mineralisch härtende Massen, zur Modifizierung von Holz, Holzfasern und Cellulose.

**Claims**

**1.** Composition comprising olefinically functionalized siloxane oligomers having not more than one olefinic radical on the silicon atom, **characterized in that**

- the olefinically functionalized siloxane oligomers have Si-O-crosslinked structural elements which form catenary, cyclic, crosslinked or optionally three-dimensionally crosslinked structures, with at least one structure corresponding to the general formula I,

$$(R^1O)[(R^1O)_{1-x}(R^2)_xSi(A)O]_a[Si(Y)_2O]_c[Si(B)(R^4)_y(OR^3)_{1-y}O]_bR^3 \qquad (I),$$

- the structural elements being derived from alkoxysilanes and
- A in the structural element corresponding to an olefinic radical selected
from a linear, branched or cyclic alkenyl- or cycloalkenyl-alkylene-functional group having in each case 2 to 16 C atoms, and
- B in the structural element corresponding to a saturated hydrocarbon radical selected from a linear, branched or cyclic alkyl radical having 1 to 16 C atoms,
- Y corresponds to $OR^3$ or, in crosslinked and optionally three-dimensionally crosslinked structures, independently at each occurence, to $OR^3$ or $O_{1/2}$,
- where $R^1$ independently at each occurrence corresponds to a linear, branched or cyclic alkyl radical having 1 to 4 C atoms or H,
- $R^3$ independently at each occurrence corresponds to a linear, branched or cyclic alkyl radical having 1 to 4 C atoms or H, $R^2$ independently at each occurrence corresponds to a linear, branched or cyclic alkyl radical having 1 to 15 C atoms, and $R^4$ independently at each occurrence corresponds to a linear, branched or cyclic alkyl radical having 1 to 15 C atoms,
- a, b, c, x and y independently correspond to integers, with $1 \leq a$, $0 \leq b$,
$0 \leq c$, x independently at each occurrence is 0 or 1, y independently at each occurrence is 0 or 1, and $(a+b+c) \geq 2$,
- where the structural elements $[(R^1O)_{1-x}(R^2)_xSi(A)O]_a$, $[Si(B)(R^4)_y(OR^3)_{1-y}O]_b$ and $[Si(Y)_2O]_c$ in the general formula I together, in relation to all
silicon atoms of the general formula I, are present at less than or equal to 80% and greater than or equal to 30% as M structure,
- the weight-average molecular weight (Mw) is greater than or equal to 315 g/mol, and
- the amount of residues of the acid catalyst used during preparation is less than or equal to 250 mg/kg of composition.

**2.** Composition according to Claim 1, **characterized in that** the siloxane oligomers have derived structural elements from at least one of the alkoxysilanes,

(i) from olefinically functionalized alkoxysilanes of the general formula II,

$$A\text{-}Si(R^2)_x(OR^1)_{3-x} \qquad (II)$$

where A is an olefinic radical selected from a linear, branched or cyclic alkenyl- or cycloalkenyl-alkylene-functional group having in each case 2 to 16 C atoms, where $R^2$ independently at each occurrence is a linear, branched or cyclic alkyl radical having 1 to 15 C atoms and x is 0 or 1, and $R^1$ independently at each occurrence is a methyl, ethyl or propyl group, and optionally
(ii) from alkoxysilane of the formula III, functionalized with a saturated hydrocarbon radical,

$$B\text{-}Si(R^4)_y(OR^3)_{3-y} \qquad (III)$$

where B is an unsubstituted hydrocarbon radical selected from a linear, branched or cyclic alkyl radical having 1 to 16 C atoms,
where $R^4$ independently at each occurence is a linear, branched or cyclic alkyl radical having 1 to 15 C atoms and y is 0 or 1, and $R^3$ independently at each occurrence is a methyl, ethyl or propyl group, and optionally
(iii) from a tetraalkoxysilane of the general formula IV which is $Si(OR^3)_4$, where $R^3$ independently at each occurrence is as defined above.

3. Composition according to Claim 1 or 2,
   **characterized**
   **in that** in the olefinically functionalized alkoxysilanes of the general formula II, x is 0, and optionally in the alkoxysilane of the formula III functionalized with a saturated hydrocarbon radical, y is 0.

4. Composition according to any of Claims 1 to 3,
   **characterized**
   **in that** the amount of residues of the acid catalyst used in the preparation, in terms of chlorine, chloride or total chloride, is less than or equal to 250 mg/kg of composition.

5. Composition according to any of Claims 1 to 4,
   **characterized**
   **in that**, selected in each case independently of one another

   (i) the structural element $[(R^1O)_{1-x}(R^2)_xSi(A)O]_a$ in the general formula I is present, in relation to all silicon atoms of the general formula I, at 0.0% to 8.0% as T structure,
   (ii) the the structural elements $[(R^1O)_{1-x}(R^2)_xSi(A)O]_a$ and $[Si(B)(R^4)_y(OR^3)_{1-y}O]_b$ and $[Si(Y)_2O]_c$ in the general formula I are present together, in relation to all silicon atoms of the general formula I, at less than or equal to 75% to 40% as D structure,
   (iii) the structural element $[(R^1O)_{1-x}(R^2)_xSi(A)O]_a$ in the general formula I is present, in relation to all silicon atoms of the general formula I, at 25% to 55% as M structure,
   (iv) the structural element $[Si(B)(R^4)_y(OR^3)_{1-y}O]_b$ in the general formula I, is present, in relation to all silicon atoms of the general formula I, at less than or equal to 40% as M structure,
   (v) the structural element $[Si(Y)_2O]_c$ in the general formula I is present at greater than 20% as D structure, and
   (vi) the structural element $[Si(Y)_2O]_c$ in the general formula I is present at 0.0% to 1% as T structure.

6. Composition according to any of Claims 1 to 5,
   **characterized in that**
   the weight-average molecular weight (Mw) is greater than or equal to 350 g/mol to 800 g/mol.

7. Composition according to Claim 6,
   **characterized in that**
   the weight-average molecular weight (Mw) is greater than or equal to 350 g/mol to 750 g/mol.

8. Composition according to any of Claims 1 to 7,
   **characterized**
   **in that**

   - in formulae I and/or II, the olefinic radical A, independently at each occurrence, is selected from a vinyl, allyl, butenyl, 3-butenyl, pentenyl, hexenyl, ethylhexenyl, heptenyl, octenyl, cyclohexenyl-Cl to C8-alkylene-cyclohexenyl-2-ethylene, 3'-cyclohexenyl-2-ethylene, cyclohexadienyl-Cl to C8-alkylene or cyclohexadienyl-2-ethylene group, and independently thereof
- in formulae I and/or III, the unsubstituted hydrocarbon radical B, independently at each occurrence, is selected from a methyl, ethyl, propyl, isobutyl, octyl or hexadecyl group, and
- independently at each occurrence, $R^1$ is a methyl, ethyl or propyl group and $R^3$ independently is a methyl, ethyl or propyl group.

9. Composition according to any of Claims 1 to 8,
   **characterized**
   **in that**

   - in formulae I and/or II, the olefinic radical A is a vinyl group, and independently thereof
   - in formulae I and/or III, the unsubstituted hydrocarbon radical B is selected from a methyl, ethyl, propyl, butyl, isobutyl, n-butyl, tert-butyl, pentyl, n-pentyl, isopentyl, neopentyl, hexyl, isohexyl, neohexyl, heptyl, 2,2-dimethylbutyl, 2,3-dimethylbutyl, 2-methylpentyl, 3-methylpentyl, octyl, n-octyl, isooctyl, nonyl, decyl, undecyl, dodecyl, $C_{13}H_{27}$-, $C_{14}H_{29}$-, $C_{15}H_{31}$- and hexadecyl group, and
   - independently at each occurrence $R^1$ is a methyl, ethyl or propyl group and $R^3$ independently is a methyl, ethyl or propyl group.

10. Composition according to any of Claims 1 to 9,
    **characterized**
    **in that** the olefinically functionalized siloxane oligomers are present at greater than or equal to 90 area% measured by GPC according to the description in relation to the overall composition with a molecular weight of less than or equal to 1000 g/mol in the composition.

11. Composition according to any of Claims 1 to 10,
    **characterized**
    **in that** the weight-average molecular weight (Mw) is greater than 315 g/mol and the number-average molecular weight (Mn) is greater than 300 g/mol, the
    polydispersity (D), as the ratio of Mw/Mn, being 1.05 to 1.25.

12. Composition according to Claims 1 to 11,
    **characterized**
    **in that** c in formula I is 0.

13. Composition according to any of Claims 1 to 12,
    **characterized**
    **in that** the weight-average molecular weight (Mw) is greater than or equal to 420 g/mol and the number-average molecular weight (Mn) is greater than or equal to 400 g/mol, with the polydispersity (D), as the ratio of Mw/Mn, being 1.05 to 1.25.

14. Composition according to any of Claims 1 to 13,
    **characterized**
    **in that** the weight-average molecular weight (Mw) is greater than 450 g/mol to 590 g/mol and the number-average molecular weight (Mn) is greater than 410 g/mol to 510 g/mol, with the polydispersity (D), as the ratio of Mw/Mn, being 1.05 to 1.25.

15. Composition according to any of Claims 1 to 14,
    **characterized**
    **in that** in the composition the olefinically functionalized siloxane oligomers are present at greater than or equal to 45 area% measured by GPC according to the description as trisiloxane, tetrasiloxane, cyclotetrasiloxane and/or cyclopentasiloxane in the composition.

16. Composition according to any of Claims 1 to 15,
    **characterized**
    **in that** the composition suffers a loss of mass of 50 wt%, determined by TGA, at a temperature above 210°C.

**17.** Composition according to any of Claims 1 to 16,
**characterized**
**in that** the loss of mass by the composition as determined by TGA with platinum crucible, lid with hole, 10 K/min at a temperature up to and including 140°C is less than 5 wt%.

**18.** Composition according to any of Claims 1 to 17,
**characterized**
**in that** the ratio of M to D structures in the siloxane oligomer or in the general formula I, in relation to all silicon atoms, is 1: 2 to 10: 1.

**19.** Composition according to any of Claims 1 to 18,
**characterized in that**

a) the siloxane oligomers and at least one structure of the formula I, in each case derived from alkoxysilanes of the formula II as olefinic radical A, have a vinyl group, with $R^1$ independently at each occurrence corresponding to a methyl or ethyl group,
b) the siloxane oligomers and at least one structure of the formula I, in each case derived from alkoxysilanes of the formula II as olefinic radical A, have a vinyl group and, derived from alkoxysilanes of the formula III as unsubstituted hydrocarbon radical B, have a propyl group, with $R^1$ and $R^3$ independently at each occurrence corresponding to a methyl or ethyl group, or
c) the siloxane oligomers and at least one structure of the formula I, in each case derived from alkoxysilanes of the formula II and formula IV and optionally of the formula III, are selected from a) or b), where $R^3$, derived from formula IV, independently at each occurrence corresponds to a methyl or ethyl group.

**20.** Composition according to any of Claims 1 to 18,
**characterized**
**in that**, in each case independently, the siloxane oligomers are derived from at least one olefinically functionalized alkoxysilane of the general formula II which is selected from vinyltriethoxysilane and vinyltrimethoxysilane, and optionally from at least one alkoxysilane of the formula III, the alkoxysilane of the formula III, independently at each occurrence, being selected from methyltriethoxysilane, methyltrimethoxysilane, ethyltriethoxysilane, ethyltrimethoxysilane, propyltriethoxysilane, propyltrimethoxysilane, butyltriethoxysilane, butyltrimethoxysilane, n-butyltriethoxysilane, n-butyltrimethoxysilane, isobutyltriethoxysilane, isobutyltrimethoxysilane, hexyltriethoxysilane, hexyltrimethoxysilane, n-hexyltriethoxysilane, n-hexyltrimethoxysilane, isohexyltriethoxysilane, isohexyltrimethoxysilane, octyltriethoxysilane, octyltrimethoxysilane, n-octyltriethoxysilane, n-octyltrimethoxysilane, isooctyltriethoxysilane, isooctyltrimethoxysilane, undecyltriethoxysilane, undecyltrimethoxysilane, decyltriethoxysilane, decyltrimethoxysilane, nonadecyltriethoxysilane, nonadecyltrimethoxysilane, dodecyltriethoxysilane, dodecyltrimethoxysilane, $C_{13}H_{27}$-triethoxysilane, $C_{13}H_{27}$-trimethoxysilane, $C_{14}H_{29}$-triethoxysilane, $C_{14}H_{29}$-trimethoxysilane, $C_{15}H_{31}$-trimethoxysilane, $C_{15}H_{31}$-triethoxysilane, hexadecyltriethoxysilane and hexadecyltrimethoxysilane, and also their transesterification products.

**21.** Process for preparing a composition according to any of Claims 1 to 20, comprising olefinically functionalized siloxane oligomers, by reacting at least

(i) an olefinically functionalized alkoxysilane of the general formula II,

$$A\text{-}Si(R^2)_x(OR^1)_{3-x} \qquad (II),$$

where in formula II A corresponds to an olefinic radical selected from a linear, branched or cyclic alkenyl- or cycloalkenyl-alkylene-functional group having in each case 2 to 16 C atoms, $R^2$ independently corresponds to a linear, branched or cyclic alkyl radical having 1 to 15 C atoms and x is 0 or 1 and $R^1$ independently corresponds to a linear, branched or cyclic alkyl radical having 1 to 4 C atoms,

(ii) in the presence of an acidic hydrolysis and/or condensation catalyst,
(iii) with water in a defined molar ratio of water to alkoxysilane alkoxy groups of 1: 2.75 to 1: 5.0, in the presence of a solvent, to give the siloxane oligomers, and
(iv) the hydrolysis alcohol and the solvent present are substantially

separated off, and
(v) the composition comprising olefinically functionalized

siloxane oligomers is obtained, following step (iv), as the liquid-phase product.

22. Process according to Claim 21,
**characterized in that** (i) an olefinically functionalized alkoxysilane of the general formula II is reacted in (ii) in the presence of an acidic hydrolysis and/or condensation catalyst with (i.1) at least one alkoxysilane of the formula III,

$$B\text{-}Si(R^4)_y(OR^3)_{3-y} \qquad (III),$$

where in formula III B corresponds to a saturated hydrocarbon radical selected from a linear, branched or cyclic alkyl radical having 1 to 16 C atoms, $R^3$ corresponds independently at each occurrence to a linear, branched or cyclic alkyl radical having 1 to 4 C atoms, and $R^4$ corresponds to a linear, branched or cyclic alkyl radical having 1 to 15 C atoms, and y is 0 or 1.

23. Process according to Claim 21 or 22, **characterized in that** (i) an olefinically functionalized alkoxysilane of the general formula II, and optionally (i.1) at least one alkoxysilane of the formula III, are reacted in (ii) in the presence of an acidic hydrolysis and/or condensation catalyst with (i.2) at least one tetraalkoxysilane of the formula IV,

$$Si(OR^3)_4 \qquad (IV),$$

where in formula IV $R^3$ independently at each occurrence is a linear, branched or cyclic alkyl radical having 1 to 4 C atoms.

24. Process according to any of Claims 21 to 23,
**characterized**
**in that** the reaction takes place in the presence of at least one alcohol as solvent.

25. Process according to any of Claims 21 to 24,
**characterized in that** the at least one alkoxysilane of the formula II and optionally at least one alkoxysilane of the formula III are reacted with water in a defined molar ratio of water to alkoxysilane alkoxy groups of 1: 3 to 1: 4.5 to give the siloxane oligomers.

26. Process according to any of Claims 21 to 25,
**characterized**
**in that**

- in the olefinically functionalized alkoxysilane of the general formula II,

$$A\text{-}Si(R^2)_x(OR^1)_{3-x} \qquad (II),$$

A is selected from a vinyl, allyl, butenyl, pentenyl, hexenyl, ethylhexenyl, heptenyl, octenyl, cyclohexenyl-Cl to C8-alkylene, cyclohexenyl-2-ethylene, 3'-cyclohexenyl-2-ethylene and cyclohexadienyl-Cl to C8-alkylene group, and $R^1$ independently is a methyl, ethyl or propyl group and x is 0 or 1, and independently
- in the alkoxysilane of the formula III,

$$B\text{-}Si(R^4)_y(OR^3)_{3-y} \qquad (III),$$

the unsubstituted hydrocarbon radical B is selected from a methyl, ethyl, propyl, butyl, isobutyl, octyl, butyl, n-butyl, tert-butyl, pentyl, n-pentyl, isopentyl, neopentyl, hexyl, isohexyl, neohexyl, 2,2-dimethylbutyl, 2,3-dimethylbutyl, 2-methylpentyl, 3-methylpentyl, heptyl, n-heptyl, octyl, isooctyl, nonyl, decyl, undecyl, dodecyl, $C_{13}H_{27}$, $C_{14}H_{29}$, $C_{15}H_{31}$ and hexadecyl group, and $R^3$ is a methyl, ethyl or propyl group and y is 0 or 1.

27. Process according to any of Claims 21 to 26,
**characterized in that**

in the olefinically functionalized alkoxysilane of the general formula II, x is 0, and/or in the alkoxysilane of the formula III functionalized with a saturated hydrocarbon radical, y is 0.

28. Process according to Claim 27,
**characterized**
**in that** in each case independently

- the olefinically functionalized alkoxysilane of the general formula II is selected from vinyltriethoxysilane, allyltriethoxysilane, butenyltriethoxysilane, pentenyltriethoxysilane, hexenyltriethoxysilane, ethylhexenyltriethoxysilane, heptenyltriethoxysilane, octenyltriethoxysilane, cyclohexenyl-C1 to C8-alkylenetriethoxysilane, cyclohexenyl-2-ethylenetriethoxysilane, 3'-cyclohexenyl-2-ethylenetriethoxysilane, cyclohexadienyl-C1 to C8-alkylenetriethoxysilane or cyclohexadienyl-2-ethylenetriethoxysilane, vinyltrimethoxysilane, allyltrimethoxysilane, butenyltrimethoxysilane, pentenyltrimethoxysilane, hexenyltrimethoxysilane, ethylhexenyltrimethoxysilane, heptenyltrimethoxysilane, octenyltrimethoxysilane, cyclohexenyl-C1 to C8-alkylenetrimethoxysilane, cyclohexenyl-2-ethylenetrimethoxysilane, 3'-cyclohexenyl-2-ethylenetrimethoxysilane, cyclohexadienyl-C1 to C8-alkylenetrimethoxysilane or cyclohexadienyl-2-ethylenetrimethoxysilane, and in each case independently
- the alkoxysilane of the formula III is selected from methyltriethoxysilane, ethyltriethoxysilane, n-propyltriethoxysilane, isopropyltriethoxysilane,
butyltriethoxysilane, n-butyltriethoxysilane, isobutyltriethoxysilane,
hexyltriethoxysilane, n-hexyltriethoxysilane, isohexyltriethoxysilane, heptyltriethoxysilane, octyltriethoxysilane, n-octyltriethoxysilane, isooctyltriethoxysilane, undecyltriethoxysilane, decyltriethoxysilane, nonadecyltriethoxysilane, dodecyltriethoxysilane, $C_{13}H_{27}$-triethoxysilane, $C_{14}H_{29}$-triethoxysilane or $C_{15}H_{31}$-triethoxysilane, hexadecyltriethoxysilane, methyltrimethoxysilane, ethyltrimethoxysilane, n-propyltrimethoxysilane, isopropyltrimethoxysilane, butyltrimethoxysilane, n-butyltrimethoxysilane, isobutyltrimethoxysilane, hexyltrimethoxysilane, n-hexyltrimethoxysilane, isohexyltrimethoxysilane, heptyltrimethoxysilane, octyltrimethoxysilane, n-octyltrimethoxysilane, isooctyltrimethoxysilane, undecyltrimethoxysilane, decyltrimethoxysilane, nonadecyltrimethoxysilane, dodecyltrimethoxysilane, $C_{13}H_{27}$-trimethoxysilane, $C_{14}H_{29}$-trimethoxysilane or $C_{15}H_{31}$-trimethoxysilane and hexadecyltrimethoxysilane, and in each case independently
- the alkoxysilane of the formula IV is selected from tetraethoxysilane and tetramethoxysilane.

29. Process according to any of Claims 21 to 28,
**characterized**
**in that** a vinyltrimethoxysilane or a vinyltriethoxysilane is used.

30. Process according to any of Claims 21 to 29,
**characterized**
**in that** the alkoxysilanes of the formulae II, III and/or IV are subjected to at least partial hydrolysis and condensation in the presence of the acidic hydrogen chloride catalyst.

31. Process according to any of Claims 21 to 30,
**characterized**
**in that** (v) a total chloride content of less than or equal to 250 mg/kg is set.

32. Process according to any of Claims 21 to 31,
**characterized**
**in that** (v) the total number of silicon atoms in the siloxane oligomer are present at less than or equal to 80% to greater than or equal to 35% as M structure, for a weight-average molecular weight (Mw) of greater than or equal to 315 g/mol.

33. Process according to any of Claims 21 to 32,
**characterized in that** in the process a

a) vinyltrimethoxysilane is used as alkoxysilane of the formula II,
b) vinyltriethoxysilane is used as alkoxysilane of the formula II,
c) as alkoxysilanes of the formulae II and III, vinyltrimethoxysilane and propyltrimethoxysilane, vinyltriethoxysilane and propyltriethoxysilane, vinyltriethoxysilane and propyltrimethoxysilane or vinyltrimethoxysilane and propyltriethoxysilane are used, or in a), b) or c) the

alkoxysilanes with corresponding mixed methoxy- and ethoxy-functionalization are used
or

d) additionally in a), b) or c), as alkoxysilane of the formula IV, a tetraethoxysilane, tetramethoxysilane or a mixture thereof is used.

34. Process according to any of Claims 21 to 33, **characterized by** the following individual steps:

1) initially introducing at least one (i) olefinically functionalized alkoxysilane of the formula II or at least one (i.1) olefinic functionalized alkoxysilane of the formula I and at least one alkoxysilane of the formula III and in each case optionally at least one (i.2) alkoxysilane of the formula IV,

2) adding a mixture comprising solvent, water, and HCl as acidic hydrolysis and/or condensation catalyst, the solvent being the alcohol corresponding to the hydrolysis alcohol, and a defined molar ratio of water to alkoxysilane alkoxy groups of 1: 2.75 to 5.0, preferably of 3.0 to 1: 4.5, being set, with the alcohol being used in an amount by weight of 0.2 to 8 times in relation to the weight of the alkoxysilanes of the formulae II, III and optionally IV.

35. Process according to Claim 34, **characterized in that** the alcohol is used in an amount by weight of 0.2 to 1.5 times in relation to the weight of the silanes of the formulae II, III and optionally IV.

36. Composition comprising olefinically functionalized siloxane oligomers, obtainable by a process according to any of Claims 21 to 35.

37. Use of a composition according to any of Claims 1 to 20 or 36 or prepared according to any of Claims 21 to 35 as adherence agent, as crosslinking agent by graft polymerization and/or hydrolytic condensation in a conventional way, for producing mineral-filled polymers and/or prepolymers and polymers grafted with olefinically functionalized siloxane oligomers, for producing mineral-filled thermoplastics or elastomers and/or prepolymers and polymers grafted with olefinically functionalized siloxane oligomers, or for producing prepolymers of these, for the grafting of or in the polymerization of thermoplastic polyolefins, as drying agents, more particularly as water scavengers for silicone sealants, in crosslinkable polymers for producing cables, for producing crosslinkable polymers, as oil phase in an emulsion and/or together with organosilanes or organopolysiloxanes, for filler modification, filler coating, resin modification, resin additive, surface modification, surface functionalization, surface hydrophobization, as constituent in coating systems, as constituent in sol-gel systems coating systems or hybrid coating systems, for modifying cathodes and anode materials in batteries, as electrolyte fluid, as additive in electrolyte fluids, for the modification of fibres, more particularly glass fibres and natural fibres, and for modifying textiles, for modifying fillers for the synthetic stone industry, as architectural preservative or constituent in an architectural preservative, as addition for compositions with mineral curing, for modifying wood, wood fibres and cellulose.

**Revendications**

1. Composition contenant des oligomères de siloxane à fonctionnalisation oléfinique, qui comprennent au plus un radical oléfinique sur l'atome de silicium,
**caractérisée
en ce que**

- les oligomères de siloxane à fonctionnalisation oléfinique comprennent des éléments structuraux à réticulation Si-O, qui forment des structures linéaires, cycliques, réticulées ou éventuellement réticulées dans l'espace, au moins une structure correspondant à la formule générale I

$$(R^1O)[(R^1O)_{1-x}(R^2)_xSi(A)O]_a[Si(Y)_2O]_c[Si(B)(R^4)_y(OR^3)_{1-y}O]_bR^3 \qquad (I),$$

- dans laquelle les éléments structuraux dérivent d'alcoxysilanes et
- A dans l'élément structural correspond à un radical oléfinique, qui est choisi parmi un groupe fonctionnel alcényle ou cycloalcényl-alkylène linéaire, ramifié ou cyclique contenant à chaque fois 2 à 16 atomes C, et
- B dans l'élément structural correspond à un radical hydrocarboné saturé, qui est choisi parmi un radical alkyle linéaire, ramifié ou cyclique contenant 1 à 16 atomes C,
- les Y correspondent à $OR^3$ ou, dans des structures réticulées et éventuellement réticulées dans l'espace, indépendamment les uns des autres à $OR^3$ ou $O_{1/2}$,
- les $R^1$ correspondent indépendamment les uns des autres à un radical alkyle linéaire, ramifié ou cyclique contenant 1 à 4 atomes C ou à H,
- les $R^3$ correspondent chacun indépendamment les uns des autres à un radical alkyle linéaire, ramifié ou cyclique contenant 1 à 4 atomes C ou à H, les $R^2$ correspondent chacun indépendamment à un radical alkyle linéaire, ramifié ou cyclique contenant 1 à 15 atomes C, et les $R^4$ correspondent chacun indépendamment à un radical alkyle linéaire, ramifié ou cyclique contenant 1 à 15 atomes C,
- a, b, c, x et y correspondent indépendamment à des nombres entiers, avec $1 \leq a$, $0 \leq b$, $0 \leq c$, les x représentent indépendamment les uns des autres 0 ou 1, les y représentent indépendamment les uns des autres 0 ou 1, et $(a+b+c) \geq 2$,
- les éléments structuraux $[(R^1O)_{1-x}(R^2)_xSi(A)O]_a$, $[Si(B)(R^4)_y(OR^3)_{1-y}O]_b$
et $[Si(Y)_2O]_c$ se présentant dans la formule générale I ensemble par rapport à tous les atomes de silicium de la formule générale I en une proportion inférieure ou égale à 80 % et supérieure ou égale à 30 % sous la forme d'une structure M,

- la moyenne en poids du poids moléculaire (Mw) étant supérieure ou égale à 315 g/mol et
- une teneur en résidus du catalyseur acide utilisé lors de la fabrication étant inférieure ou égale à 250 mg/kg de la composition.

2. Composition selon la revendication 1,
**caractérisée en ce que**
les oligomères de siloxane comprennent des éléments structuraux dérivés d'au moins un des alcoxysilanes

(i) d'alcoxysilanes à fonctionnalisation oléfinique de formule générale II

$$A\text{-}Si(R^2)_x(OR^1)_{3-x} \qquad (II)$$

A étant un radical oléfinique, qui est choisi parmi un groupe fonctionnel alcényl- ou cycloalcényl-alkylène linéaire, ramifié ou cyclique contenant à chaque fois 2 à 16 atomes C, les $R^2$ représentant à chaque fois indépendamment un radical alkyle linéaire, ramifié ou cyclique contenant 1 à 15 atomes C et x représentant 0 ou 1, et les $R^1$ représentant à chaque fois indépendamment un groupe méthyle, éthyle ou propyle, et éventuellement
(ii) d'un alcoxysilane de formule III fonctionnalisé avec un radical hydrocarboné saturé

$$B\text{-}Si(R^4)_y(OR^3)_{3-y} \qquad (III)$$

B représentant un radical hydrocarboné non substitué, qui est choisi parmi un radical alkyle linéaire, ramifié ou cyclique contenant 1 à 16 atomes C, les $R^4$ représentant chacun indépendamment un radical alkyle linéaire, ramifié ou cyclique de 1 à 15 atomes C et y représentant 0 ou 1, et les $R^3$ représentant chacun indépendamment un groupe méthyle, éthyle ou propyle, et éventuellement
(iii) d'un tétraalcoxysilane de formule générale IV $Si(OR^3)_4$, les $R^3$ étant indépendamment les uns des autres définis tel que précédemment.

3. Composition selon la revendication 1 ou 2,
**caractérisée en ce que**
dans les alcoxysilanes à fonctionnalisation oléfinique de formule générale II, x représente 0 et, éventuellement, dans l'alcoxysilane fonctionnalisé par un radical hydrocarboné saturé de formule III, y représente 0.

4. Composition selon l'une quelconque des revendications 1 à 3,
**caractérisée en ce que**
la teneur en résidus du catalyseur acide utilisé lors de la fabrication de chlore, chlorure ou chlorure total est inférieure ou égale à 250 mg/kg de composition.

5. Composition selon l'une quelconque des revendications 1 à 4,
**caractérisée en ce que**,
chacun choisis indépendamment les uns des autres,

(i) l'élément structural $[(R1O)1-x(R2)xSi(A)O]a$ se présente dans la formule générale I par rapport à tous les atomes de silicium de la formule générale I en une proportion de 0,0 à 8,0 % sous la forme d'une structure T,

(ii) le les éléments structuraux [(R1O)1-x(R2)xSi(A)O]a et [Si(B)(R4)y(OR3)1-yO]b et [Si(Y)2O]c se présentent dans la formule générale I ensemble par rapport à tous les atomes de silicium de la formule générale I en une proportion de 75 ou moins à 40 % sous la forme d'une structure D,

(iii) l'élément structural [(R1O)1-x(R2)xSi(A)O]a se présente dans la formule générale I par rapport à tous les atomes de silicium de la formule générale I en une proportion de 25 à 55 % sous la forme d'une structure M,

(iv) l'élément structural [Si(B)(R4)y(OR3)1-yO]b se présente dans la formule générale I par rapport à tous les atomes de silicium de la formule générale I en une proportion de 40 % ou moins sous la forme d'une structure M,

(v) l'élément structural [Si(Y)2O]c se présente dans la formule générale I en une proportion de plus de 20 % sous la forme d'une structure D, et

(vi) l'élément structural [Si(Y)2O]c se présente dans la formule générale I en une proportion de 0,0 à 1 % sous la forme d'une structure T.

6. Composition selon l'une quelconque des revendications 1 à 5,
   **caractérisée en ce que**
   la moyenne en poids du poids moléculaire (Mw) est de 350 g/mol ou plus à
   800 g/mol.

7. Composition selon la revendication 6,
   **caractérisée en ce que**
   la moyenne en poids du poids moléculaire (Mw) est de 350 g/mol ou plus à 750 g/mol.

8. Composition selon l'une quelconque des revendications 1 à 7,
   **caractérisée
   en ce que**

   - dans les formules I et/ou II, le radical oléfinique A est à chaque fois choisi indépendamment parmi un groupe vinyle, allyle, buténvle, 3-buténvle, penténvle, hexénvle, éthylhexénvle, hepténvle, octénvle, cyclohexénvl-alkylène en C1 à C8-cyclohexényl-2-éthylène, 3'-cyclohexényl-2-éthylène, cyclohexadiényl-alkylène en C1 à C8 ou cyclohexadiényl-2-éthylène, et indépendamment
   - dans les formules I et/ou III, le radical hydrocarboné non substitué B est à chaque fois choisi indépendamment parmi un groupe méthyle, éthyle, propyle, i-butyle, octyle ou hexadécyle, et
   - les $R^1$ représentent chacun indépendamment les uns des autres un groupe méthyle, éthyle ou propyle, et les $R^3$ représentent indépendamment un groupe méthyle, éthyle ou propyle.

9. Composition selon l'une quelconque des revendications 1 à 8,
   **caractérisée
   en ce que**

   - dans les formules I et/ou II, le radical oléfinique A est un groupe vinyle et, indépendamment
   - dans les formules I et/ou III, le radical hydrocarboné non substitué B est choisi parmi un groupe méthyle, éthyle, propyle, butyle, i-butyle, n-butyle,

   tert-butyle, pentyle, n-pentyle, iso-pentyle, néo-pentyle, hexyle, i-hexyle, néo-hexyle, heptyle, 2,2-diméthylbutyle, 2,3-diméthylbutyle, 2-méthylpentyle,
   3-méthylpentyle, octyle, n-octyle, iso-octyle, nonyle, décyle, undécyle, dodécyle, $C_{13}H_{27}$, $C_{14}H_{29}$, $C_{15}H_{31}$ et hexadécyle, et

   - les $R^1$ représentent chacun indépendamment les uns des autres un groupe méthyle, éthyle ou propyle, et les $R^3$ représentent indépendamment un groupe méthyle, éthyle ou propyle.

10. Composition selon l'une quelconque des revendications 1 à 9,
    **caractérisée en ce que**
    les oligomères de siloxane à fonctionnalisation oléfinique se présentent dans la composition en une proportion supérieure ou égale à 90 % de surface mésurée par GPC selon la description par rapport à la composition totale avec un poids moléculaire inférieur ou égal à 1 000 g/mol.

11. Composition selon l'une quelconque des revendications 1 à 10,
    **caractérisée en ce que**

la moyenne en poids du poids moléculaire (Mw) est supérieure à 315 g/mol et la moyenne en nombre du poids moléculaire (Mn) est supérieure à 300 g/mol, la polydispersité (D) en tant que quotient Mw/Mn étant de 1,05 à 1,25.

**12.** Composition selon les revendications 1 à 11,
**caractérisée en ce que**
c dans la formule I représente 0.

**13.** Composition selon l'une quelconque des revendications 1 à 12,
**caractérisée en ce que**
la moyenne en poids du poids moléculaire (Mw) est supérieure ou égale à 420 g/mol et la moyenne en nombre du poids moléculaire (Mn) est supérieure ou égale à 400 g/mol, la polydispersité (D) en tant que quotient Mw/Mn étant de 1,05 à 1,25.

**14.** Composition selon l'une quelconque des revendications 1 à 13,
**caractérisée en ce que**
la moyenne en poids du poids moléculaire (Mw) est de plus de 450 g/mol à 590 g/mol et la moyenne en nombre du poids moléculaire (Mn) est de plus de 410 g/mol à 510 g/mol, la polydispersité (D) en tant que quotient Mw/Mn étant de 1,05 à 1,25.

**15.** Composition selon l'une quelconque des revendications 1 à 14,
**caractérisée en ce que**,
dans la composition, les oligomères de siloxane à fonctionnalisation oléfinique se présentent dans la composition en une proportion supérieure ou égale à 45 % de surface mésurée par GPC selon la description sous la forme d'un trisiloxane, d'un tétrasiloxane, d'un cyclo-tétrasiloxane et/ou d'un cyclo-pentasiloxane.

**16.** Composition selon l'une quelconque des revendications 1 à 15,
**caractérisée en ce**
**qu'**une perte de masse de la composition de 50 % en poids, déterminée par ATG, a lieu à une température supérieure à 210 °C.

**17.** Composition selon l'une quelconque des revendications 1 à 16,
**caractérisée en ce que**
la perte de masse de la composition, déterminée par ATG avec creuset en platine, couvercle perforé, 10 K/min à une température de jusqu'à 140 °C incluse est inférieure à 5 % en poids.

**18.** Composition selon l'une quelconque des revendications 1 à 17,
**caractérisée en ce que**
le rapport entre les structures M et D dans l'oligomère de siloxane ou de la formule générale I par rapport à tous les atomes de silicium est de 1: 2 à 10: 1.

**19.** Composition selon l'une quelconque des revendications 1 à 18,
**caractérisée en ce que**

a) les oligomères de siloxane et au moins une structure de formule I à chaque fois dérivée d'alcoxysilanes de formule II comprennent un groupe vinyle en tant que radical oléfinique A, les $R^1$ correspondant à chaque fois indépendamment les uns des autres à un groupe méthyle ou éthyle,
b) les oligomères de siloxane et au moins une structure de formule I à chaque fois dérivés d'alcoxysilanes de formule II comprennent un groupe vinyle en tant que radical oléfinique A et dérivés d'alcoxysilanes de formule III comprennent un groupe propyle en tant que radical hydrocarbure non substitué B, les $R^1$ et les $R^3$ correspondant à chaque fois indépendamment les uns des autres à un groupe méthyle ou éthyle, ou
c) les oligomères de siloxane et au moins une structure de formule I à chaque fois dérivée d'alcoxysilanes de formule II et de formule IV et éventuellement de formule III sont choisis parmi a) ou b), les $R^3$ dérivés de la formule IV correspondant à chaque fois indépendamment les uns des autres à un groupe méthyle ou éthyle.

**20.** Composition selon l'une quelconque des revendications 1 à 18,
**caractérisée en ce que**

les oligomères de siloxane sont chacun dérivés indépendamment d'au moins un alcoxysilane à fonctionnalisation oléfinique de formule générale II, qui est choisi parmi le vinyltriéthoxysilane, le vinyltriméthoxysilane, et éventuellement d'au moins un alcoxysilane de formule III, l'alcoxysilane de formule III étant choisi à chaque fois indépendamment parmi le méthyltriéthoxysilane, le méthyltriméthoxysilane, l'éthyltriéthoxysilane, l'éthyltriméthoxysilane, le propyltriéthoxysilane, le propyltriméthoxysilane, le butyltriéthoxysilane, le butyltriméthoxysilane, le n-butyltriéthoxysilane, le n-butyltriméthoxysilane,
l'i-butyltriéthoxysilane, l'i-butyltriméthoxysilane, l'hexyltriéthoxysilane, l'hexyltriméthoxysilane, le n-hexyltriéthoxysilane, le n-hexyltriméthoxysilane, l'iso-hexyltriéthoxysilane, l'iso-hexyltriméthoxysilane, l'octyltriéthoxysilane, l'octyltriméthoxysilane, le n-octyltriéthoxysilane, le n-octyltriméthoxysilane, l'iso-octyltriéthoxysilane, l'iso-octyltriméthoxysilane, l'undécyltriéthoxysilane, l'undécyltriméthoxysilane, le décyltriéthoxysilane, le décyltriméthoxysilane, le nonadécyltriéthoxysilane, le nonadécyltriméthoxysilane, le dodécyltriéthoxysilane, le dodécyltriméthoxysilane, le triéthoxysilane en $C_{13}H_{27}$, le triméthoxysilane en $C_{13}H_{27}$, le triéthoxysilane en $C_{14}H_{29}$, le triméthoxysilane en $C_{14}H_{29}$, le triméthoxysilane en $C_{15}H_{31}$, le triéthoxysilane en $C_{15}H_{31}$, l'hexadécyltriéthoxysilane et l'hexadécyltriméthoxysilane, ainsi que leurs produits de transestérification.

21. Procédé de fabrication d'une composition selon l'une quelconque des revendications 1 à 20, contenant des oligomères de siloxane à fonctionnalisation oléfinique, selon lequel au moins

   (i) un alcoxysilane à fonctionnalisation oléfinique de formule générale II

$$A-Si(R^2)_x(OR^1)_{3-x} \qquad (II),$$

   A dans la formule II correspondant à un radical oléfinique qui est choisi parmi un groupe fonctionnel alcényl- ou cycloalcényl-alkylène linéaire, ramifié ou cyclique contenant à chaque fois 2 à 16 atomes C, les $R^2$ correspondent indépendamment à un radical alkyle linéaire, ramifié ou cyclique contenant 1 à 15 atomes C et x représentant 0 ou 1 et les $R^1$ correspondant indépendamment à un radical alkyle linéaire, ramifié ou cyclique contenant 1 à 4 atomes C,
   (ii) est mis en réaction en présence d'un catalyseur d'hydrolyse et/ou de condensation acide,
   (iii) avec de l'eau en un rapport molaire défini entre l'eau et les groupes alcoxy des alcoxysilanes de 1: 2,75 à 1: 5,0, en présence d'un solvant, pour former les oligomères de siloxane, et
   (iv) l'alcool de l'hydrolyse et le solvant présent sont essentiellement séparés, et
   (v) la composition contenant des oligomères de siloxane à fonctionnalisation oléfinique est obtenue après l'étape (iv) en tant que produit de fond.

22. Procédé selon la revendication 21,
   **caractérisé en ce que** (i) un alcoxysilane à fonctionnalisation oléfinique de formule générale II est mis en réaction (ii) en présence d'un catalyseur d'hydrolyse et/ou de condensation acide avec
   (i.1) au moins un alcoxysilane de formule III

$$B-Si(R^4)_y(OR^3)_{3-y} \qquad (III),$$

   B dans la formule III correspondant à un radical hydrocarboné saturé, qui est choisi parmi un radical alkyle linéaire, ramifié ou cyclique contenant 1 à 16 atomes C, les $R^3$ correspondant à chaque fois indépendamment les uns des autres à un radical alkyle linéaire, ramifié ou cyclique contenant 1 à 4 atomes C, et les $R^4$ correspondant à un radical alkyle linéaire, ramifié ou cyclique contenant 1 à 15 atomes C, et y représentant 0 ou 1.

23. Procédé selon la revendication 21 ou 22, **caractérisé en ce que** (i) un alcoxysilane à fonctionnalisation oléfinique de formule générale II, et éventuellement (i.1) au moins un alcoxysilane de formule III sont mis en réaction (ii) en présence d'un catalyseur d'hydrolyse et/ou de condensation acide avec (i.2) au moins un tétraalcoxysilane de formule IV,

$$Si(OR^3)_4 \qquad (IV),$$

   les $R^3$ dans la formule IV représentant à chaque fois indépendamment les uns des autres un radical alkyle linéaire, ramifié ou cyclique contenant 1 à 4 atomes C.

24. Procédé selon l'une quelconque des revendications 21 à 23,
   **caractérisé en ce que**

la réaction a lieu en présence d'au moins un alcool en tant que solvant.

25. Procédé selon l'une quelconque des revendications 21 à 24, **caractérisé en ce que** le ou les alcoxysilanes de formule II et éventuellement au moins un alcoxysilane de formule III sont mis en réaction avec de l'eau en un rapport molaire défini entre l'eau et les groupes alcoxy des alcoxysilanes de 1: 3 à 1: 4,5, pour former les oligomères de siloxane.

26. Procédé selon l'une quelconque des revendications 21 à 25,
**caractérisé**
**en ce que**

   - dans l'alcoxysilane à fonctionnalisation oléfinique de formule générale II

   $$A\text{-}Si(R^2)_x(OR^1)_{3-x} \qquad (II),$$

   A est choisi parmi un groupe vinyle, allyle, buténryle, penténryle, hexéényle, éthylhexéényle, heptéényle, octéényle, cyclohexéényle-alkylène en C1 à C8, cyclohexéényl-2-éthylène, 3'-cyclohexéényl-2-éthylène et cyclohexadiényl-alkylène en C1 à C8, et les $R^1$ représentent indépendamment un groupe méthyle, éthyle ou propyle, et les x représentent 0 ou 1 et, indépendamment,
   - dans l'alcoxysilane de formule III

   $$B\text{-}Si(R^4)_y(OR^3)_{3-y} \qquad (III),$$

   le radical hydrocarboné non substitué B est choisi parmi un groupe
   méthyle, éthyle, propyle, butyle, i-butyle, octyle, butyle, n-butyle, tert-butyle, pentyle, n-pentyle, iso-pentyle, néo-pentyle, hexyle, i-hexyle, néo-hexyle,
   2,2-diméthylbutyle, 2,3-diméthylbutyle, 2-méthylpentyle, 3-méthylpentyle, heptyle, n-heptyle, octyle, iso-octyle, nonyle, décyle, undécyle, dodécyle, $C_{13}H_{27}$, $C_{14}H_{29}$, $C_{15}H_{31}$ et hexadécyle, et les $R^3$ représentent un groupe méthyle, éthyle ou propyle, et les y représentent 0 ou 1.

27. Procédé selon l'une quelconque des revendications 21 à 26,
**caractérisé en ce que**
dans les alcoxysilanes à fonctionnalisation oléfinique de formule générale II, x représente 0 et/ou, dans l'alcoxysilane fonctionnalisé par un radical hydrocarboné saturé de formule III, y représente 0.

28. Procédé selon la revendication 27,
**caractérisé**
**en ce qu'**à chaque fois indépendamment

   - l'alcoxysilane à fonctionnalisation oléfinique de formule générale II est choisi parmi le vinyltriéthoxysilane, l'allyltriéthoxysilane, le buténryltriéthoxysilane, le penténryltriéthoxysilane, l'hexéényltriéthoxysilane, l'éthylhexéényltriéthoxysilane, l'heptéényltriéthoxysilane, l'octéényltriéthoxysilane, le cyclohexéényl-alkylène en C1 à C8-triéthoxysilane, le cyclohexéényl-2-éthylènetriéthoxysilane, le 3'-cyclohexéényl-2-éthylènetriéthoxysilane, le cyclohexadiényl-alkylène en C1 à C8-triéthoxysilane ou le cyclohexadiényl-2-éthylènetriéthoxysilane, le vinyltriméthoxysilane, l'allyltriméthoxysilane, le buténryltriméthoxysilane, le penténryltriméthoxysilane, l'hexéényltriméthoxysilane, l'éthylhexéényltriméthoxysilane, l'heptéényltriméthoxysilane, l'octéényltriméthoxysilane, le cyclohexéényl-alkylène en C1 à C8-triméthoxysilane, le cyclohexéényl-2-éthylène-triméthoxysilane, le 3'-cyclohexéényl-2-éthylène-triméthoxysilane, le cyclohexadiényl-alkylène en C1 à C8-triméthoxysilane ou le cyclohexadiényl-2-éthylène-triméthoxysilane, et à chaque fois indépendamment
   - l'alcoxysilane de formule III est choisi parmi le méthyltriéthoxysilane, l'éthyltriéthoxysilane, le n-propyltriéthoxysilane, l'iso-propyltriéthoxysilane, le butyltriéthoxysilane, le n-butyltriéthoxysilane, l'i-butyltriéthoxysilane, l'hexyltriéthoxysilane, le n-hexyltriéthoxysilane, l'iso-hexyltriéthoxysilane, l'heptyltriéthoxysilane, l'octyltriéthoxysilane, le n-octyltriéthoxysilane, l'iso-octyltriéthoxysilane, l'undécyltriéthoxysilane, le décyltriéthoxysilane, le nonadécyltriéthoxysilane, le dodécyltriéthoxysilane, le triéthoxysilane en C13H27, le triéthoxysilane en C14H29 ou le triéthoxysilane en C15H31, l'hexadécyltriéthoxysilane, le méthyltriméthoxysilane, l'éthyltriméthoxysilane, le n-propyltriméthoxysilane, l'iso-propyltriméthoxysilane, le butyltriméthoxysilane, le n-butyltriméthoxysilane, l'i-butyltriméthoxysilane, l'hexyltriméthoxysilane, le n-hexyltriméthoxysilane, l'iso-hexyltriméthoxysilane, l'heptyltriméthoxysilane, l'octyltriméthoxysilane, le n-octyltriméthoxysilane, l'iso-octyltriméthoxysilane, l'undécyltriméthoxysilane, le décyltriméthoxysilane, le nonadécyltriméthoxysilane, le dodécyltriméthoxysilane, le triméthoxysilane en C13H27, le triméthoxysilane en C14H29 ou le triméthoxysilane en C15H31 et l'hexadécyltriméthoxysilane, et à chaque fois indépendamment
- l'alcoxysilane de formule IV est choisi parmi le tétraéthoxysilane et le tétraméthoxysilane.

29. Procédé selon l'une quelconque des revendications 21 à 28, **caractérisé en ce qu'**un vinyltriméthoxysilane ou un vinyltriéthoxysilane est utilisé.

30. Procédé selon l'une quelconque des revendications 21 à 29, **caractérisé en ce que** les alcoxysilanes des formules II, III et/ou IV sont au moins partiellement hydrolysés et condensés en présence du catalyseur acide chlorure d'hydrogène.

31. Procédé selon l'une quelconque des revendications 21 à 30, **caractérisé en ce que** (v) une teneur en chlorure total inférieure ou égale à 250 mg/kg est ajustée.

32. Procédé selon l'une quelconque des revendications 21 à 31, **caractérisé en ce que** (v) le nombre total d'atomes de silicium dans l'oligomère de siloxane se présente en une proportion de 80 % ou moins à 35 % ou plus sous la forme d'une structure M, à une moyenne en poids du poids moléculaire (Mw) supérieure ou égale à 315 g/mol.

33. Procédé selon l'une quelconque des revendications 21 à 32, **caractérisé en ce que**, dans le procédé,

a) un vinyltriméthoxysilane est utilisé en tant qu'alcoxysilane de formule II,
b) un vinyltriéthoxysilane est utilisé en tant qu'alcoxysilane de formule II,
c) en tant qu'alcoxysilanes de formule II et III, le vinyltriméthoxysilane et le propyltriméthoxysilane, le vinyltriéthoxysilane et le propyltriéthoxysilane, le vinyltriéthoxysilane et le propyltriméthoxysilane ou le vinyltriméthoxysilane et le propyltriéthoxysilane sont utilisés, ou les alcoxysilanes à fonctionnalisation mixte méthoxy et éthoxy correspondants sont utilisés en a), b) ou c), ou
d) un tétraéthoxysilane, un tétraméthoxysilane ou un mélange de ceux-ci est utilisé en plus en a), b) ou c) en tant qu'alcoxysilane de formule IV.

34. Procédé selon l'une quelconque des revendications 21 à 33, **caractérisé par** les étapes individuelles suivantes:

1) le chargement d'au moins (i) un alcoxysilane oléfinique à fonctionnalisation de formule II ou d'au moins (i.1) un alcoxysilane oléfinique à fonctionnalisation de formule I et d'au moins un alcoxysilane de formule III et à chaque fois éventuellement d'au moins (i.2) un alcoxysilane de formule IV,
2) l'ajout d'un mélange comprenant un solvant, de l'eau et HCl en tant que

catalyseur d'hydrolyse et/ou de condensation acide, le solvant étant l'alcool correspondant à l'alcool de l'hydrolyse, et un rapport molaire défini entre l'eau et les groupes alcoxy des alcoxysilanes de 1: 2,75 à 5,0, de préférence de 3,0 à 1: 4,5, étant ajusté, l'alcool étant utilisé en une quantité en poids de 0,2 à 8 fois par rapport au poids des alcoxysilanes des formules II, III et éventuellement IV.

35. Procédé selon la revendication 34, **caractérisé en ce que** l'alcool est utilisé en une quantité en poids de 0,2 à 1,5 fois par rapport au poids des silanes des formules II, III et éventuellement IV.

36. Composition contenant des oligomères de siloxane à fonctionnalisation oléfinique pouvant être obtenue par un procédé selon l'une quelconque des revendications 21 à 35.

**37.** Utilisation d'une composition selon l'une quelconque des revendications 1 à 20 ou 36 ou fabriquée selon l'une quelconque des revendications 21 à 35, en tant qu'agent adhésif, en tant qu'agent de réticulation par polymérisation-greffage et/ou condensation hydrolytique d'une manière connue en soi, pour la fabrication de polymères greffés avec des oligomères de siloxane à fonctionnalisation oléfinique, de prépolymères et/ou de polymères contenant des charges minérales, pour la fabrication de polymères greffés avec des oligomères de siloxane à fonctionnalisation oléfinique, de prépolymères et/ou de thermoplastiques ou d'élastomères contenant des charges minérales, ou de prépolymères de ceux-ci, pour le greffage ou lors de la polymérisation de polyoléfines thermoplastiques, en tant qu'agent siccatif, notamment en tant que capteur d'eau pour matériaux d'étanchéité à base de silicone, dans des polymères réticulables pour la fabrication de câbles, pour la fabrication de polymères réticulables, en tant que phase huileuse dans une émulsion et/ou conjointement avec des organosilanes ou des organopolysiloxanes, pour la modification de charges, pour le revêtement de charges, pour la modification de résines, en tant qu'additif de résine, pour la modification de surfaces, pour la fonctionnalisation de surfaces, pour l'hydrophobation de surfaces, en tant que constituant dans des systèmes de revêtement, en tant que constituant dans des systèmes sol-gel systèmes de revêtement ou des systèmes de revêtement hybrides, pour la modification de cathodes et de matériaux d'anodes dans des batteries, en tant que liquide électrolytique, en tant qu'additif dans des liquides électrolytiques, pour la modification de fibres, notamment de fibres de verre et de fibres naturelles, ainsi que pour la modification de textiles, pour la modification de charges pour l'industrie des pierres artificielles, en tant qu'agent de protection des matériaux ou constituant d'agents de protection des matériaux, en tant qu'additif pour matériaux durcisseurs minéraux, pour la modification de bois, de fibres de bois et de cellulose.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0518057 B1
- US 5282998 A
- US 6395856 B1
- CN 100343311 C
- JP 10298289 A
- JP 2004099872 A
- EP 1205481 B1
- DE 102011086862
- EP 0518057 A

**In der Beschreibung aufgeführte Nicht-Patentliteratur**

- Korrosionsbeständigkeit. Handbuch der Metall-beläge. 2010, 200-238
- Chemische Beständigkeit der Nirosta®-Stähle. ThyssenKrupp Nirosta GmbH, Januar 2008
- **H.-G. HORN ; H. CH. MARSMANN.** Strukturuntersuchungen von oligomeren und polymeren Siloxanen durch hochauflösende Si-Kernresonanz. *Die Markromolekulare Chemie,* 1972, vol. 162, 255-267
- **G. ENGELHARDT ; H. JANCKE.** Über die H-, C- und Si-NMR chemischen Verschiebungen einiger linearer, verzweigter und cyclischer Methyl-Siloxan-Verbindungen. *J. Organometal. Chem.,* 1971, vol. 28, 293-300
- Chapter 8 - NMR spectroscopy of organosilicon compounds. **ELIZABETH A. WILLIAMS.** The Chemistry of Organic Silicon Compounds. John Wiley & Sons Ltd, 1989, 511-533
- **ANDRE STRIEGEL et al.** Modern Size-Exclusion Liquid Chromatography. Verlag Wiley & Sons, 2009
- **CORNELIA M. KECK ; REINER H. MÜLLER.** Moderne Pharmazeutische Technologie. Thermoanalyse, 2009, 76